# EUROPEAN PATENT APPLICATION

(11) **EP 4 660 020 A1**
(43) Date of publication of application: **10.12.2025**
(21) Application number: 24829977.8
(22) Date of filing: 18.03.2024
(51) Int. Cl.: B60R 25/24, H04M 1/72412

(54) **VEHICLE CONTROL SYSTEM AND METHOD, AND ELECTRONIC DEVICE**

(30) Priority: 30.06.2023 CN 202310802998
(71) Applicant: Huawei Technologies Co., Ltd., Shenzhen, Guangdong 518129 (CN)
(72) Inventor: BIAN, Shizhu, Hong Kong cooperation Zone Shenzhen, Guangdong 518054 (CN); DING, Shijie, Hong Kong cooperation Zone Shenzhen, Guangdong 518054 (CN)
(74) Representative: Grünecker Patent- und Rechtsanwälte PartG mbB
(86) International application number: PCT/CN2024/082270
(87) International publication number: WO 2025/001324

(57) **Abstract**

A vehicle control system is provided. A first communication connection is established between a first electronic device (200) and a second electronic device (300), a second communication connection is established between the first electronic device (200) and a first vehicle (100), and the second electronic device (300) stores a first digital vehicle key of the first vehicle (100). The second electronic device (300) may receive a first user operation, and send a first control instruction and vehicle information of the first vehicle (100) to the first electronic device (200); and after the first electronic device (200) determines a second digital vehicle key of the first vehicle (100) based on the vehicle information of the first vehicle (100), it is determined that both the first electronic device (200) and the second electronic device (300) have applied for the digital vehicle key of the first vehicle (100). The first electronic device (200) may send the first control instruction to the first vehicle (100), so that the first vehicle (100) can perform a first operation based on the first control instruction. A vehicle control method, an electronic device, a computer-readable storage medium, and a computer program product are also disclosed. When a vehicle supports connection to only one device, a plurality of devices may collaboratively control the vehicle based on a digital vehicle key. This improves convenience of vehicle control performed by the plurality of devices.

## Description

This application claims priority to Chinese Patent Application No. 202310802998.6, filed with the China National Intellectual Property Administration on June 30, 2023, and entitled "VEHICLE CONTROL SYSTEM AND METHOD, AND ELECTRONIC DEVICE", which is incorporated herein by reference in its entirety.

### TECHNICAL FIELD

This application relates to the field of vehicle technologies, and in particular, to a vehicle control system and method, and an electronic device.

### BACKGROUND

As the society develops, vehicles have become an indispensable means of transportation in people's daily lives. During vehicle usage, a user may use a vehicle key to control opening or closing of a vehicle door, control startup or shutdown of an engine, and the like.

As the science and technology develop, vehicle keys are also continuously upgraded. For example, the vehicle key evolves from a physical vehicle key to a digital vehicle key. When the user forgets to carry the physical vehicle key, the user may establish a communication connection between a terminal device and a vehicle, and control the vehicle by using a digital vehicle key stored in the terminal device. However, when the vehicle supports connection to only one Bluetooth device, another device that does not establish a Bluetooth connection to the vehicle cannot be connected to the vehicle through Bluetooth, and therefore cannot control the vehicle by using a digital vehicle key.

### SUMMARY

This application provides a vehicle control system and method, and an electronic device, so that when a vehicle supports connection to only one Bluetooth device, a plurality of devices can collaboratively control the vehicle based on a digital vehicle key. This improves convenience of controlling the vehicle by the plurality of devices.

According to a first aspect, this application provides a vehicle control system. The system includes a first electronic device, a second electronic device, and a first vehicle. A first communication connection is established between the first electronic device and the second electronic device. A second communication connection is established between the first electronic device and the first vehicle. The second electronic device stores a first digital vehicle key of the first vehicle, and the first electronic device stores a second digital vehicle key of the first vehicle. The second electronic device is configured to: receive and respond to a first user operation, and send a first control instruction and vehicle information of the first vehicle to the first electronic device through the first communication connection. The first control instruction indicates the first vehicle to perform a first operation. The first electronic device is configured to: receive the first control instruction and the vehicle information of the first vehicle, and determine, based on the vehicle information of the first vehicle, that the first electronic device stores the second digital vehicle key. The first electronic device is further configured to send the first control instruction to the first vehicle through the second communication connection. The first vehicle is configured to: receive the first control instruction, and perform the first operation based on the first control instruction.

The vehicle information of the first vehicle is used by the first electronic device to determine whether the digital vehicle key of the first vehicle is also applied for. The second electronic device can control the first vehicle based on the digital vehicle key by using the first electronic device only when both the first electronic device and the second electronic device apply for the digital vehicle key of the first vehicle. This improves vehicle control security.

Optionally, the first control instruction and the vehicle information of the first vehicle may be separately sent to the first electronic device. For example, the second electronic device first sends the vehicle information of the first vehicle to the first electronic device, and then sends the first control instruction to the first electronic device.

Optionally, in some embodiments, the first control instruction sent by the first electronic device to the first vehicle needs to meet a fixed format, so that the first vehicle can correctly identify the first control instruction. Different types of control instructions have different formats. For example, a format of an unlock control instruction is different from a format of a window opening control instruction. Before sending the first control instruction to the first vehicle, the first electronic device may obtain a vehicle-to-everything specification standard for a digital vehicle key. The vehicle-to-everything specification standard for a digital vehicle key specifies formats of different types of control instructions. The first control instruction carries an instruction type. The first electronic device may obtain a first instruction type from the first control instruction. For example, the first instruction type may be an unlock operation, and then a fixed format of the first instruction type is obtained from the vehicle-to-everything specification standard for a digital vehicle key. In addition, the first electronic device determines whether a format of the first control instruction is the same as the fixed format of the first instruction type, and when the formats are the same, the first electronic device sends the first control instruction to the first vehicle. When the formats are different, the first electronic device may integrate the first control instruction based on the fixed format of the first instruction type to obtain a third control instruction. An instruction type of the third control instruction is the first instruction type, a format of the third control instruction meets the fixed format of the first instruction type, and the third control instruction is also used to perform the first operation. Then, the first electronic device sends the third control instruction to the first vehicle. In this way, the first vehicle can correctly identify the third control instruction and perform the first operation based on the third control instruction.

Optionally, in some embodiments, the first control instruction further carries a version number. The first electronic device may verify whether the first control instruction is authorized based on the version number carried in the first control instruction. Specifically, the first electronic device may obtain a version number of the fourth vehicle control instruction in the first electronic device based on the first instruction type in the first control instruction. A vehicle control operation type of the fourth vehicle control instruction is the same as a vehicle control operation type of the first vehicle control instruction. For example, both the fourth vehicle control instruction and the first vehicle control instruction are unlock operations. When the version number of the fourth vehicle control instruction is the same as the version number of the first vehicle control instruction, the first control instruction is authorized, and the first electronic device may send the first control instruction to the first vehicle. If the version number of the fourth vehicle control instruction is different from the version number of the first vehicle control instruction, the first control instruction is unauthorized, and the first electronic device does not send the first control instruction to the first vehicle.

According to the method, when the vehicle supports connection to only one Bluetooth device, a plurality of devices can collaboratively control the vehicle based on the digital vehicle key. This improves convenience of controlling the vehicle by the plurality of devices.

With reference to the first aspect, in a possible implementation, the first electronic device is further configured to determine that a key type of the first digital vehicle key is the same as a key type of the second digital vehicle key.

In a possible implementation, the second electronic device is further configured to send key information of the first digital vehicle key to the first electronic device; and the first electronic device is further configured to determine, based on the key information of the first digital vehicle key and key information of the second digital vehicle key, that the key type of the first digital vehicle key is the same as the key type of the second digital vehicle key.

The first electronic device may determine the key information of the second digital vehicle key based on the vehicle information of the first vehicle. Then, the first electronic device determines, based on the key information of the first digital vehicle key and the key information of the second digital vehicle key, whether the key type of the first digital vehicle key is the same as the key type of the second digital vehicle key. The second electronic device can control the first vehicle based on the digital vehicle key by using the first electronic device only when the key type of the first digital vehicle key is the same as the key type of the second digital vehicle key. This improves vehicle control security.

With reference to the first aspect, in a possible implementation, the first electronic device is specifically configured to: encrypt the first control instruction based on the second digital vehicle key, to obtain an encrypted first control instruction; and send the encrypted first control instruction to the first vehicle through the second communication connection; and the first vehicle is specifically configured to: receive the encrypted first control instruction; decrypt the encrypted first control instruction based on the second digital vehicle key, to obtain the first control instruction, and perform the first operation based on the first control instruction.

Optionally, the first electronic device is further configured to: send device information of the first electronic device to the first vehicle, so that the first vehicle may obtain the second digital vehicle key based on the device information of the first electronic device, decrypt the encrypted first control instruction based on the second digital vehicle key to obtain the first control instruction, and then perform the first operation based on the first control instruction.

In this way, when the first electronic device determines that both the first electronic device and the second electronic device apply for the digital vehicle key of the first vehicle, the first electronic device may encrypt the first control instruction based on the second digital vehicle key to obtain the encrypted first control instruction, and then send the encrypted first control instruction to the second electronic device. This improves security of transmitting a control instruction between a device and a vehicle, and also improves safety of the device to the vehicle.

With reference to the first aspect, in a possible implementation, a first user account is logged in to the first electronic device, a second user account is logged in to the first electronic device, and the first user account and the second user account are the same or are associated with each other.

In this way, when the user accounts logged in to the first electronic device and the second electronic device are the same, it may be determined that the first electronic device and the second electronic device are a plurality of devices of a same user, and the plurality of devices of the same user are in a trusted connection. For example, the second electronic device may be a watch or a band of a first user, and the first electronic device may be a mobile phone of the first user.

In some embodiments, user accounts logged in to the first electronic device and the second electronic device are different, but the first user account and the second user account are associated with each other. In this case, it may be determined that the first electronic device and the second electronic device may be a plurality of devices in a family group, and the plurality of devices in the family group may also be in trusted connections. The first electronic device and the second electronic device may be a plurality of devices of a same user, or may be a plurality of devices of different users.

In this way, only trusted devices can collaboratively control the first vehicle based on the digital vehicle key. This improves vehicle control security.

In a possible implementation, the second electronic device is further configured to display a QR code; and the first electronic device is further configured to scan the QR code by using a camera to establish a trusted connection to the second electronic device. In this way, when the user account cannot be logged in to the second electronic device, the first electronic device and the second electronic device may establish a trusted connection by scanning the QR code. The first electronic device and the second electronic device may be a plurality of devices of a same user, or may be a plurality of devices of different users. For example, the second electronic device may be a watch or a band, and the first electronic device may be a mobile phone.

In this way, only trusted devices can collaboratively control the first vehicle based on the digital vehicle key. This improves vehicle control security.

With reference to the first aspect, in a possible implementation, the first electronic device is further configured to: display a first user interface, where a first option is displayed in the first user interface; and receive and respond to a second user operation for the first option, and send a trusted connection establishment request to the second electronic device. The second electronic device is further configured to: display first prompt information in response to the trusted connection establishment request, where the first prompt information is used to prompt a user whether to establish a trusted connection to the first electronic device; and receive an input operation of the user for a second option in the first prompt information, and send a trusted connection establishment confirmation message to the first electronic device. The first electronic device is further configured to establish a trusted connection to the second electronic device in response to the trusted connection establishment confirmation message.

For example, the first electronic device and the second electronic device may be a plurality of devices of different users. In this way, when a trusted connection is not established between the first electronic device and the second electronic device based on the user account or the QR code, the first electronic device and the second electronic device may establish a trusted relationship in an active sharing manner. A trusted connection may be established between devices of different users in this manner, so that the devices of the different users collaborate to control the first vehicle based on the digital vehicle key.

In some embodiments, the user accounts logged in to the first electronic device and the second electronic device are different, but the first user account and the second user account are associated with each other. It may also be determined that the two devices are in an untrusted relationship, and the two devices further need to establish a trusted connection in an active manner.

With reference to the first aspect, in a possible implementation, the first electronic device is specifically configured to: in response to an association relationship establishment confirmation message, generate a first random number, and send the first random number to the second electronic device. The second electronic device is further configured to: in response to receiving the first random number sent by the first electronic device, generate a second random number, and send the second random number to the first electronic device; and generate a first trusted credential based on the first random number and the second random number. The first electronic device is specifically configured to generate a second trusted credential based on the first random number and the second random number.

In this way, when the first electronic device and the second electronic device do not establish a trusted connection based on the user account or the QR code, and the first electronic device and the second electronic device establish a trusted relationship in an active sharing manner, the first electronic device and the second electronic device may separately generate and store a trusted credential. Subsequently, when the first electronic device and the second electronic device interact with each other, whether the two parties are trusted connections may be verified based on trusted credentials stored by the first electronic device and the second electronic device.

With reference to the first aspect, in a possible implementation, the second electronic device is further configured to send the first trusted credential to the first electronic device. The first electronic device is specifically configured to: when the first trusted credential and the second trusted credential meet a preset condition, send the first control instruction to the first vehicle through the second communication connection.

Optionally, when the second electronic device needs to control the first vehicle based on the digital vehicle key by using the first electronic device, the first electronic device determines that the first electronic device is not in a trusted connection to the first electronic device, and the first electronic device may prompt the user whether to establish a trusted relationship with the first electronic device in an active sharing manner. This ensures that the second electronic device can control the first vehicle based on the digital vehicle key by using the first electronic device. When the user performs confirmation, the first electronic device and the second electronic device may establish a trusted connection in the foregoing manner.

Optionally, the second electronic device is further configured to send device information of the second electronic device to the first electronic device, and the first electronic device may obtain, based on the device information of the second electronic device, the second trusted credential associated with the second electronic device. When determining that the first trusted credential and the second trusted credential meet the preset condition, the first electronic device may determine that the second electronic device is a trusted device, and then send the first control instruction to the first vehicle through the second communication connection. This improves security of the vehicle to the device.

With reference to the first aspect, in a possible implementation, the first electronic device is further configured to delete the second trusted credential after duration for storing the second trusted credential exceeds first duration. The second electronic device is further configured to delete the first trusted credential after duration for storing the first trusted credential exceeds the first duration.

In this way, the trusted credential stored in the electronic device has specific time validity. After the first duration is exceeded, the first electronic device and the second electronic device may delete the trusted credentials respectively stored in the first electronic device and the second electronic device, to improve reliability of a trusted connection between the first electronic device and the second electronic device.

With reference to the first aspect, in a possible implementation, the system further includes a third electronic device, where the third electronic device stores a third digital vehicle key of the first vehicle; the first vehicle is further configured to send a broadcast, where the broadcast is used by another device to discover the first vehicle; the third electronic device is further configured to: receive and respond to a third user operation, where the third user operation is used to control the first vehicle to perform a second operation; and receive and respond to the broadcast sent by the first vehicle, and send a third communication connection establishment request to the vehicle; the first vehicle is further configured to send a second communication connection disconnection request to the first electronic device in response to the third communication connection request;
the first electronic device is further configured to: receive a fourth user operation, and disconnect the second communication connection to the first vehicle; the first vehicle is further configured to establish a third communication connection to the third electronic device; the third electronic device is further configured to send a second control instruction to the first vehicle through the third communication connection; and the first vehicle is further configured to receive the second control instruction, and perform the second operation based on the second control instruction.

In this way, when the vehicle supports connection to only one Bluetooth device, for example, the first vehicle is connected to the first electronic device, and when the second electronic device needs to control the first vehicle, the second electronic device may actively initiate a connection request to the first vehicle, and the first vehicle may disconnect a communication connection to the first electronic device, and establish a communication connection to the second electronic device, so that the second electronic device can directly control the first vehicle by using the first digital vehicle key.

Optionally, in this application, when the first vehicle is connected to the first electronic device, the first vehicle may still send a broadcast, so that another device can obtain an address of the first vehicle based on the broadcast and establish a communication connection to the first vehicle.

In another embodiment, when the first vehicle is connected to the first electronic device, the first vehicle may not send a broadcast. When the second electronic device applies for a digital vehicle key, the first vehicle may send the address of the first vehicle to the second electronic device, so that when the second electronic device needs to control the first vehicle, the second electronic device may actively initiate a communication connection to the first vehicle based on the stored address of the first vehicle.

With reference to the first aspect, in a possible implementation, the first electronic device is further configured to display second prompt information in response to the second communication connection disconnection request, where the second prompt information is used to prompt the user whether to disconnect the second communication connection to the first vehicle; and the first electronic device is specifically configured to: receive and respond to the fourth user operation for the second option in the second prompt information, and disconnect the second communication connection to the first vehicle.

In this way, the first electronic device can disconnect the communication connection to the first vehicle only after receiving a disconnection operation of the user.

With reference to the first aspect, in a possible implementation, the first vehicle is further configured to: after executing the first control instruction, send a first message to the first electronic device through the second communication connection; the first electronic device is further configured to send the first message to the second electronic device through the first communication connection; and the second electronic device is further configured to display third prompt information in response to the first message, where the third prompt information is used to inform the user that the second electronic device has controlled, by using the first electronic device, the first vehicle to perform the first operation.

In this way, after the second electronic device controls the first vehicle by using the first electronic device, the second electronic device may display the prompt information, to inform the user that the second electronic device controls the first vehicle by using the first electronic device.

With reference to the first aspect, in a possible implementation, the first electronic device is further configured to: when the second digital vehicle key stored in the first electronic device fails to be determined based on the vehicle information of the first vehicle, and/or when the key type of the first digital vehicle key is different from the key type of the second digital vehicle key, send a second message to the second electronic device through the first communication connection; and the second electronic device is further configured to display fourth prompt information in response to the second message, where the fourth prompt information is used to inform the user that the first electronic device cannot currently control the first vehicle to perform the first operation. In this way, when controlling cannot be performed on the vehicle, the second electronic device may also display prompt information, to inform the user that controlling cannot be currently performed on the first vehicle.

With reference to the first aspect, in a possible implementation, the key information of the first digital vehicle key includes any one or more of the following: key type and key identifier. The vehicle information of the first vehicle includes any one or more of the following: vehicle identification number, vehicle model, vehicle manufacturer, vehicle production date, vehicle engine model, and vehicle license plate number.

With reference to the first aspect, in a possible implementation, the first communication connection includes any one of the following: a Bluetooth connection, a network connection, and a server connection; and the second communication connection includes a Bluetooth connection.

With reference to the first aspect, in a possible implementation, the first control instruction includes any one of the following: unlocking the vehicle, locking the vehicle, opening a vehicle window, closing the vehicle window, turning on an air conditioner, turning off the air conditioner, opening a trunk, closing the trunk, starting playing music, and pausing playing music.

According to a second aspect, this application provides a vehicle control method, where the method includes: A first electronic device receives, through a first communication connection, a first control instruction and vehicle information of a first vehicle that are sent by a second electronic device, where the first control instruction and the vehicle information of the first vehicle are sent to the first electronic device after the second electronic device receives a first user operation of a user, and the first control instruction instructs the first vehicle to perform a first operation; the first electronic device determines, based on the vehicle information of the first vehicle, that a second digital vehicle key is stored in the first electronic device, where the second electronic device stores a first digital vehicle key of the first vehicle; and the first electronic device sends the first control instruction to the first vehicle through a second communication connection.

With reference to the second aspect, in a possible implementation, before the first electronic device sends the first control instruction to the first vehicle through the second communication connection, the method further includes: The first electronic device determines that a key type of the first digital vehicle key is the same as a key type of the second digital vehicle key.

With reference to the second aspect, in a possible implementation, before the first electronic device sends the first control instruction to the first vehicle through the second communication connection, the method further includes: The first electronic device receives, through the first communication connection, key information that is of the first digital vehicle key and that is sent by the second electronic device; and that the first electronic device determines that the key type of the first digital vehicle key is the same as the key type of the second digital vehicle key specifically includes: The first electronic device determines, based on the key information of the first digital vehicle key and key information of the second digital vehicle key, that the key type of the first digital vehicle key is the same as the key type of the second digital vehicle key.

With reference to the second aspect, in a possible implementation, that the first electronic device sends the first control instruction to the first vehicle through the second communication connection specifically includes: The first electronic device encrypts the first control instruction based on the second digital vehicle key, to obtain an encrypted first control instruction; and the first electronic device sends the encrypted first control instruction to the first vehicle through the second communication connection.

With reference to the second aspect, in a possible implementation, a first user account is logged in to the first electronic device, a second user account is logged in to the first electronic device, and the first user account and the second user account are the same or are associated with each other.

With reference to the second aspect, in a possible implementation, before the first electronic device receives, by using the first communication connection, the first control instruction and the vehicle information of the first vehicle that are sent by the second electronic device, the method further includes: The first electronic device establishes a trusted connection to the second electronic device by scanning by using a camera, a QR code displayed on the second electronic device.

With reference to the second aspect, in a possible implementation, before first electronic device receives, through the first communication connection, the first control instruction and the vehicle information of the first vehicle that are sent by the second electronic device, the method further includes: The first electronic device displays a first user interface, where a first option is displayed in the first user interface, receives and responds to a second user operation for the first option, and sends a trusted connection establishment request to the second electronic device, where the trusted connection request indicates the second electronic device to establish a trusted connection to the first electronic device; the first electronic device receives a trusted connection establishment confirmation message sent by the second electronic device, where the trusted connection establishment confirmation message is sent by the second electronic device after the second electronic device receives an operation of confirming establishment of a trusted connection of the user; and in response to the trusted connection establishment confirmation message, the first electronic device establishes a trusted connection to the first electronic device and the second electronic device.

With reference to the second aspect, in a possible implementation, that the first electronic device establishes a trusted connection to each of the first electronic device and the second electronic device in response to an association relationship establishment confirmation message specifically includes: The first electronic device generates a first random number in response to the association relationship establishment confirmation message, and sends the first random number to the second electronic device; the first electronic device receives a second random number sent by the second electronic device, where the first random number and the second random number are used by the second electronic device to generate a first trusted credential; and the first electronic device generates a second trusted credential based on the first random number and the second random number.

With reference to the second aspect, in a possible implementation, before the first electronic device sends the first control instruction to the first vehicle through the second communication connection, the method further includes: The first electronic device receives the first trusted credential sent by the second electronic device. That the first electronic device sends the first control instruction to the first vehicle through the second communication connection specifically includes: When the first trusted credential and the second trusted credential meet a preset condition, sending the first control instruction to the first vehicle through the second communication connection.

With reference to the second aspect, in a possible implementation, after the first electronic device generates the second trusted credential based on the first random number and the second random number, the method further includes: The first electronic device deletes the second trusted credential after duration for storing the second trusted credential exceeds first duration.

With reference to the second aspect, in a possible implementation, after the first electronic device sends the first control instruction to the first vehicle through the second communication connection, the method further includes: The first electronic device receives, through the second communication connection, a first message sent by the first vehicle, where the first message is sent after the first vehicle executes the first control instruction; and the first electronic device sends the first message to the second electronic device through the first communication connection, where the first message is used by the second electronic device to display third prompt information, and the third prompt information is used to inform the user that the second electronic device has controlled, by using the first electronic device, the first vehicle to perform the first operation.

With reference to the second aspect, in a possible implementation, the method further includes: When the second digital vehicle key stored in the first electronic device fails to be determined based on the vehicle information of the first vehicle, and/or when the key type of the first digital vehicle key is different from the key type of the second digital vehicle key, sending a second message to the second electronic device through the first communication connection, where the second message is used by the second electronic device to display fourth prompt information, and the fourth prompt information is used to inform the user that the first electronic device cannot currently control the first vehicle to perform the first operation.

With reference to the second aspect, in a possible implementation, the key information of the first digital vehicle key includes any one or more of the following: key type and key identifier. The vehicle information of the first vehicle includes any one or more of the following: vehicle identification number, vehicle model, vehicle manufacturer, vehicle production date, vehicle engine model, and vehicle license plate number.

With reference to the second aspect, in a possible implementation, the first communication connection includes any one of the following: a Bluetooth connection, a network connection, and a server connection; and the second communication connection includes a Bluetooth connection.

With reference to the second aspect, in a possible implementation, the first control instruction includes any one of the following: unlocking the vehicle, locking the vehicle, opening a vehicle window, closing the vehicle window, turning on an air conditioner, turning off the air conditioner, opening a trunk, closing the trunk, starting playing music, and pausing playing music.

According to a third aspect, this application provides a vehicle control method. The method includes: A second electronic device receives and responds to a first user operation, and sends a first control instruction and vehicle information of a first vehicle to a first electronic device through a first communication connection, where the first control instruction instructs the first vehicle to perform a first operation, and the vehicle information of the first vehicle is used for sending the first control instruction to the first vehicle through a second communication connection between the first electronic device and the first vehicle after the first electronic device determines a second digital vehicle key of the first vehicle, where the second electronic device stores a first digital vehicle key of the first vehicle.

With reference to the third aspect, in a possible implementation, after the second electronic device receives and responds to the first user operation, the method further includes: The second electronic device sends key information of the first digital vehicle key of the first vehicle to the first electronic device, where the key information of the first digital vehicle key is used by the first electronic device to determine, with reference to key information of the second digital vehicle key, that a key type of the first digital vehicle key is the same as a key type of the second digital vehicle key.

With reference to the third aspect, in a possible implementation, a first user account is logged in to the first electronic device, a second user account is logged in to the first electronic device, and the first user account and the second user account are the same or are associated with each other.

With reference to the third aspect, in a possible implementation, before the second electronic device sends the first control instruction and the vehicle information of the first vehicle to the first electronic device through the first communication connection, the method further includes: The second electronic device displays a QR code, where the QR code is used by the first electronic device to establish a trusted connection to the second electronic device after the first electronic device scans the QR code by using a camera of the first electronic device.

With reference to the third aspect, in a possible implementation, before the second electronic device sends the first control instruction and the vehicle information of the first vehicle to the first electronic device through the first communication connection, the method further includes: The second electronic device receives a trusted connection establishment request sent by the first electronic device, where the trusted connection establishment request is sent after the first electronic device receives a second user operation; the second electronic device displays first prompt information, where the first prompt information is used to prompt a user whether to establish a trusted connection to the first electronic device; and the second electronic device receives an input operation of the user for a second option in the first prompt information, sends a trusted connection establishment confirmation message to the first electronic device, and establishes a trusted connection to the first electronic device.

With reference to the third aspect, in a possible implementation, that the second electronic device establishes the trusted connection to the first electronic device specifically includes: The second electronic device sends a second random number to the first electronic device in response to the input operation of the user for the second option in the first prompt information; the second electronic device receives a first random number sent by the first electronic device, where the first random number and the second random number are used by the first electronic device to generate a second trusted credential; and the second electronic device generates a first trusted credential based on the first random number and the second random number.

With reference to the third aspect, in a possible implementation, after the second electronic device receives and responds to the first user operation, the method further includes: sending the first trusted credential to the first electronic device, where the first trusted credential is used by the second electronic device to send the first control instruction to the first vehicle through the second communication connection when the second trusted credential meets a preset condition.

With reference to the third aspect, in a possible implementation, after the second electronic device generates the first trusted credential based on the first random number and the second random number, the method further includes: The second electronic device deletes the first trusted credential after duration for storing the first trusted credential exceeds first duration.

With reference to the third aspect, in a possible implementation, after the second electronic device sends the first control instruction and the vehicle information of the first vehicle to the first electronic device through the first communication connection, the method further includes: The second electronic device receives, through the first communication connection, a first message sent by the first electronic device, where the first message is sent to the first electronic device through the second communication connection after the first vehicle executes the first control instruction; and the second electronic device displays third prompt information in response to the first message, where the third prompt information is used to inform the user that the second electronic device has controlled, by using the first electronic device, the first vehicle to perform the first operation.

With reference to the third aspect, in a possible implementation, the method further includes: The second electronic device receives, through the first communication connection, a second message sent by the first electronic device, where the second message is sent when the first electronic device does not determine, based on the vehicle information of the first vehicle, the second digital vehicle key stored in the first electronic device, and/or when the key type of the first digital vehicle key is different from the key type of the second digital vehicle key; and displays fourth prompt information in response to the second message, where the fourth prompt information is used to inform the user that the first electronic device cannot currently control the first vehicle to perform the first operation.

With reference to the third aspect, in a possible implementation, the key information of the first digital vehicle key includes any one or more of the following: key type and key identifier. The vehicle information of the first vehicle includes any one or more of the following: vehicle identification number, vehicle model, vehicle manufacturer, vehicle production date, vehicle engine model, and vehicle license plate number.

With reference to the third aspect, in a possible implementation, the first communication connection includes any one of the following: a Bluetooth connection, a network connection, and a server connection; and the second communication connection includes a Bluetooth connection.

With reference to the third aspect, in a possible implementation, the first control instruction includes any one of the following: unlocking the vehicle, locking the vehicle, opening a vehicle window, closing the vehicle window, turning on an air conditioner, turning off the air conditioner, opening a trunk, closing the trunk, starting playing music, and pausing playing music.

According to a third aspect, this application provides an electronic device, where the electronic device is a first electronic device. The first electronic device includes a processor and a memory. The memory is coupled to the processor, the memory is configured to store computer program code, the computer program code includes computer instructions, and the processor invokes the computer instructions to perform the vehicle control method provided in any possible implementation of the second aspect.

According to a fourth aspect, this application provides an electronic device, where the electronic device is a second electronic device. The second electronic device includes a processor and a memory. The memory is coupled to the processor, the memory is configured to store computer program code, the computer program code includes computer instructions, and the processor invokes the computer instructions to perform the vehicle control method provided in any possible implementation of the third aspect.

According to a fifth aspect, this application provides a computer-readable storage medium, configured to store computer instructions. When the computer instructions are run on a first electronic device, the first electronic device is enabled to perform the vehicle control method provided in any possible implementation of the second aspect.

According to a sixth aspect, this application provides a computer-readable storage medium, configured to store computer instructions. When the computer instructions are run on a second electronic device, the second electronic device is enabled to perform the vehicle control method provided in any possible implementation of the third aspect.

According to a seventh aspect, this application provides a computer program product. When the computer program product runs on a first electronic device, the first electronic device is enabled to perform the vehicle control method provided in any possible implementation of the second aspect.

According to an eighth aspect, this application provides a computer program product. When the computer program product runs on a second electronic device, the second electronic device is enabled to perform the vehicle control method provided in any possible implementation of the third aspect.

For beneficial effects of the second aspect to the eighth aspect, refer to the descriptions of the beneficial effects in the first aspect. Details are not described herein again in this application.

### BRIEF DESCRIPTION OF DRAWINGS

FIG. 1 is an example of a diagram of a structure of a communication system 10;
FIG. 2 is an example of a diagram of a structure of another communication system 20;
FIG. 3 is an example of a diagram of a structure of an electronic device 200 according to an embodiment of this application;
FIG. 4 is an example of a block diagram of a software structure of an electronic device 200;
FIG. 5 is a diagram of a structure of a vehicle 100;
FIG. 6 is a diagram of a software structure of a vehicle 100;
FIG. 7A to FIG. 7L are diagrams in which a user performs an operation in a first application to apply for a digital vehicle key of a vehicle 100;
FIG. 7M to FIG. 7P are other diagrams in which a user performs an operation in a first application to apply for a digital vehicle key of a vehicle 100;
FIG. 7Q to FIG. 7T are still other diagrams in which a user performs an operation in a first application to apply for a digital vehicle key of a vehicle 100;
FIG. 7U to FIG. 7W are yet other diagrams in which a user performs an operation in a first application to apply for a digital vehicle key of a vehicle 100;
FIG. 8A to FIG. 8E are diagrams of controlling a vehicle by an electronic device 300 by using an electronic device 200;
FIG. 9A-1 to FIG. 9A-3 are a flowchart of a method for controlling a vehicle 100 by an electronic device 300 by using an electronic device 200;

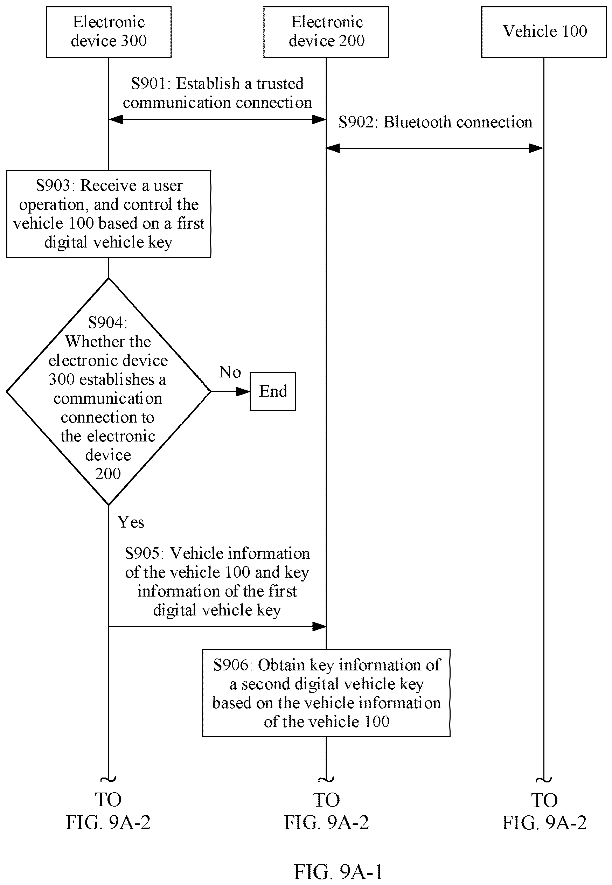

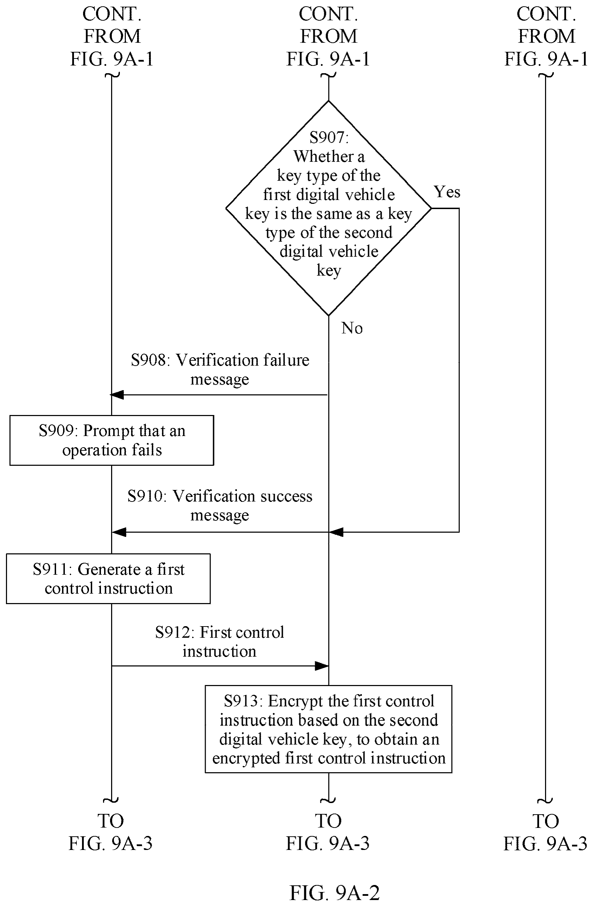

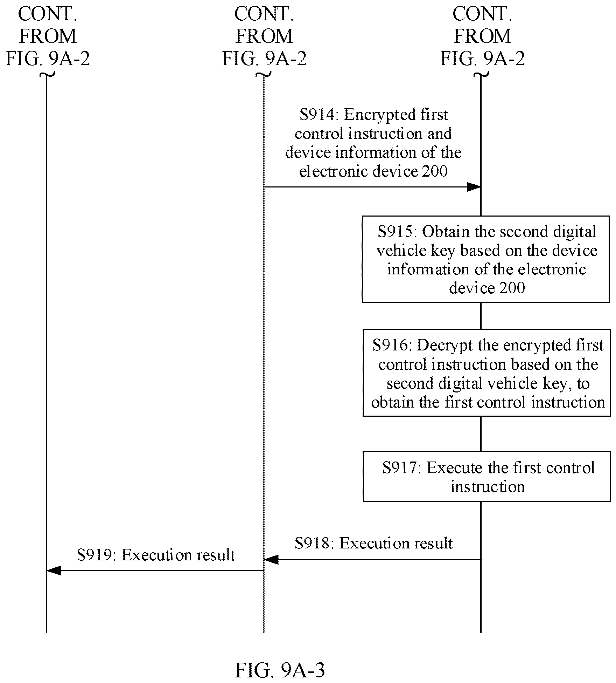

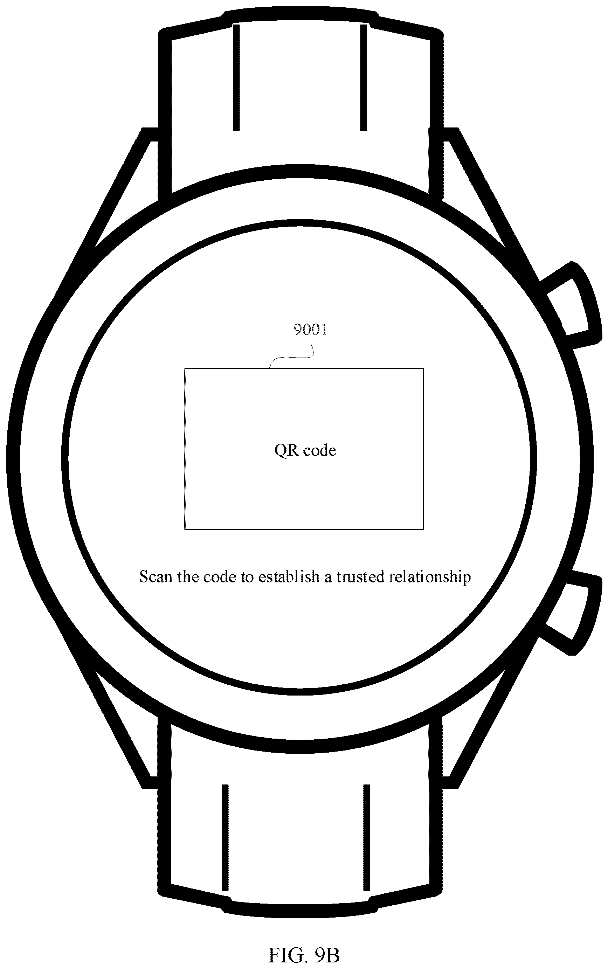

FIG. 9B shows a QR code image 9001 displayed by an electronic device 300;

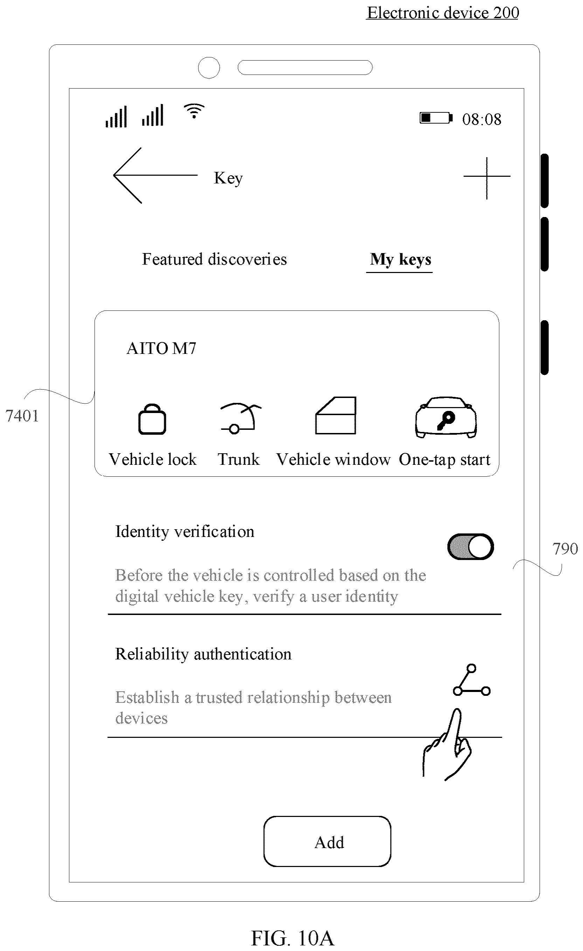

FIG. 10A to FIG. 10J are diagrams of controlling a vehicle by an electronic device 300 by using an electronic device 200;

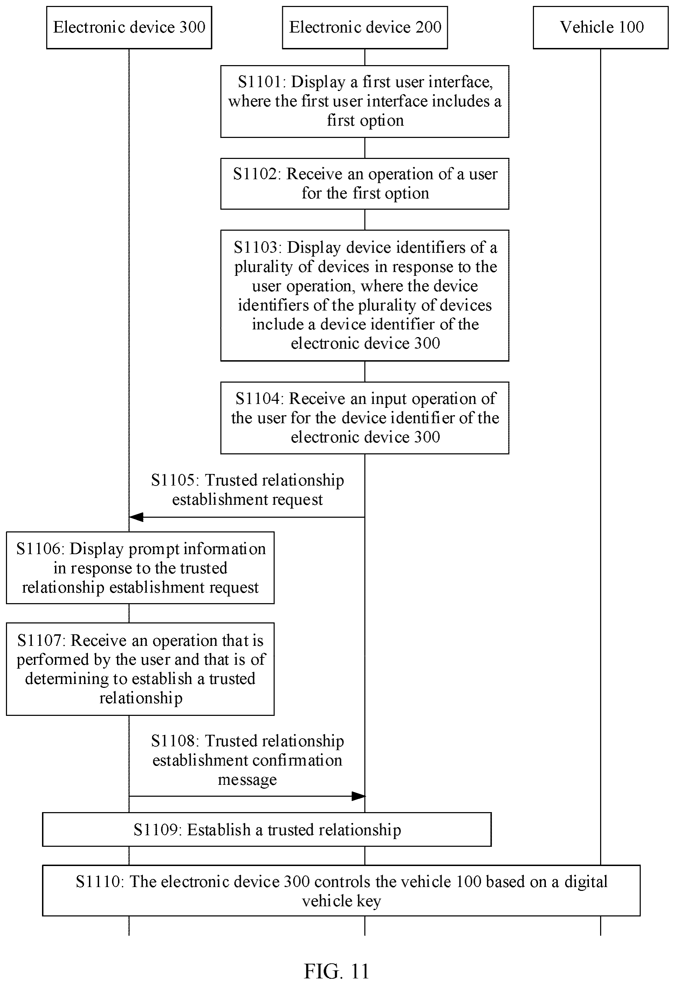

FIG. 11 is another diagram of controlling a vehicle 100 by an electronic device 300 by using an electronic device 200;

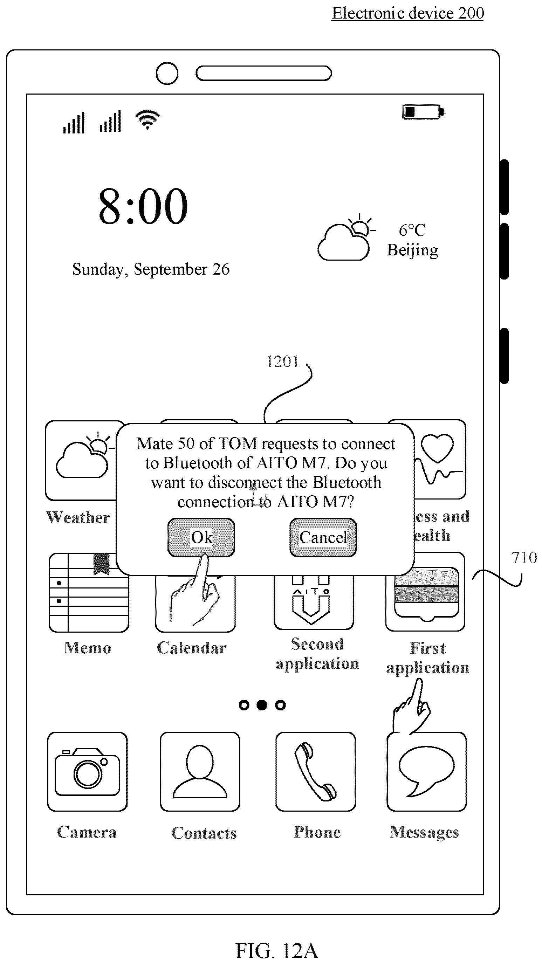

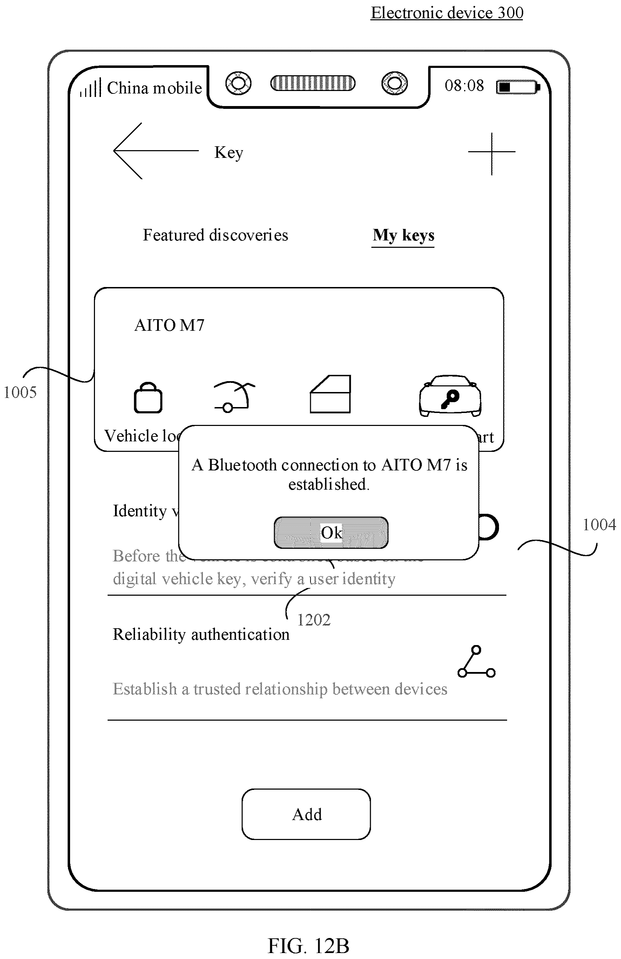

FIG. 12A and FIG. 12B are diagrams of controlling a vehicle 100 by an electronic device 300 through a Bluetooth connection; and

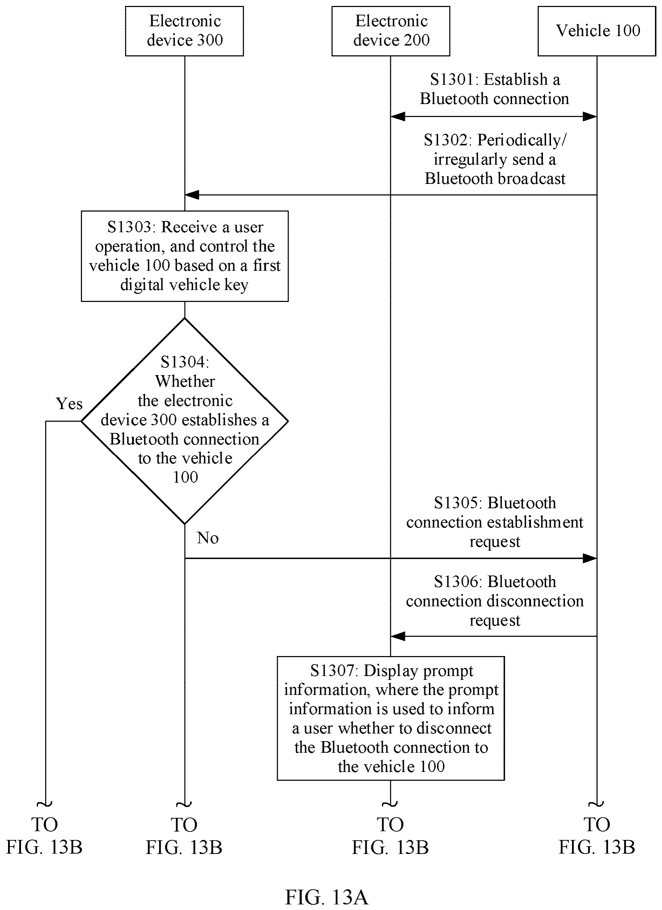

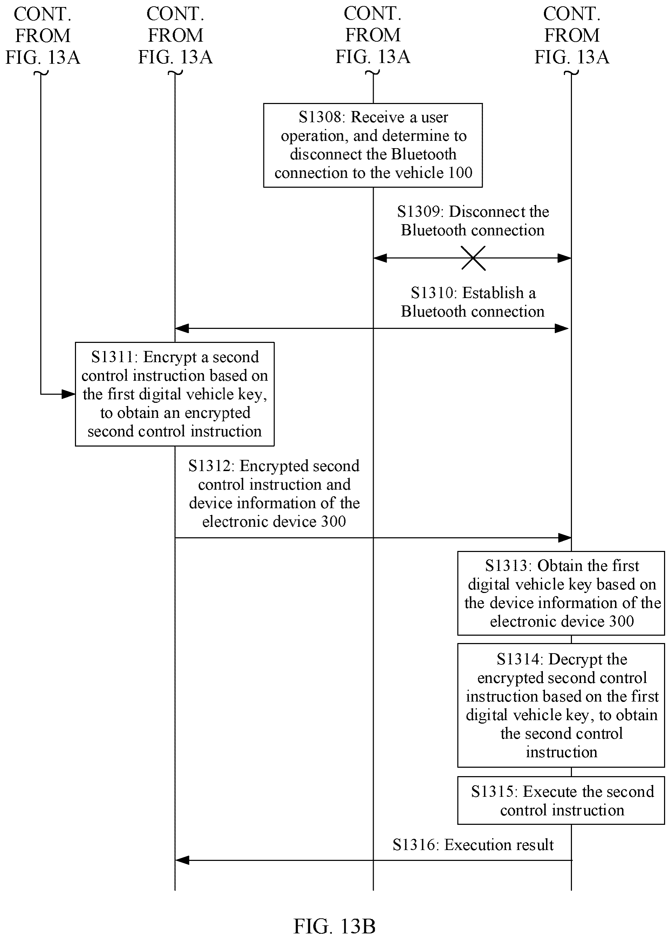

FIG. 13A and FIG. 13B are a schematic flowchart of a method for establishing a Bluetooth connection to a vehicle 100 and controlling the vehicle 100 by an electronic device 300.

### DESCRIPTION OF EMBODIMENTS

The following describes the technical solutions in embodiments of this application with reference to the accompanying drawings in embodiments of this application. In the descriptions of embodiments of this application, terms used in the following embodiments are merely intended to describe purposes of specific embodiments, but are not intended to limit this application. The terms "one", "the", "the foregoing", "this", and "the one" of singular forms used in this specification and the appended claims of this application are also intended to include expressions such as "one or more", unless otherwise specified in the context clearly. It should be further understood that, in the following embodiments of this application, "at least one" and "one or more" mean one or more (including two). The term "and/or" is used to describe an association relationship between associated objects and represents that three relationships may exist. For example, A and/or B may represent the following cases: Only A exists, both A and B exist, and only B exists, where A and B may be singular or plural. The character "/" generally indicates an "or" relationship between the associated objects.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner. The term "connection" includes a direct connection and an indirect connection, unless otherwise specified. "First" and "second" are merely intended for a purpose of description, and shall not be understood as an indication or implication of relative importance or implicit indication of a number of indicated technical features.

In embodiments of this application, words such as "example" or "for example" are used to represent giving examples, illustrations, or descriptions. Any embodiment or design scheme described as an "example" or "for example" in embodiments of this application should not be construed as being more preferred or more advantageous than another embodiment or design scheme. Exactly, use of the term "example", "for example", or the like is intended to present a related concept in a specific manner.

A term "user interface (user interface, UI)" in the following embodiments of this application is a medium interface for interaction and information exchange between an application (application, APP) or an operating system (operating system, OS) and a user, and implements conversion between an internal form of information and a form acceptable to the user. The user interface is source code written in a specific computer language such as Java or an extensible markup language (extensible markup language, XML). Interface source code is parsed and rendered on an electronic device, and is finally presented as content that can be identified by the user. A frequently-used representation form of the user interface is a graphical user interface (graphical user interface, GUI), and is a user interface that is displayed in a graphical manner and that is related to a computer operation. The user interface may be a visual interface element such as a text, an icon, a button, a menu, a tab, a text box, a dialog box, a status bar, a navigation bar, or a Widget that is displayed on a display of the electronic device.

**The following describes a communication system provided in an embodiment of this application.**

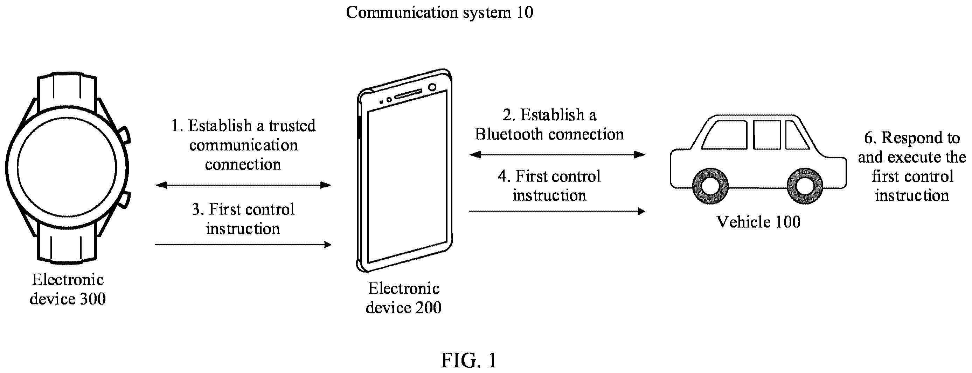

FIG. 1 is an example of a diagram of a structure of a communication system 10.

As shown in FIG. 1, the communication system 10 may include a vehicle 100, an electronic device 200, and an electronic device 300.

A first application is installed on the electronic device 200 and the electronic device 300. A user may apply for and store a digital vehicle key of the vehicle 100 by using the first application, and perform an operation on the first application, to control a vehicle based on the digital vehicle key stored in the electronic device, for example, controlling on unlocking the vehicle, locking the vehicle, opening/closing a vehicle window, opening/closing a vehicle door, turning on/off an air conditioner, adjusting a seat, and playing music.

The electronic device 200 and the electronic device 300 may be a mobile phone, a tablet computer, a vehicle-mounted computer, a wearable device (like a smartwatch, a smart band, or smart glasses), an ultra-mobile personal computer (ultra-mobile personal computer, UMPC), a netbook, a personal digital assistant (personal digital assistant, PDA), or the like. Specific types of the electronic device 200 and the electronic device 300 are not limited in embodiments of this application.

In some embodiments, the electronic device 200 may be a watch, the electronic device 300 may be a mobile phone, and the electronic device 200 and the electronic device 300 may be a plurality of devices of a same user.

In another embodiment, both the electronic device 200 and the electronic device 300 may be mobile phones, and the electronic device 200 and the electronic device 300 may be devices of different users.

After the electronic device 200 establishes a trusted relationship with the electronic device 300, the electronic device 300 may send a control instruction to the vehicle 100 by using the electronic device 200. Specifically, the electronic device 200 establishes a Bluetooth connection to the vehicle 100, and the electronic device 300 establishes a communication connection to the electronic device 200. A sequence of steps of establishing the Bluetooth connection to the vehicle 100 by the electronic device 200 and steps of establishing the communication connection to the electronic device 200 by the electronic device 300 is not limited in this application. The user may perform an operation in the first application on the electronic device 300, and control the vehicle 100 based on the digital vehicle key. Specifically, in response to the user operation, when the electronic device 200 and the electronic device 300 are mutually trusted devices, and both the electronic device 200 and the electronic device 300 apply for the digital vehicle key of the vehicle 100, the electronic device 300 may send a first control instruction to the electronic device 200, and then the electronic device 300 sends the first control instruction to the vehicle 100 through the Bluetooth connection to the vehicle 100. The vehicle 100 receives the first control instruction and executes the first control instruction in response to the first control instruction.

The communication system 10 is not limited to the vehicle 100, the electronic device 200, and the electronic device 300 shown in FIG. 1. The communication system 10 may further include more or fewer devices.

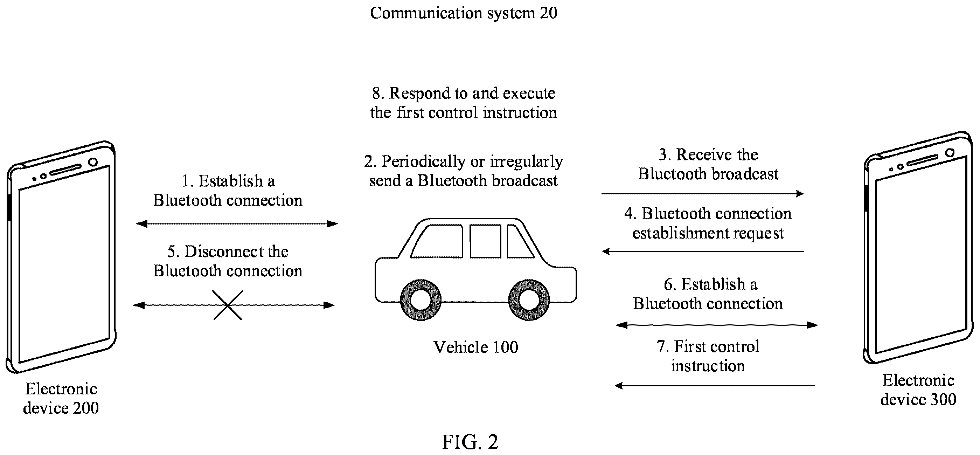

FIG. 2 is an example of a diagram of a structure of another communication system 20.

As shown in FIG. 2, the communication system 20 may include a vehicle 100, an electronic device 200, and an electronic device 300.

A first application may also be installed on the electronic device 200 and the electronic device 300. A user may apply for and store a digital vehicle key of the vehicle 100 by using the first application, and perform an operation on the first application, to control the vehicle based on the digital vehicle key stored in the electronic device, for example, controlling on unlocking the vehicle, locking the vehicle, opening/closing a vehicle window, opening/closing a vehicle door, turning on/off an air conditioner, adjusting a seat, and playing music.

For example, both the electronic device 200 and the electronic device 300 may be mobile phones, and the electronic device 200 and the electronic device 300 may be devices of different users.

The electronic device 200 establishes a Bluetooth connection to the vehicle 100. After the vehicle 100 establishes the Bluetooth connection to the electronic device 200, the vehicle 100 still periodically/irregularly sends a Bluetooth broadcast. All other electronic devices near the vehicle 100 may receive the Bluetooth broadcast sent by the vehicle 100. For example, the electronic device 300 receives the Bluetooth broadcast sent by the vehicle 100, and sends a Bluetooth connection establishment request to the vehicle 100 in response to the Bluetooth broadcast sent by the vehicle 100.

The vehicle 100 sends a Bluetooth connection disconnection request to the electronic device 200 in response to the Bluetooth connection establishment request. The electronic device 200 receives the user operation, and disconnects the Bluetooth connection to the vehicle 100 in response to the user operation. After the vehicle 100 disconnects the Bluetooth connection to the electronic device 200, the vehicle 100 may establish a Bluetooth connection to the electronic device 300.

After the vehicle 100 establishes the Bluetooth connection to the electronic device 300, the user may perform an operation in the first application on the electronic device 300, to initiate a first control instruction to the vehicle 100. When the electronic device 300 applies for the digital vehicle key of the vehicle 100, the electronic device 300 may send the first control instruction to the vehicle 100 through a Bluetooth connection to the vehicle 100. The vehicle 100 receives the first control instruction and executes the first control instruction in response to the first control instruction.

The communication system 10 is not limited to the vehicle 100, the electronic device 200, and the electronic device 300 shown in FIG. 2. The communication system 10 may further include more or fewer devices.

The following uses the electronic device 200 as an example to describe a structure of the electronic device in the communication system shown in FIG. 1 or FIG. 2.

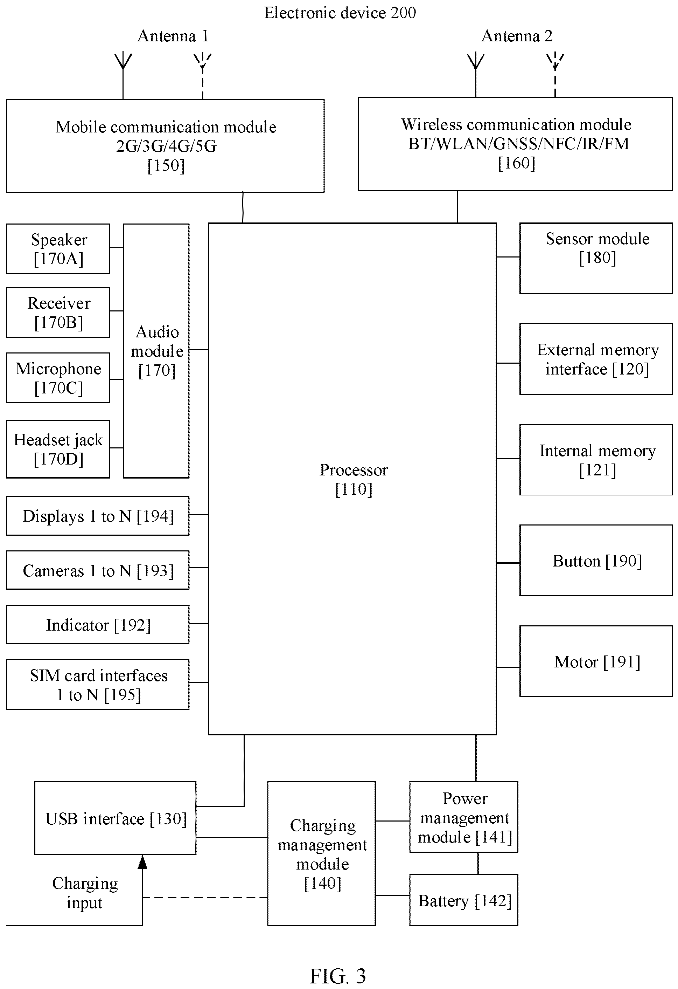

**FIG. 3** **is an example of a diagram of a structure of the electronic device 200 according to an embodiment of this application.**

As shown in FIG. 3, the electronic device 200 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like.

It may be understood that the structure shown in this embodiment of this application does not constitute a specific limitation on the electronic device 200. In some other embodiments of this application, the electronic device 200 may include more or fewer components than those shown in the figure, or a combination of a part of the components, or splits from a part of the components, or an arrangement of different components. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be separate components, or may be integrated into one or more processors.

The controller may be a nerve center and a command center of the electronic device 200. The controller may generate an operation control signal based on instruction operation code and a timing signal, and complete control of instruction fetching and instruction execution.

A memory may be further disposed in the processor 110, and is configured to store instructions and data. In some examples, the memory in the processor 110 is a cache. The memory may store instructions or data that has been used or cyclically used by the processor 110. If the processor 110 needs to use the instructions or the data again, the processor 110 may directly invoke the instructions or the data from the memory. In this way, repeated access is avoided, and waiting time of the processor 110 is reduced. This improves system efficiency.

The USB interface 130 is an interface that conforms to a USB standard specification, and may be specifically a mini USB interface, a micro USB interface, a USB Type-C interface, or the like. The USB interface 130 may be configured to connect to a charger to charge the electronic device 200, may be configured to transmit data between the electronic device 200 and a peripheral device, or may be configured to connect to a headset, to play audio through the headset.

The charging management module 140 is configured to receive a charging input from a charger. The charger may be a wireless charger or a wired charger. The charging management module 140 may supply power to the electronic device by using the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, an external memory, the display 194, the camera 193, the wireless communication module 160, and the like.

A wireless communication function of the electronic device 200 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 200 may be configured to cover one or more communication frequency bands. Different antennas may further be reused, to improve antenna utilization. For example, the antenna 1 may be reused as a diversity antenna of a wireless local area network. In some other embodiments, the antenna may be used in combination with a tuning switch.

The mobile communication module 150 may provide a solution that is applied to the electronic device 200 and that includes wireless communication such as 2G/3G/4G/5G. The mobile communication module 150 may include at least one filter, a switch, a power amplifier, a low noise amplifier (low noise amplifier, LNA), and the like. The mobile communication module 150 may receive an electromagnetic wave through the antenna 1, perform processing like filtering or amplification on the received electromagnetic wave, and transmit the electromagnetic wave to the modem processor for demodulation. The mobile communication module 150 may further amplify a signal modulated by the modem processor, and convert the signal into an electromagnetic wave through the antenna 1 for radiation.

The wireless communication module 160 may provide a solution that is applied to the electronic device 200 and that includes wireless communication such as a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, and an infrared (infrared, IR) technology. The wireless communication module 160 may be one or more components integrating at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave through the antenna 2 for radiation.

The electronic device 200 implements a display function by using the GPU, the display 194, the application processor, and the like. The GPU is a microprocessor for image processing, and is connected to the display 194 and the application processor. The GPU is configured to: perform mathematical and geometric computation, and render an image.

The display 194 is configured to display an image, a video, and the like. In some embodiments, the electronic device 200 may include one or N displays 194, where N is a positive integer greater than 1.

The electronic device 200 may implement a photographing function by using the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image.

The camera 193 is configured to capture a static image or a video. In some embodiments, the electronic device 200 may include one or N cameras 193, where N is a positive integer greater than 1.

The digital signal processor is configured to process a digital signal, and may further process another digital signal in addition to a digital image signal. For example, when the electronic device 200 selects a frequency, the digital signal processor is configured to perform Fourier transform on frequency energy and the like.

The NPU is a neural-network (neural-network, NN) computing processor. The NPU quickly processes input information by referring to a structure of a biological neural network, for example, a transmission mode between human brain neurons, and may further continuously perform self-learning. The NPU can implement applications such as intelligent cognition of the electronic device 200. For example, image recognition, facial recognition, speech recognition, and a text understanding.

The external memory interface 120 may be configured to connect to an external memory card, for example, a micro SD card, to extend a storage capability of the electronic device 200. The external memory card communicates with the processor 110 through the external memory interface 120, to implement a data storage function. For example, files such as music and video are stored in the external storage card.

The internal memory 121 may be configured to store computer-executable program code. The executable program code includes instructions. The processor 110 runs the instructions stored in the internal memory 121, to perform various function applications and data processing of the electronic device 200. The internal memory 121 may include a program storage area and a data storage area. The program storage area may store an operating system, an application required by at least one function (for example, a sound playing function and an image playing function), and the like. The data storage area may store data (for example, audio data and a phone book) created during use of the electronic device 200. In addition, the internal memory 121 may include a high speed random access memory, and may further include a nonvolatile memory, for example, at least one magnetic disk storage device, a flash storage device, or a universal flash storage (universal flash storage, UFS).

The electronic device 200 may implement an audio function by using the audio module 170, the speaker 170A, the receiver 170B, the microphone 170C, the headset jack 170D, the application processor, and the like. For example, playing music, and recording.

The audio module 170 is configured to convert a digital audio signal into an analog audio signal for output, and is also configured to convert an analog audio input into a digital audio signal. The audio module 170 may be further configured to encode and decode an audio signal. In some examples, the audio module 170 may be disposed in the processor 110, or some functional modules in the audio module 170 are disposed in the processor 110. The speaker 170A, also referred to as a "loudspeaker", is configured to convert an audio electrical signal into a sound signal. The receiver 170B, also referred to as an "earpiece", is configured to convert an audio electrical signal into a sound signal. The microphone 170C, also referred to as a "mike" or a "mic", is configured to convert a sound signal into an electrical signal. The headset jack 170D is configured to connect to a wired headset.

The sensor module 180 may include a pressure sensor, a gyroscope sensor, a barometric pressure sensor, a magnetic sensor, an acceleration sensor, a range sensor, an optical proximity sensor, a fingerprint sensor, a temperature sensor, a touch sensor, an ambient light sensor, a bone conduction sensor, and the like.

The button 190 includes a power button, a volume button, and the like. The motor 191 may generate a vibration prompt. The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 200. The electronic device 200 may support one or N SIM card interfaces, where N is a positive integer greater than 1. The electronic device 200 interacts with a network by using the SIM card, to implement functions such as a call and data communication. In some examples, the electronic device 200 uses an eSIM, namely, an embedded SIM card. The eSIM card may be embedded in the electronic device 200, and cannot be separated from the electronic device 200.

The electronic device 200 may be an electronic device running iOS^{®}, Android^{®}, Windows^{®}, a Harmony^{®} OS (Harmony^{®} OS), or another operating system, for example, a mobile phone, a tablet computer, a notebook computer, a smart watch, or a smart band. A specific type of the electronic device 200 is not limited in embodiments of this application.

A software system of the electronic device 200 may use a layered architecture, an event-driven architecture, a microkernel architecture, a micro service architecture, or a cloud architecture. In this embodiment of this application, an Android^{®} system with a layered architecture is used as an example to describe a software structure of the electronic device 200.

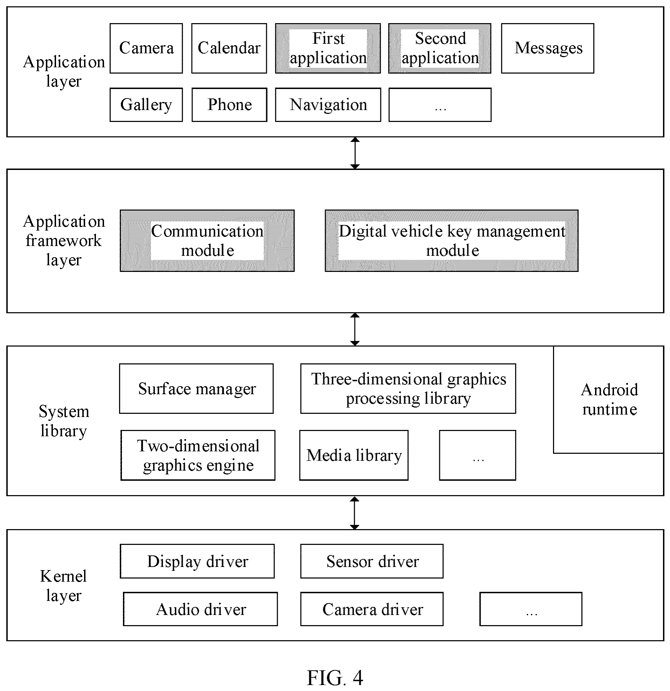

**FIG. 4** **is an example of a block diagram of a software structure of the electronic device 200.**

The layered architecture divides software into layers, and each layer has a clear role and responsibility. The layers communicate with each other through software interfaces. In some embodiments, the Android^{®} system is divided into four layers: an application layer, an application framework layer, Android runtime (Android Runtime), a system library, and a kernel layer from top to bottom.

The application layer may include a series of application packages.

As shown in FIG. 4, the application package may include applications such as Camera, Calendar, First application, Second application, Messages, Gallery, Phone, and Navigation. The first application may be used to provide a function of applying for a digital vehicle key of the vehicle 100 and a function of controlling the vehicle 100 based on a function of the digital vehicle key of the vehicle 100. The second application may be a vehicle owner application, and the vehicle owner application may be an application for managing a vehicle. Vehicles produced by different manufacturers may correspond to different vehicle owner applications. The second application may also be used to provide a function of applying for a digital vehicle key of the vehicle 100 by the electronic device and a function of controlling the vehicle 100 based on a function of the digital vehicle key of the vehicle 100.

The application framework layer provides an API and a programming framework for an application at the application layer. The application framework layer includes some predefined functions.

As shown in FIG. 4, the application framework layer may include a communication module and a digital vehicle key management module.

The communication module may be used by the electronic device 200 to communicate with another device. For example, the electronic device 200 may communicate with the electronic device 200 and the vehicle 100 by using the communication module. For example, the communication module may be a Bluetooth communication module.

The digital vehicle key management module may be configured to store, load, and use the digital vehicle key of the vehicle 100. For example, the digital vehicle key management module may store the digital vehicle key of the vehicle 100 in a security chip, to prevent leakage of the digital vehicle key of the vehicle 100.

The Android runtime includes a core library and a virtual machine. The Android runtime is used to schedule and manage the Android system.

The core library includes two parts: a function that needs to be called in Java language and a core library of Android.

The application layer and the application framework layer run on the virtual machine. The virtual machine executes java files of the application layer and the application framework layer as binary files. The virtual machine is used to implement functions such as object lifecycle management, stack management, thread management, security and exception management, and garbage collection.

A system library may include a plurality of functional modules, for example, a surface manager (surface manager), a media library (Media Library), a three-dimensional graphics processing library (for example, OpenGL ES), and a 2D graphics engine (for example, SGL).

The surface manager is used to manage a display subsystem and provide fusion of 2D and 3D layers for a plurality of applications.

The media library supports playing and recording in a plurality of commonly used audio and video formats, static image files, and the like. The media library may support a plurality of audio and video encoding formats, for example, MPEG 4, H.264, MP3, AAC, AMR, JPG, and PNG.

The three-dimensional graphics processing library is used to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

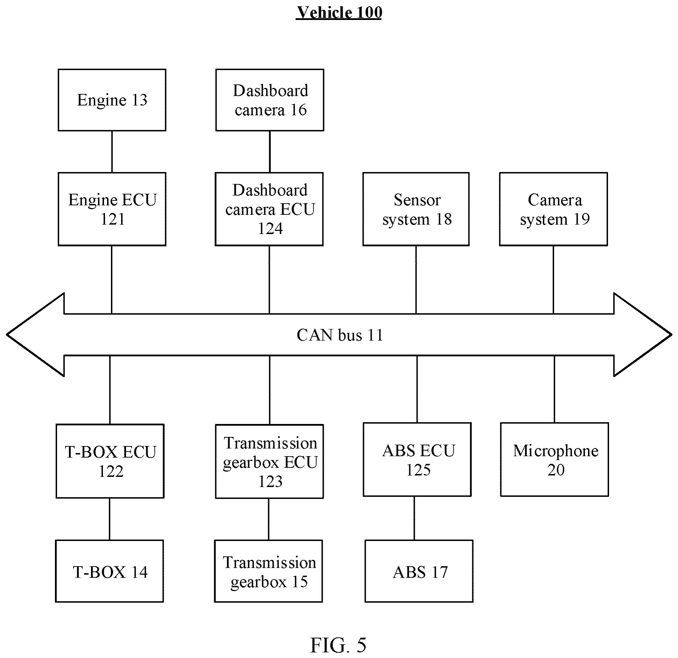

FIG. 5 is a diagram of a structure of the vehicle 100.

As shown in FIG. 5, the vehicle 100 includes: a controller area network (controller area network, CAN) bus 11, a plurality of electronic control units (electronic control units, ECU), an engine 13, a telematics box (telematics box, T-box) 14, a transmission gearbox 15, a dashboard camera 16, an anti-lock brake system (anti-lock brake system, ABS) 17, a sensor system 18, a camera system 19, a microphone 20, and the like.

The CAN bus 11 is a serial communication network that supports distributed control or real-time control, and is configured to connect components of the vehicle 100. Any component on the CAN bus 11 may monitor all data transmitted on the CAN bus 11. Frames transmitted by the CAN bus 11 may include a data frame, a remote frame, an error frame, and an overload frame, and different frames transmit different types of data. In this embodiment of this application, the CAN bus 11 may be configured to transmit data related to each component in a vehicle-specific secure communication method. For specific implementation of the method, refer to detailed descriptions in the following method embodiments.

This is not limited to the CAN bus 11. In some other embodiments, the components of the vehicle 100 may alternatively be connected and communicate in another manner. For example, the components may further communicate with each other through a vehicle-mounted Ethernet (ethernet) local interconnect network (local interconnect network, LIN) bus, a FlexRay bus, a common vehicle-mounted network system (media oriented system transport, MOST) bus, or the like. This is not limited in embodiments of this application. The following embodiment is described by using an example in which each component communicates through the CAN bus 11.

The ECU is equivalent to a processor or a brain of the vehicle 100, and is configured to indicate, based on an instruction obtained from the CAN bus 11 or based on an operation entered by the user, a corresponding component to perform a corresponding action. The ECU may include a security chip, a microprocessor (microcontroller unit, MCU), a random access memory (random access memory, RAM), a read-only memory (read-only memory, ROM), an input/output (I/O) interface, an analog/digital converter (A/D converter), and a large-scale integrated circuit like an input circuit, an output circuit, a shaping circuit, or a drive circuit.

There are various types of ECUs. Different types of ECUs can be used to implement different functions.

The plurality of ECUs in the vehicle 100 may include, for example, an engine ECU 121, a telematics box (telematics box, T-box) ECU 122, a transmission gearbox ECU 123, a dashboard camera ECU 124, and an anti-lock brake system (anti-lock brake system, ABS) ECU 125.

The engine ECU 121 is configured to manage an engine and coordinate various functions of the engine, for example, may be configured to start up the engine, shut down the engine, and the like. The engine is an apparatus that provides power for the vehicle 100. The engine is a machine that converts a form of energy into mechanical energy. The vehicle 100 may be configured to convert chemical energy of liquid or gas combustion, or electric energy into mechanical energy and output power to the outside. Engine components may include two main mechanisms: a crank-link mechanism and a valve mechanism, and five systems: a cooling system, a lubrication system, an ignition system, an energy supply system, and a start-up system. Main components of the engine are a cylinder block, a cylinder head, piston, piston pin, connecting rod, crankshaft, flywheel and the like.

The T-box ECU 122 is configured to manage the T-box 14.

The T-box 14 is mainly used to communicate with the Internet, provide a remote communication interface for the vehicle 100, and provide services including navigation, entertainment, driving data collection, driving route recording, vehicle fault monitoring, remote vehicle query and control (like unlocking and locking, air conditioner control, window control, engine torque limit, engine startup and shutdown, seat adjustment, queries about a state of charge, a fuel level, and a door status), driving behavior analysis, wireless hotspot sharing, road rescue, exception notification, and the like.

The T-box 14 may be configured to communicate with a telematics service provider (telematics service provider, TSP) and an electronic device (for example, the electronic device 200) on a user (for example, a driver) side, to display and control a vehicle status on the electronic device 200. After the user sends a control command by using a vehicle management application on the electronic device 200, the TSP sends a request instruction to the T-box 14. After obtaining the control command, the T-box 14 sends a control packet through the CAN bus to control the vehicle 100. Finally, an operation result is fed back to the vehicle management application on the electronic device 200 on the user side. In other words, data read by the T-box 14 through the CAN bus 11, for example, data such as a vehicle status report, a driving report, fuel consumption statistics, a violation query, a location, and a driving behavior, may be transmitted to a TSP background system through a network, and the TSP background system forwards the data to the electronic device 200 on the user side for the user to view.

The T-box 14 may specifically include a communication module and a display.

The communication module may be configured to provide a wireless communication function, and support the vehicle 100 in communicating with another device through a wireless communication technology like a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or ultra-wideband (ultra-wideband, UWB). The communication module may be further configured to provide a mobile communication function, and support the vehicle 100 in communicating with another device through communication technologies such as a global system for mobile communications (global system for mobile communications, GSM), a universal mobile telecommunications system (universal Mobile telecommunications system, UMTS), wideband code division multiple access (wideband code division multiple access, WCDMA), time-division code division multiple access (time-division code division multiple access, TD-SCDMA), long term evolution (long term evolution, LTE), 5G, and future 6G.

The communication module may establish a connection to and communicate with another device like a server or a user-side electronic device through a vehicle to everything (vehicle to everything, V2X) communication technology based on a cellular network (cellular V2X, C-V2X). The C-V2X may include, for example, long term evolution (long term evolution, LTE)-based V2X (LTE-V2X), and 5G-V2X.

In this embodiment of this application, the communication module may be configured to negotiate a key with the electronic device 200, notify the electronic device 200 of a key determined by the vehicle 100, or receive a key determined by the electronic device 200. For a key agreement process between the communication module and the electronic device 200, refer to detailed descriptions in subsequent method embodiments.

In this embodiment of this application, the communication module is further configured to perform key-based communication with the electronic device 200. Specifically, the communication module may be configured to send data encrypted by using a key to the electronic device 200, or may receive data that is encrypted by using a key and that is sent by the electronic device 200. For a communication process between the communication module and the electronic device 200, refer to detailed descriptions in subsequent method embodiments.

The display is configured to provide a visualized interface for a driver. The vehicle 100 may include one or more displays, for example, may include a vehicle-mounted display disposed in front of a driver's seat, and a display that is disposed above a seat and that is configured to display a surrounding situation, and the vehicle 100 may further include a head up display (head up display, HUD) that projects information onto a windshield, and the like. A display that is of the vehicle 100 provided in a subsequent embodiment and that is configured to display a user interface may be a vehicle-mounted display disposed beside a seat, or may be a display disposed above a seat, or may be a HUD, or the like. This is not limited herein. For details of the user interface displayed on the display of the vehicle 100, refer to detailed descriptions in subsequent embodiments. Details are not described herein.

The T-box 14 may also be referred to as an in-car infotainment system, a remote information processor, a vehicle gateway, or the like. This is not limited in embodiments of this application.

The transmission gearbox ECU 123 is configured to manage a transmission gearbox.

The transmission gearbox 15 may be used to change a rotational speed and a torque of an engine, and can change a transmission ratio of an output shaft and an input shaft in a fixed manner or based on a gear. Components of the transmission gearbox 15 may include a variable-speed transmission mechanism, a control mechanism, a power output mechanism, and the like. A main function of the variable-speed transmission mechanism is to change values and directions of a torque and a rotational speed. A main function of the control mechanism is to control the transmission mechanism, to change a transmission ratio of the transmission gearbox, that is, implement gear shifting, to achieve variable-speed torque.

The dashboard camera ECU 124 is configured to manage the dashboard camera 16.

Components of the dashboard camera 16 may include a host, a vehicle speed sensor, data analysis software, and the like. The dashboard camera 16 is an instrument that records an image and a sound of a vehicle in a traveling process, including related information such as traveling time, a speed, and a location. In this embodiment of this application, when the vehicle travels, the vehicle speed sensor collects a wheel rotation speed, and sends vehicle speed information to the dashboard camera 16 through the CAN bus.

The ABS ECU 125 manages the ABS 17.

The ABS 17 automatically controls a value of braking force of a brake when the vehicle brakes, so that wheels are not locked and are in a state of rolling and sliding, to ensure that adhesion between the wheels and the ground is a maximum value. In a braking process, when an electronic control apparatus determines, based on a wheel rotation speed signal input by a wheel rotation speed sensor, that the wheels tend to be locked, the ABS enters an anti-lock braking pressure adjustment process.

The sensor system 18 may include an acceleration sensor, a vehicle speed sensor, a vibration sensor, a gyro sensor, a radar sensor, a signal transmitter, a signal receiver, and the like. The acceleration sensor and the vehicle speed sensor are configured to detect a speed of the vehicle 100. The vibration sensor may be disposed under a seat, a seat belt, a chair back, an operation panel, an airbag, or another position, and is configured to detect whether the vehicle 100 is collided and a position of the user. The gyroscope sensor may be configured to determine a motion posture of the vehicle 100. The radar sensor may include a lidar, an ultrasonic radar, a millimeter-wave radar, and the like. The radar sensor, the signal transmitter, and the signal receiver may be configured to detect a position of the user.

The camera system 19 may include a plurality of cameras, and the camera is configured to capture a static image or a video. The camera in the camera system 19 may be disposed at a position like a front of the vehicle, a rear of the vehicle, a side edge, or inside the vehicle, to implement functions such as assisted driving, driving recording, panoramic surround view, and in-vehicle monitoring.

The sensor system 18 and the camera system 19 may be configured to detect an ambient environment, so that the vehicle 100 makes a corresponding decision to cope with an environment change. For example, the sensor system 18 and the camera system 19 may be configured to complete a task of focusing on the ambient environment in an autonomous driving phase.

The microphone 20, also referred to as a "mike" or a "mic", is configured to convert a sound signal into an electrical signal. When making a call or outputting a voice instruction, the user may make a sound by moving the mouth close to the microphone 20, to input a sound signal to the microphone 20. The vehicle 100 may be provided with at least one microphone 20. In some other embodiments, two microphones 20 may be disposed in the vehicle 100, to collect the sound signal and further implement a noise reduction function. In some other embodiments, three, four, or more microphones 20 may be further disposed in the vehicle 100 to form a microphone array, to collect a sound signal, reduce noise, identify a sound source, implement a directional recording function, and the like.

In addition, the vehicle 100 may further include a plurality of interfaces, for example, a USB interface, an RS-232 interface, and an RS485 interface, and may be externally connected to a camera, a microphone, a headset, and the electronic device 200 on a user side.

It can be understood that the structure shown in the embodiment of this application does not constitute a specific limitation on the vehicle system. The vehicle 100 may include more or fewer components than those shown in the figure, or a combination of a part of the components, or splits from a part of the components, or an arrangement of different components. The components shown in the figure may be implemented by hardware, software, or a combination of software and hardware.

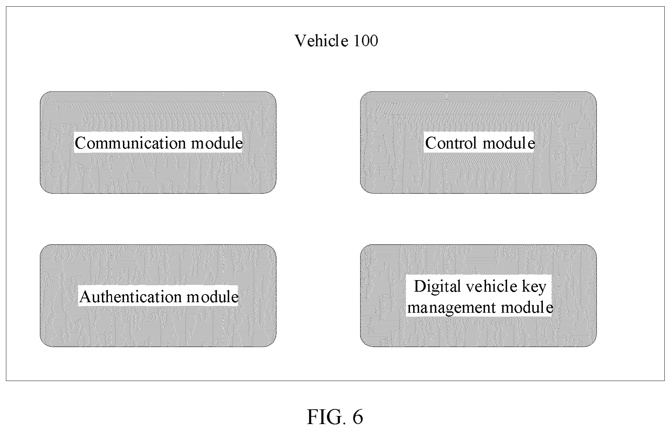

FIG. 6 is a diagram of a software structure of a vehicle 100.

As shown in FIG. 6, the vehicle 100 may include but is not limited to a communication module, a control module, an authentication module, a digital vehicle key management module, and the like.

The communication module may be used by the vehicle 100 to communicate with another device. For example, the vehicle 100 may communicate with the electronic device 300 and the electronic device 200 by using the communication module. For example, the communication module may be a Bluetooth communication module. The vehicle 100 may separately establish a Bluetooth connection to the electronic device 200 and the electronic device 300, and separately communicate with the electronic device 200 and the electronic device 300 based on the Bluetooth connection.

The control module may be configured to control the vehicle 100, for example, controlling on unlocking/locking the vehicle 100, opening/closing a trunk, opening/closing a vehicle window, and starting up/shutting down an engine.

The authentication module may be configured to implement a security verification function between the vehicle 100 and another device, including functions such as key management and authentication control.

The digital vehicle key management module may be configured to store, load, and use a digital vehicle key of the vehicle 100. For example, the digital vehicle key management module may store the digital vehicle key of the vehicle 100 in a security chip of the vehicle 100, to prevent leakage of the digital vehicle key of the vehicle 100 stored in the vehicle 100.

**The following describes in detail that the electronic device applies for the digital vehicle key of the vehicle 100 and that the electronic device controls the vehicle 100 based on the digital vehicle key of the vehicle 100.**

**First, how the electronic device applies for the digital vehicle key of the vehicle 100 is described.**

**The user may perform an operation in the first application to apply for the digital vehicle key of the vehicle 100, the user may perform an operation in the second application to apply for the digital vehicle key of the vehicle 100, or the user may perform an operation on the vehicle to apply for the digital vehicle key of the vehicle 100.**

**A binding relationship is established between the second application and the vehicle 100, and the second application stores vehicle information of the vehicle 100.**

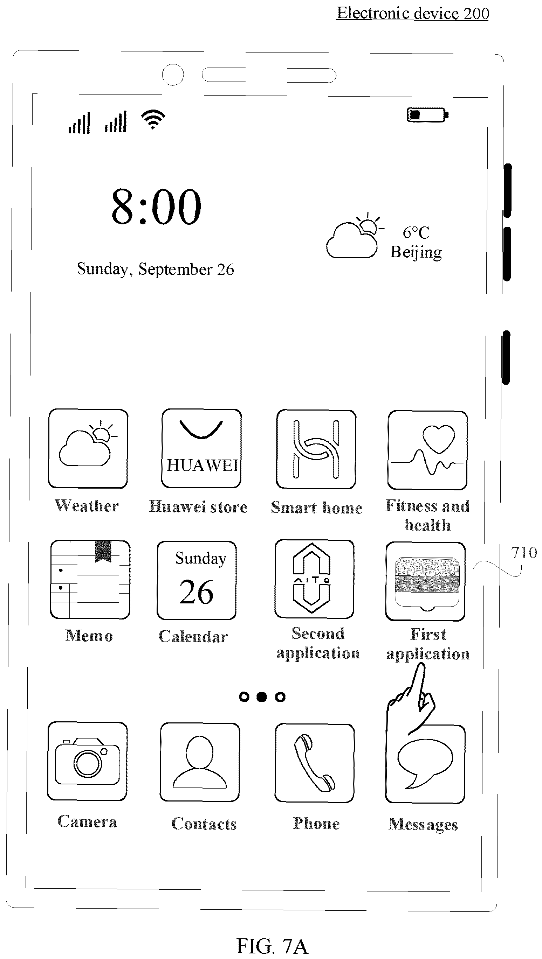

**FIG. 7A to FIG. 7L** **are diagrams in which the user performs an operation in the first application to apply for the digital vehicle key of the vehicle 100.**

In FIG. 7A to FIG. 7L, the first application needs to obtain the vehicle information of the vehicle 100 from the second application, and then obtains the digital vehicle key of the vehicle 100 by applying for the digital vehicle key of the vehicle 100 based on the vehicle information of the vehicle 100.

FIG. 7A shows a home screen 710 of the electronic device 200. The home screen 710 includes icons of a plurality of applications, for example, an icon of a weather application, an icon of an honor store application, an icon of a smart home application, an icon of a fitness and health application, an icon of a memo application, an icon of a calendar application, an icon of the second application, an icon of the first application, an icon of a camera application, an icon of a contacts application, an icon of a phone application, and an icon of a messages application. The home screen 710 further shows a power indicator, a weather indicator, a date indicator, a network signal indicator, a page indicator, and the like.

In some embodiments, the second application may be referred to as a vehicle owner application.

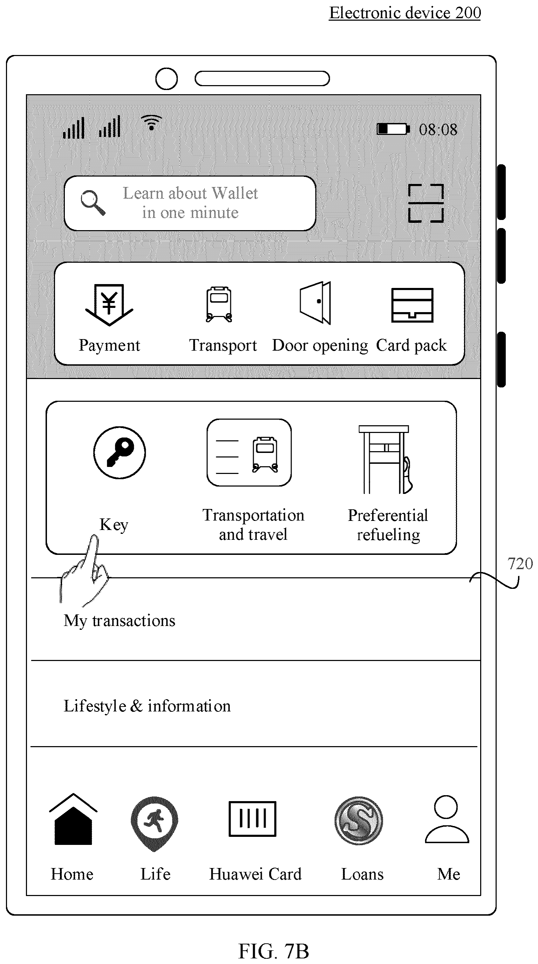

As shown in FIG. 7A, the electronic device 200 may receive an input operation (for example, tapping) of the user for the icon of the first application, and in response to the input operation of the user, the electronic device 200 may display a user interface 720 shown in FIG. 7B. The user interface 720 is a home screen of the first application.

As shown in FIG. 7B, the user interface 720 shows a plurality of options, for example, a payment option, a transport option, a door opening option, a card pack option, a key option, a transportation and travel option, a preferential refueling option, a my transactions option, and a lifestyle & information option. Different options correspond to different functions and features.

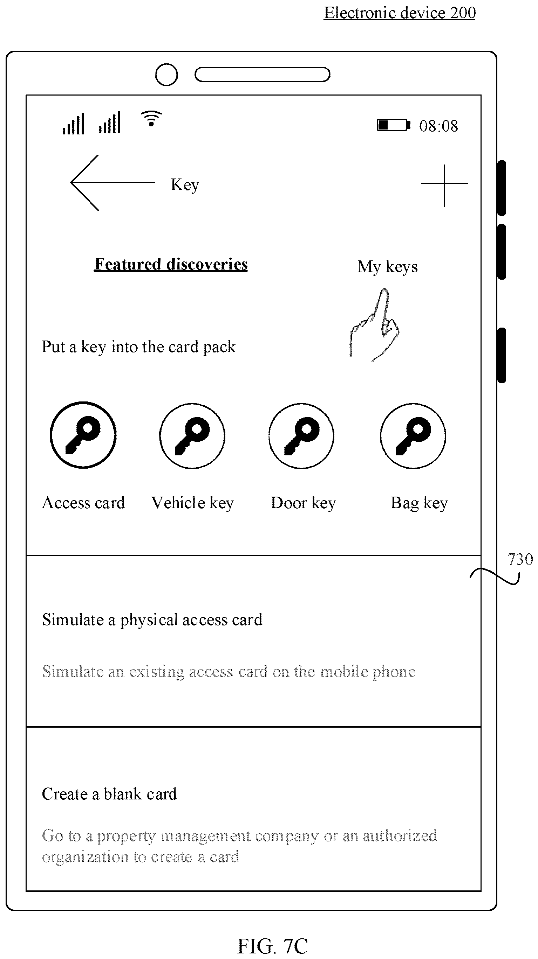

For example, as shown in FIG. 7B, the electronic device 200 may receive an input operation (for example, tapping) of the user for the key option in the user interface 720, and in response to the input operation of the user, the electronic device 200 may display a user interface 730 shown in FIG. 7C.

As shown in FIG. 7C, the user interface 730 shows a plurality of key options and a "my keys" option. The plurality of key options may be, for example, an access card option, a vehicle key option, a door key option, and a bag key option. The user may set digital keys of different objects in the user interface 730. For example, the user may set a digital key of a door by using the access card option. The user may set a digital key of a vehicle by using the vehicle key option. The user may set a digital key of a door lock by using the door key option. The user may set a digital key of a bag by using the bag key option. The user may view, by using the "my keys" option, digital keys of different objects set by the user.

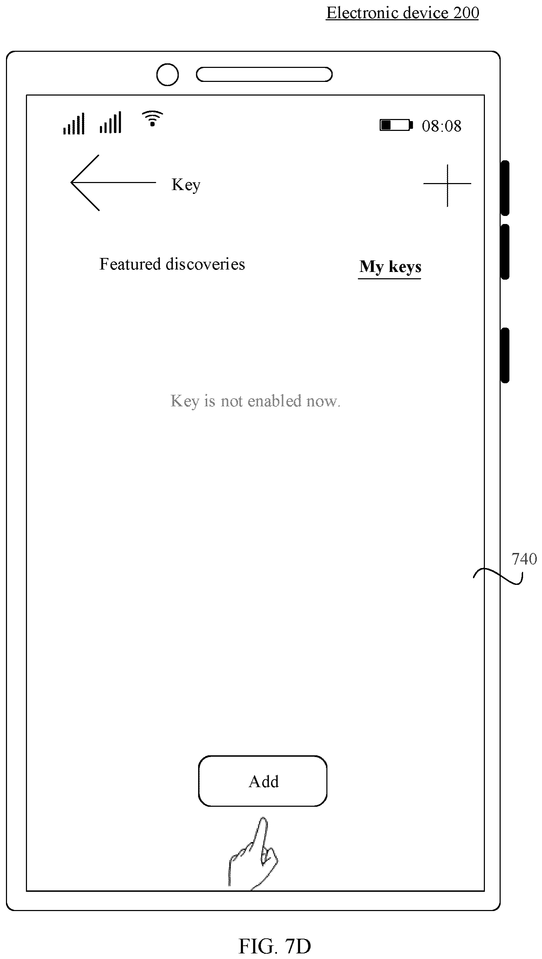

For example, as shown in FIG. 7C, the electronic device 200 may receive an input operation (for example, tapping) of the user for the "my keys" option in the user interface 730, and in response to the input operation of the user, the electronic device 200 may display a user interface 740 shown in FIG. 7D.

As shown in FIG. 7D, the user currently does not set a digital key. The user may add digital keys of different objects by using an add option in the user interface 740.

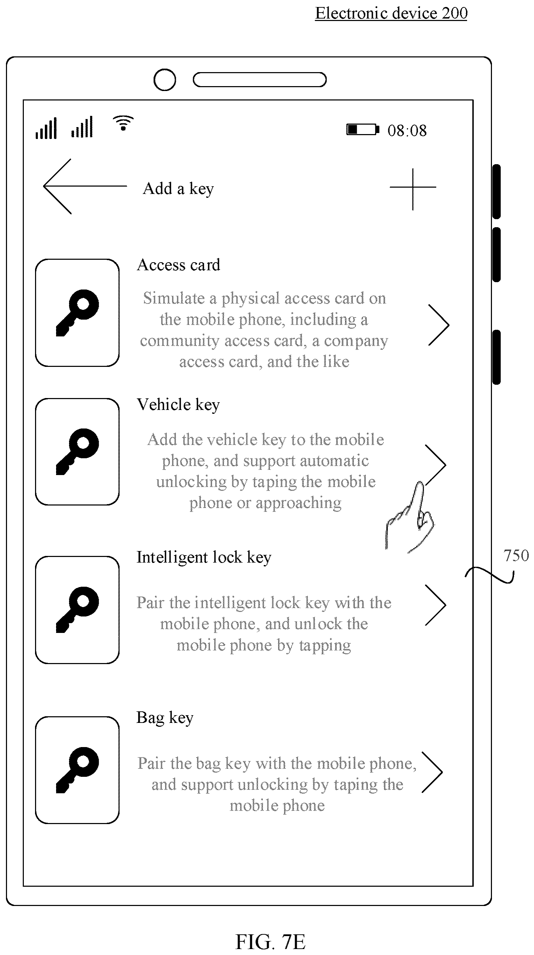

For example, as shown in FIG. 7D, the electronic device 200 may receive an input operation (for example, tapping) of the user for the add option in the user interface 740, and in response to the input operation of the user, the electronic device 200 may display a user interface 750 shown in FIG. 7E. The user interface 750 includes digital key setting options of a plurality of objects, for example, a digital key setting option of a door, a digital key setting option of a vehicle, a digital key setting option of an intelligent lock, and a digital key setting option of a bag.

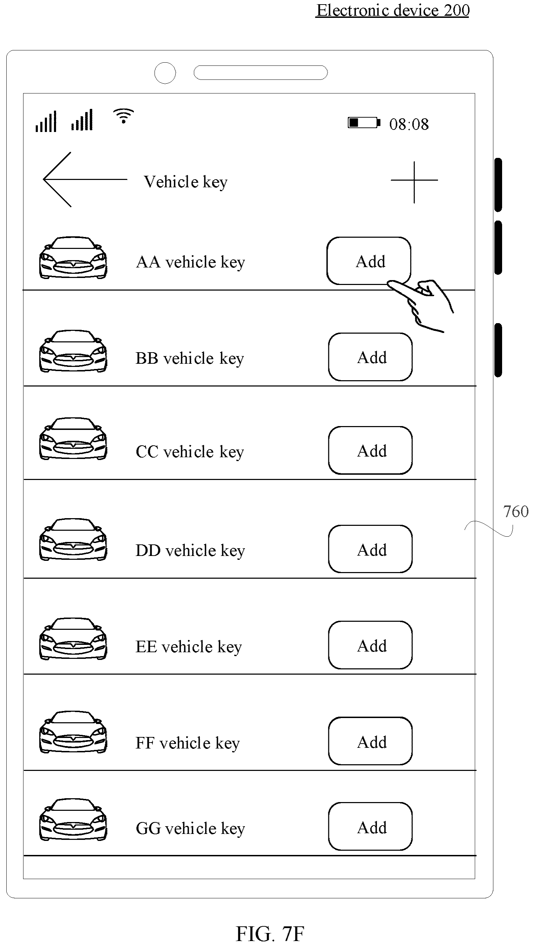

As shown in FIG. 7E, the electronic device 200 may receive an input operation (for example, tapping) of the user for the digital key setting option of the vehicle in the user interface 750, and in response to the input operation of the user, the electronic device 200 may display a user interface 760 shown in FIG. 7F. The user interface 760 shows digital key setting options of vehicles of different brands, for example, may include a digital key setting option of an AA vehicle, a digital key setting option of a BB vehicle, a digital key setting option of a CC vehicle, a digital key setting option of a DD vehicle, a digital key setting option of an EE vehicle, a digital key setting option of an FF vehicle, and a digital key setting option of a GG vehicle.

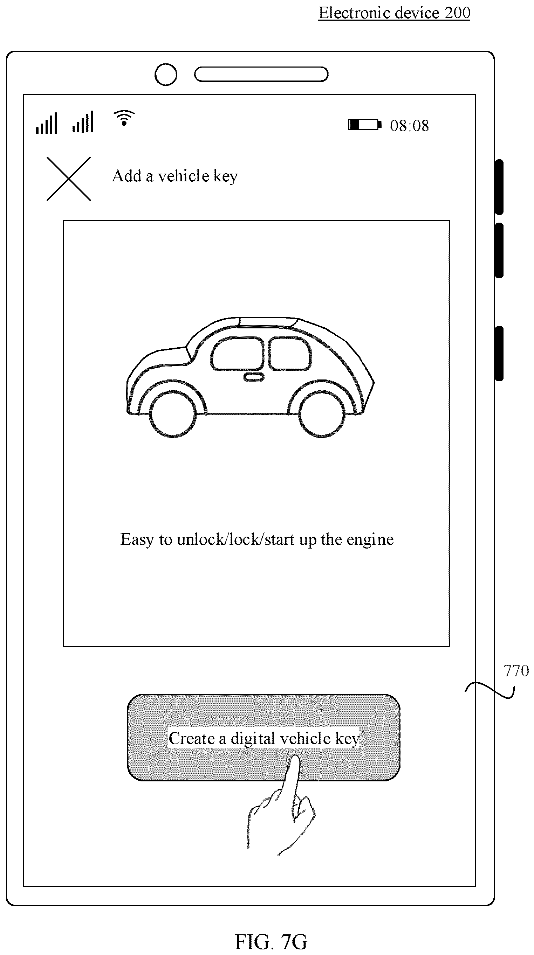

As shown in FIG. 7F, the electronic device 200 may receive an input operation (for example, tapping) of the user for the digital key setting option of the AA vehicle in the user interface 760, and in response to the input operation of the user, the electronic device 200 may display a user interface 770 shown in FIG. 7G. The user interface 770 may include a digital vehicle key creation option, and the user may create a digital vehicle key of the vehicle 100 by using the digital vehicle key creation option.

Before obtaining the digital vehicle key of the vehicle 100, the first application in the electronic device 200 needs to obtain vehicle information of the vehicle 100, and obtain the digital vehicle key of the vehicle 100 based on the vehicle information of the vehicle 100. The vehicle information of the vehicle 100 includes but is not limited to one or more of the following: vehicle identification number (or may also be referred to as vehicle identifier), vehicle model, vehicle license plate number, vehicle manufacturer, vehicle production date, vehicle engine model, and the like.

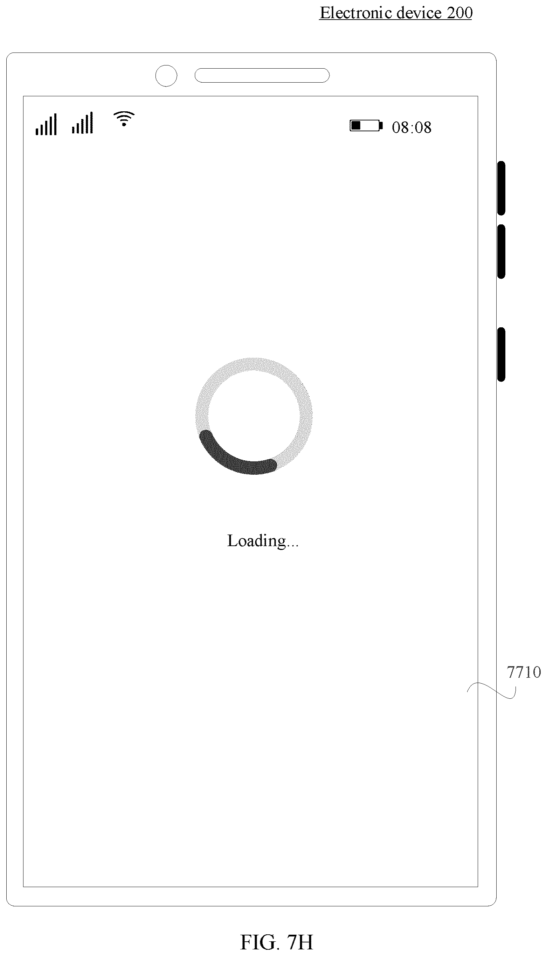

For example, as shown in FIG. 7G, the electronic device 200 may receive an input operation (for example, tapping) of the user for the digital vehicle key creation option in the user interface 770, and in response to the input operation of the user, the electronic device 200 may display a user interface 7710 shown in FIG. 7H. The user interface 7710 shows prompt information "loading", to inform the user that the electronic device 200 is obtaining the digital vehicle key of the vehicle 100.

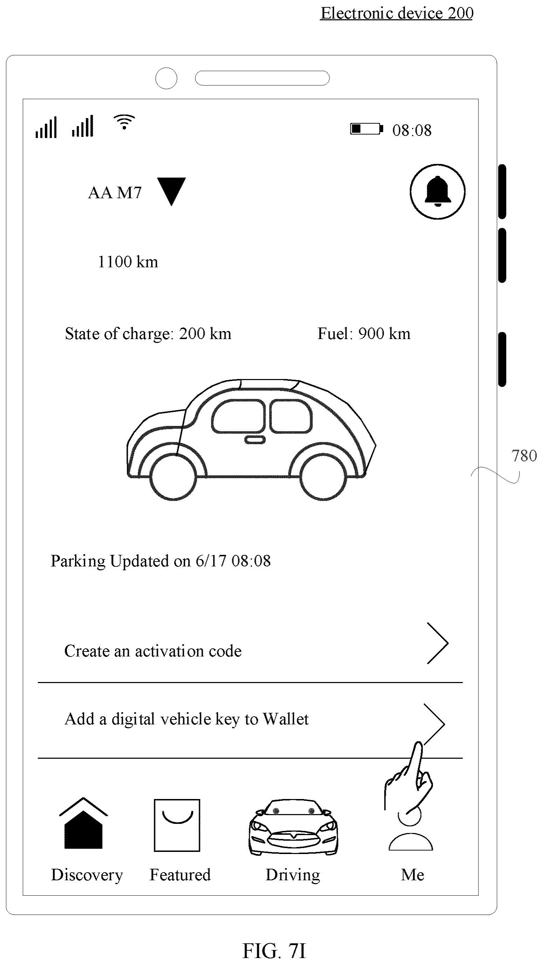

In an embodiment, the first application may jump to an interface of the second application. For example, the electronic device 200 may display a user interface 780 shown in FIG. 7I, and the user interface 780 may be a home screen of the second application. The user interface 780 may include traveling information of the vehicle 100. A name of the vehicle 100 may be "AA M7." For example, the traveling information of the vehicle 100 may include that a total traveling mileage is 1100 km, a remaining state of charge of the vehicle 100 can still be used for traveling 200 km, and a remaining fuel amount of the vehicle 100 can further be used for traveling 900 km. The user interface 780 further shows a plurality of options, for example, an activation code creation option and an option of adding a digital vehicle key to a wallet.

For example, as shown in FIG. 7I, the electronic device 200 may receive an input operation (for example, tapping) that is of the user and that is for adding the digital vehicle key to the wallet, and in response to the input operation of the user, the second application may send the vehicle information of the vehicle 100 to the first application, and the first application in the electronic device 200 may obtain the vehicle information of the vehicle 100.

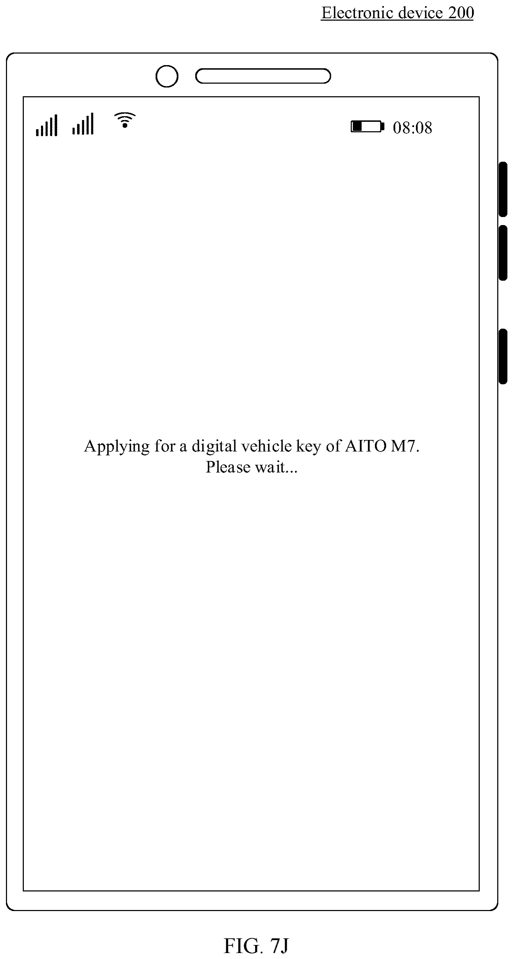

Optionally, in response to the input operation that is of the user and that is for adding the digital vehicle key to the wallet, the electronic device 200 may display prompt information "Applying for the digital vehicle key of AITO M7. Please wait" shown in FIG. 7J, to inform the user that the digital vehicle key of the vehicle 100 is being applied for. Alternatively, the electronic device 200 may not display the prompt information shown in FIG. 7J. This is not limited in this application either.

In another embodiment, after the electronic device 200 displays the user interface 780 shown in FIG. 7I, the electronic device 200 may not receive the input operation that is of the user and that is for adding the digital vehicle key to the wallet, and the electronic device 200 may obtain the vehicle information of the vehicle 100 from the second application. Then, the electronic device 200 jumps to the first application, and displays the prompt information shown in FIG. 7J, so that the first application can obtain the vehicle information of the vehicle 100.

In another embodiment, the first application may not jump to the interface of the second application. The first application may integrate a software development kit (software development kit, SDK) that is in the second application and that is used to store and obtain the vehicle information. The first application may obtain, by using the SDK of the second application, the vehicle information of the vehicle 100 stored in the second application.

After the first application obtains the vehicle information of the vehicle 100, the electronic device 200 may send the vehicle information of the vehicle 100 and device information of the electronic device 200 to a first application server by using the first application, and then the first application server sends the vehicle information of the vehicle 100 to a vehicle server. After the vehicle server receives the vehicle information of the vehicle 100 sent by the first application server, the vehicle server may generate a second digital vehicle key of the vehicle 100, and bind and store the device information of the electronic device 200 and the second digital vehicle key.

After generating the second digital vehicle key, the vehicle server sends the second digital vehicle key to the first application server, and then the first application server sends the second digital vehicle key to the first application.

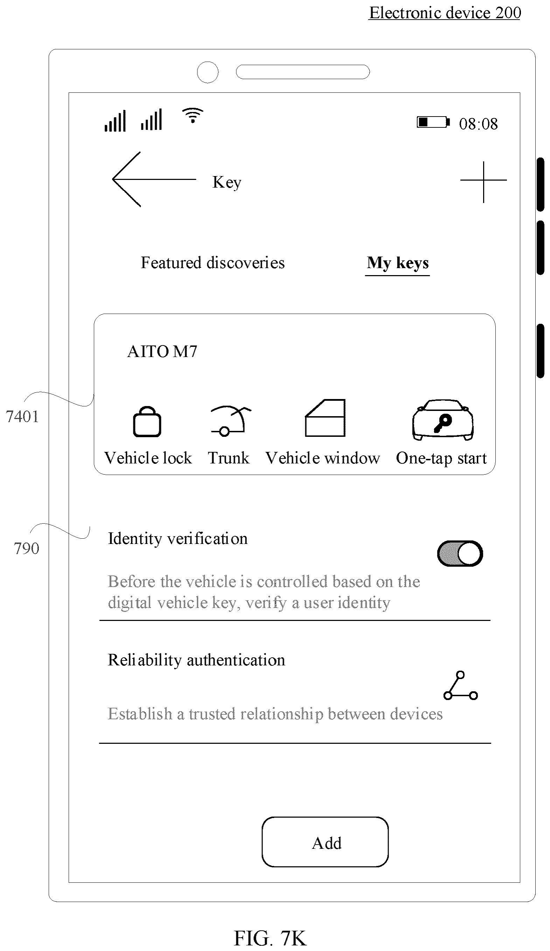

After the first application obtains the second digital vehicle key, a user interface 790 shown in FIG. 7K may be displayed on the first application. A widget 7401 is displayed in the user interface 790, and a vehicle identifier "AITO M7" is displayed on the widget 7401, to inform the user that the widget 7401 is a widget corresponding to the second digital vehicle key of the vehicle 100. A plurality of control options are further shown in the widget 7401, for example, a vehicle unlocking/locking option, a trunk opening/closing option, a vehicle window opening/closing option, and an engine startup/shutdown option. Only some control options of the vehicle 100 are shown in the widget 7401. The electronic device 200 may receive a sliding operation (for example, a rightward or leftward sliding operation) performed by the user on the widget 7401, and display another control option that is not displayed. The user interface 790 further shows an identity verification option and a reliability authentication option. The user may actively establish a trusted relationship with another device by using the reliability authentication option.

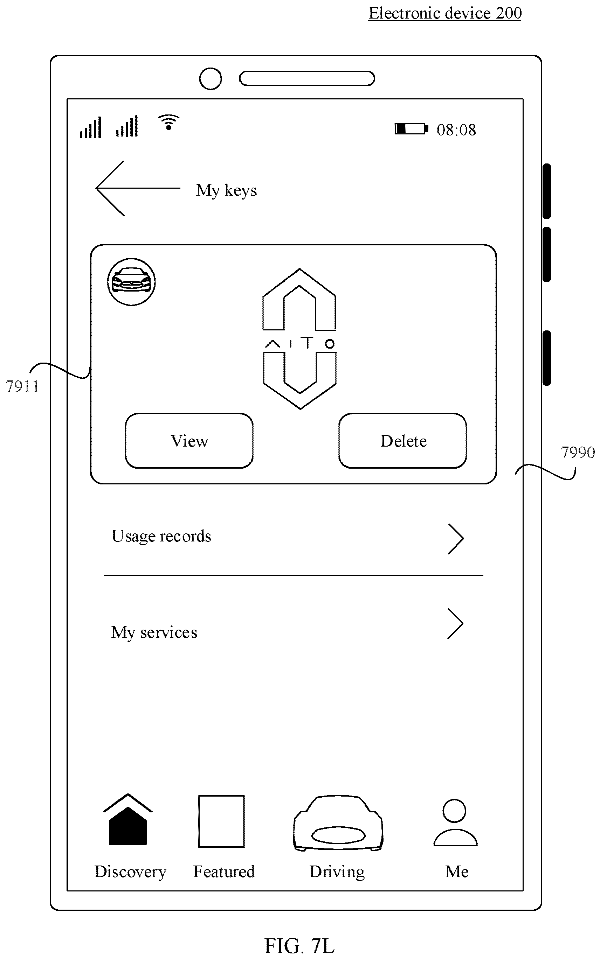

Optionally, after the first application obtains the second digital vehicle key, the first application may send a message to the second application, to indicate the second application that the first application has obtained the digital vehicle key of the vehicle 100. In response to the message sent by the first application, the electronic device 200 may display, in the second application, a user interface 7990 shown in FIG. 7L. The user interface 7990 includes a widget 7911, and the widget 7911 may include a view option and a delete option. The user may view detailed information, for example, application time and validity duration, of the second digital vehicle key by using the view option. The user may delete, by using the delete option, the second digital vehicle key stored in the electronic device 200.

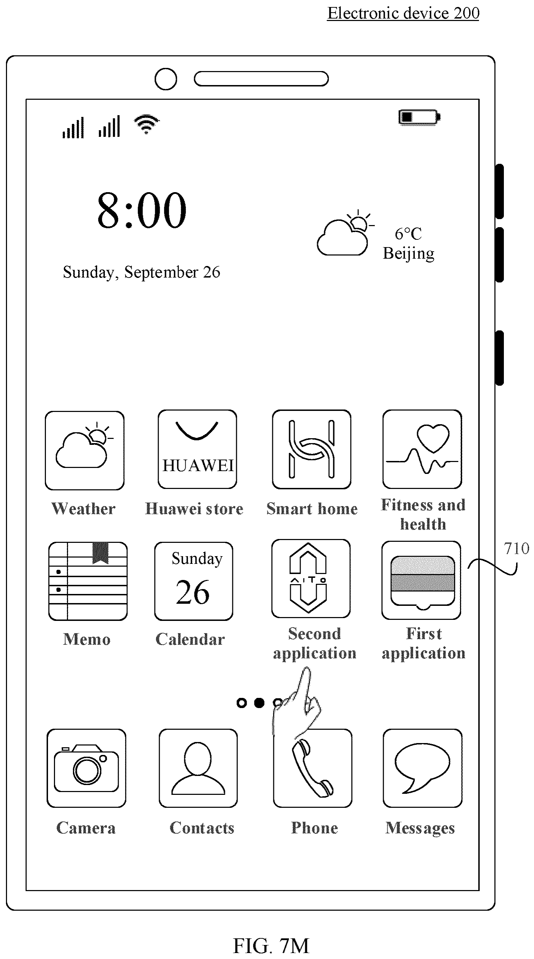

**FIG. 7M to FIG. 7P** **are other diagrams in which the user performs an operation in the first application to apply for the digital vehicle key of the vehicle 100.**

**In** FIG. 7M to FIG. 7P, the first application does not need to obtain the vehicle information of the vehicle 100 from the second application. However, an activation code needs to be obtained from the second application, and the activation code is used by the first application to obtain the digital vehicle key of the vehicle 100 by applying for the digital vehicle key of the vehicle 100.

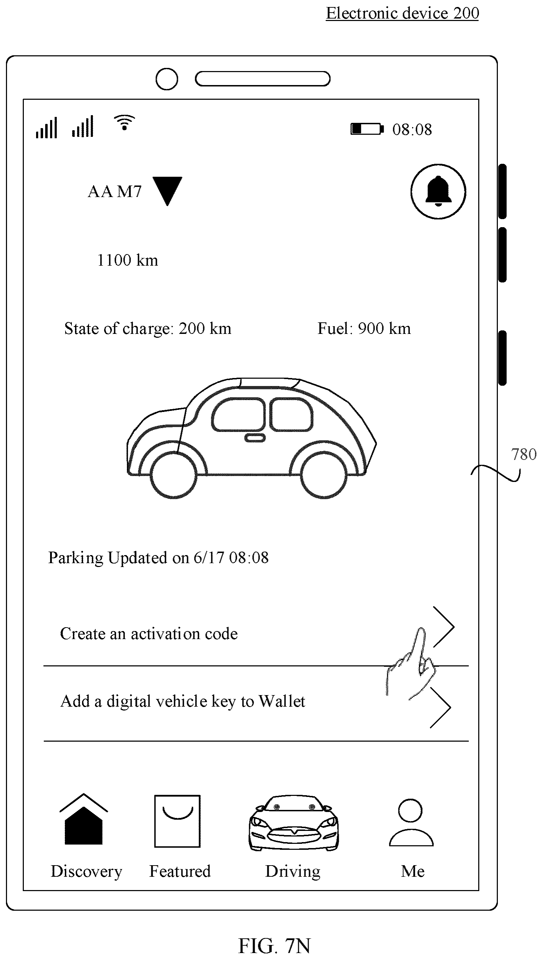

For example, as shown in FIG. 7M, the electronic device 200 may receive an input operation (for example, tapping) of the user for an application icon of the second application in the user interface 710, and in response to the input operation of the user, the electronic device 200 may display a user interface 780 shown in FIG. 7N, where the user interface 780 may be a home screen of the second application.

As shown in FIG. 7N, the electronic device 200 may receive an input operation of the user for the activation code creation option in the user interface 780, and in response to the input operation of the user, in a possible implementation, the second application may send an activation code application request to the vehicle server. After the vehicle server generates an activation code, the vehicle server sends the activation code to the second application, and the second application may obtain the activation code. In another possible implementation, the second application may randomly generate an activation code, and then send the activation code to the vehicle server.

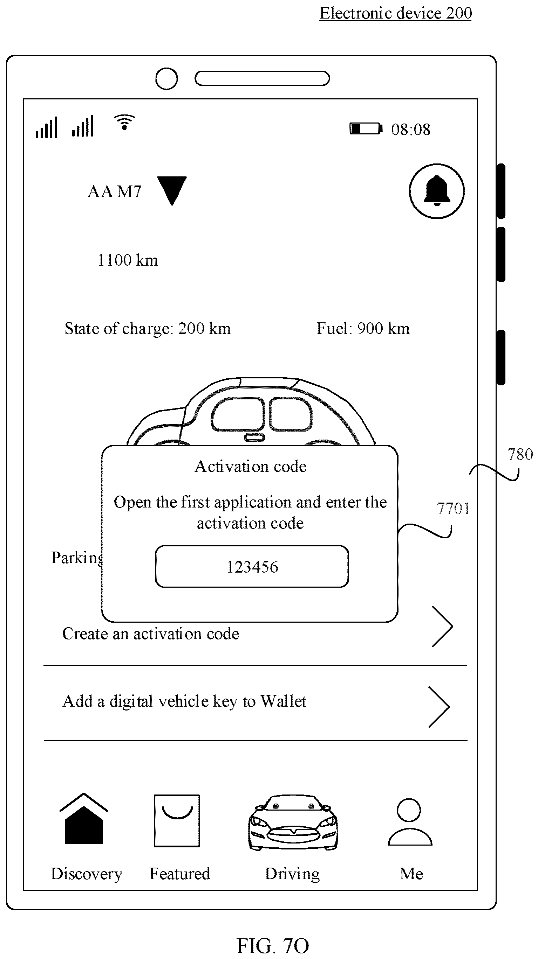

After the second application obtains the activation code, the electronic device 200 may display a window 7701 shown in FIG. 7O. An activation code 123456 is displayed on the window 7701. The user may enter the activation code in the first application, so that the first application can apply for the digital vehicle key of the vehicle 100 based on the activation code.

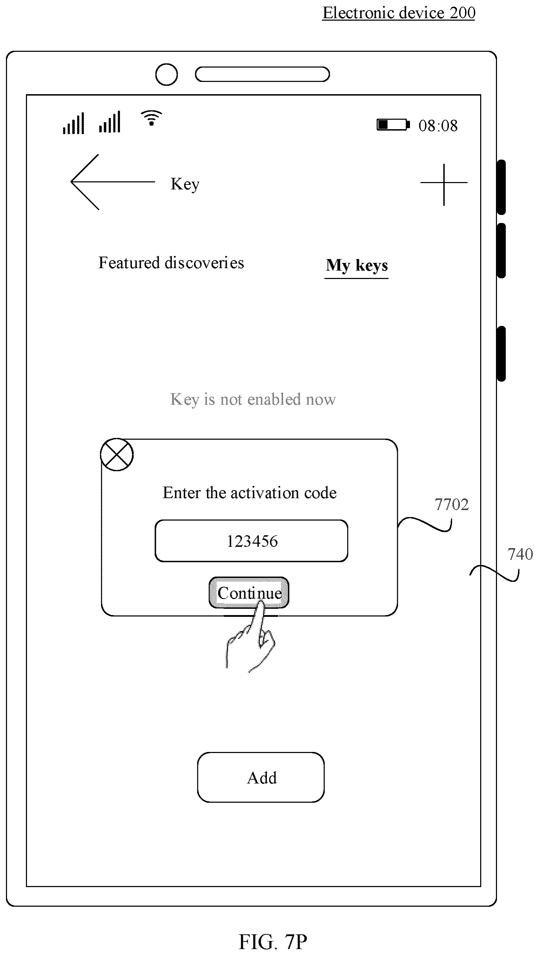

Refer to the descriptions in the embodiments in FIG. 7A to FIG. 7D. The electronic device 200 receives and responds to an input operation (for example, tapping) of the user for the add option in the user interface 740, and in response to the input operation of the user, the electronic device 200 may display a window 7702 shown in FIG. 7P, and the user may enter, in the window 7702, an activation code generated by the second application.

After the user enters, in the window 7702, the activation code generated by the second application, the electronic device 200 may receive an input operation (for example, tapping) of the user for a continue option in the window 7701. In response to the input operation of the user, the first application may send, to the vehicle server, the device information of the electronic device 200 and the activation code entered by the user. After the vehicle server receives the device information of the electronic device 200 and the activation code entered by the user that are sent by the first application, if the activation code entered by the user is the same as the activation code of the vehicle 100 generated by the vehicle server or the activation code of the vehicle 100 generated by the second application, the vehicle server may obtain the vehicle information of the vehicle 100, and generate the second digital vehicle key, and then the vehicle server sends the second digital vehicle key and the vehicle information of the vehicle 100 to the first application. The first application may store the second digital vehicle key and the vehicle information of the vehicle 100.

After the first application obtains the second digital vehicle key, a user interface 790 shown in FIG. 7K may be displayed on the first application. Optionally, the electronic device 200 may also display, in the second application, the user interface 7990 shown in FIG. 7L. Details are not described herein again in this application.

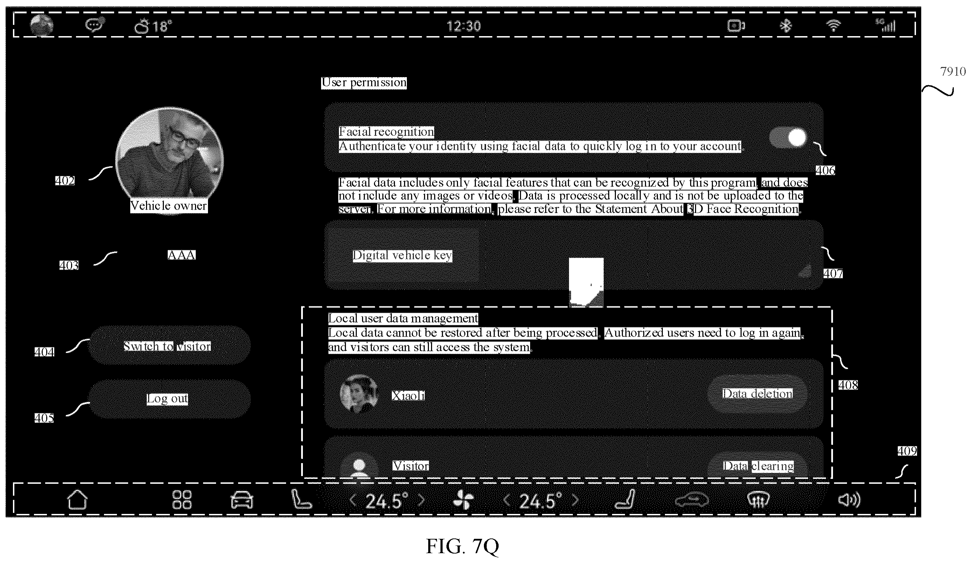

**FIG. 7Q to FIG. 7T** **are still other diagrams in which the user performs an operation in the first application to apply for the digital vehicle key of the vehicle 100.**

In the embodiments in FIG. 7Q to FIG. 7T, the first application does not need to obtain the vehicle information of the vehicle 100 from the second application either. A difference between the embodiments in FIG. 7Q to FIG. 7T and the embodiments in FIG. 7M to FIG. 7P lies in that, in the embodiments in FIG. 7Q to FIG. 7T, the first application obtains the activation code from the vehicle 100, and in the embodiments in FIG. 7M to FIG. 7P, the first application obtains the activation code from the second application.

For example, FIG. 7Q shows an example of a user interface 7910 displayed by the vehicle 100. The user interface 7910 may be provided by a vehicle management application in the vehicle 100. The user interface 7910 may be displayed by the vehicle 100 after the vehicle 100 receives a user operation performed on a vehicle management application icon on the home screen, or receives a user operation performed on a user avatar on the home screen, or receives another user operation.

A top status bar, a login profile picture 402, a login account 403, a control 404 used to switch an account, a control 405 used to log out, a control 406 used to start facial recognition, a control 407 used to generate the digital vehicle key of the vehicle 100, local data management information 408 of the user, and a bottom taskbar 409 are displayed in the user interface 7910.

The top status bar may include a profile picture corresponding to a currently logged-in user account of the vehicle 100, a message notification, a weather indicator, a time indicator, a state of charge status indicator, a Bluetooth indicator, one or more signal strength indicators of a Wi-Fi signal, one or more signal strength indicators of a mobile communication signal (which may also be referred to as a cellular signal), and the like.

The login profile picture 402 is a profile picture corresponding to a currently logged-in user account of the vehicle 100. Prompt information is further displayed on the login profile picture 402 in FIG. 7Q, indicating that a current login account is a vehicle owner account.

The user local data management information 408 is used to show local user data of the vehicle 100, for example, historical login account information, and may be further used to provide an entry for a user to delete some or all of the local user data.

The bottom taskbar 409 may include a control used to enter a home screen, a multi-task key, a seat adjustment control, an air conditioner temperature adjustment control, a volume adjustment control, and the like.

The control 407 is configured to listen to a user operation (for example, a touch operation or a tap operation). The vehicle 100 may display, in response to the user operation, one or more devices used to display a currently applied digital vehicle key.

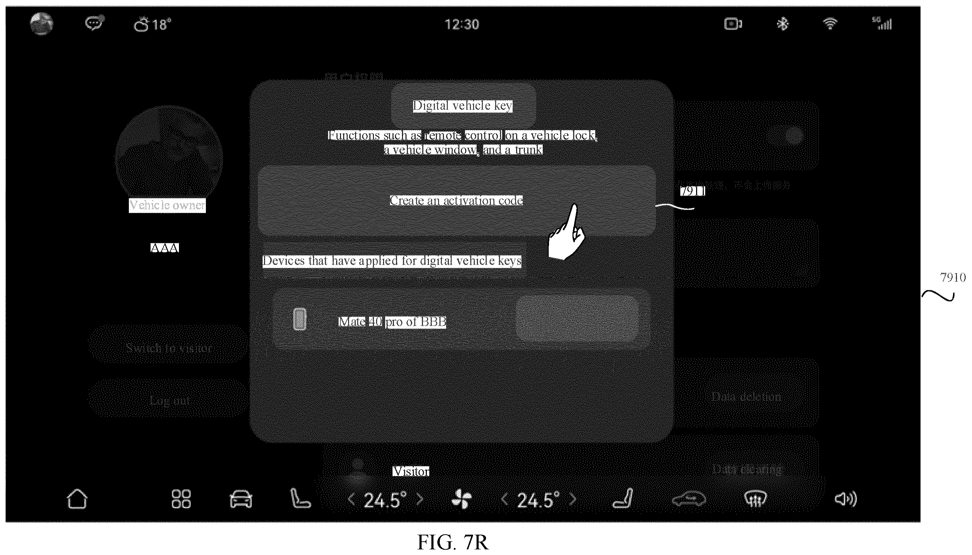

For example, as shown in FIG. 7Q, the vehicle 100 may receive an input operation (for example, tapping) of the user for the control 407, and in response to the input operation of the user, a window shown in FIG. 7R may be displayed on the vehicle 100. A quantity of devices that have applied for a digital vehicle key of the vehicle 100 and a device identifier are displayed in the window shown in FIG. 7R. An activation code creation option is further displayed in the window shown in FIG. 7R. The user may make, by using the activation code creation option, the vehicle 100 generate an activation code.

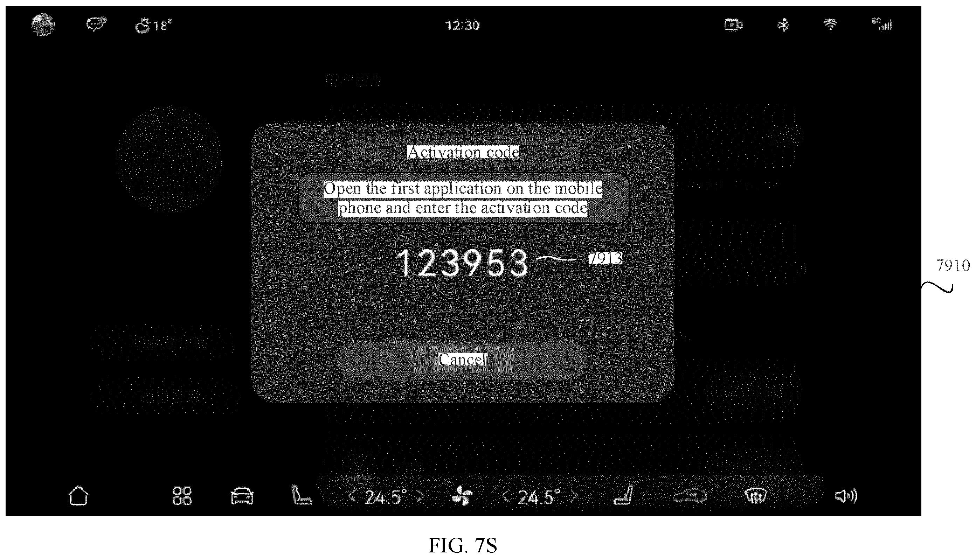

As shown in FIG. 7R, the vehicle 100 may receive an input operation (for example, tapping) of the user for the activation code creation option in the window shown in FIG. 7R, and in response to the input operation of the user, in a possible implementation, the vehicle 100 may send a request for applying for an activation code to the vehicle server. After the vehicle server generates the activation code, the vehicle server sends the activation code to the vehicle 100, and the vehicle 100 may obtain the activation code. In another possible implementation, the vehicle 100 may randomly generate an activation code, and then send the activation code to the vehicle server. After the vehicle 100 obtains the activation code, a window shown in FIG. 7S may be displayed on the vehicle 100. An activation code 7913 is shown in the window shown in FIG. 7S, and the activation code 7913 may be "123953". The window shown in FIG. 7S further shows prompt information "Open the first application on the mobile phone and enter the activation code".

In some embodiments, to ensure security of the digital vehicle key of the vehicle 100, the activation code 7913 shown in the window shown in FIG. 7S has specific time validity, and expires after display duration exceeds preset duration. After the activation code expires, the vehicle 100 may actively refresh the activation code and display a refreshed activation code on the display. Alternatively, the vehicle 100 may inform the user that the current activation code has expired and prompt the user to obtain a new activation code through refreshing.

After the vehicle 100 generates the activation code 7913, the vehicle 100 may send the activation code 7913 to the vehicle server.

Refer to the descriptions in the embodiments in FIG. 7A to FIG. 7D. The electronic device 200 receives and responds to an input operation (for example, tapping) of the user for the add option in the user interface 740, and in response to the input operation of the user, the electronic device 200 may display a window 7702 shown in FIG. 7P, and the user may enter, in the window 7702, an activation code generated by the vehicle 100.

After the user enters, in the window 7702, the activation code generated by the second application, the electronic device 200 may receive an input operation (for example, tapping) of the user for a continue option in the window 7701. In response to the input operation of the user, the first application may send, to the vehicle server, the device information of the electronic device 200 and the activation code entered by the user. After the vehicle server receives the device information of the electronic device 200 and the activation code entered by the user that are sent by the first application, if the activation code entered by the user is the same as the activation code of the vehicle 100 generated by the vehicle server or the activation code of the vehicle 100 generated by the vehicle 100, the vehicle server may obtain the vehicle information of the vehicle 100, and generate the second digital vehicle key, and then the vehicle server sends the second digital vehicle key and the vehicle information of the vehicle 100 to the first application. The first application may store the second digital vehicle key and the vehicle information of the vehicle 100.

After the first application obtains the second digital vehicle key, a user interface 790 shown in FIG. 7K may be displayed on the first application. Optionally, the electronic device 200 may also display, in the second application, the user interface 7990 shown in FIG. 7L. Details are not described herein again in this application.

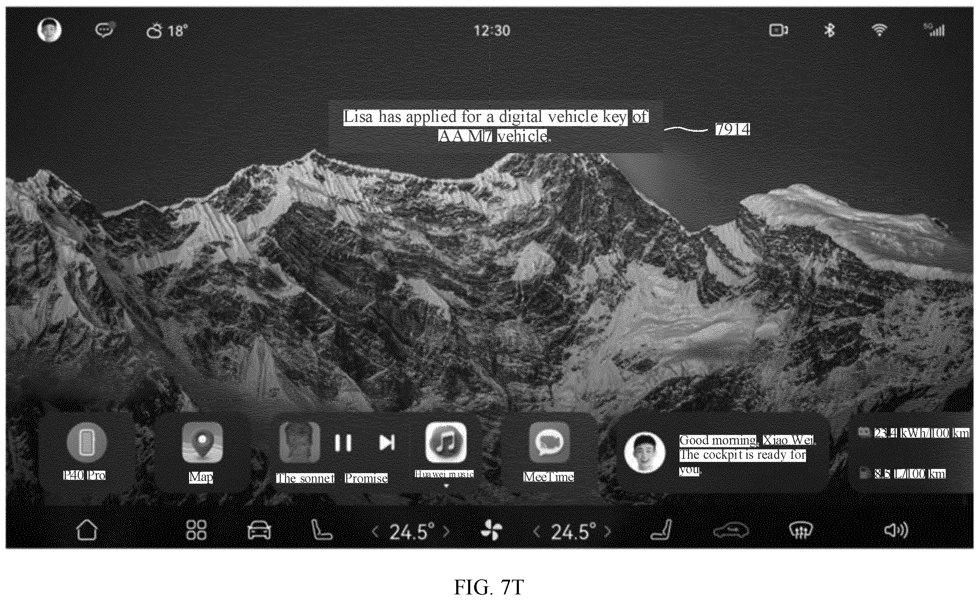

Optionally, after the first application in the electronic device 200 obtains the second digital vehicle key, the vehicle server may send a feedback message to the vehicle 100, to inform the vehicle 100 that the first application has obtained the second digital vehicle key. In response to the feedback message sent by the vehicle server, prompt information 7914 shown in FIG. 7T may be displayed on the vehicle 100. The prompt information 7914 may include "Lisa has applied for the digital vehicle key of AAM7 vehicle", to inform the user that the electronic device 200 has successfully applied for the digital vehicle key of the vehicle 100. Alternatively, the electronic device 200 may not display the prompt information 7914 shown in FIG. 7T. This is not limited in this application.

Optionally, in another implementation, the user may not enter the activation code 7913 in the first application, and the user may enable a near field communication (near field communication, NFC) function of the electronic device 200, and place the electronic device 200 close to an NFC sensing area of the vehicle 100. The vehicle 100 may send the activation code 7913 to the first application in the electronic device 200 through NFC. The vehicle 100 may alternatively send the activation code 7913 to the electronic device 200 in another manner. This is not limited in this application.

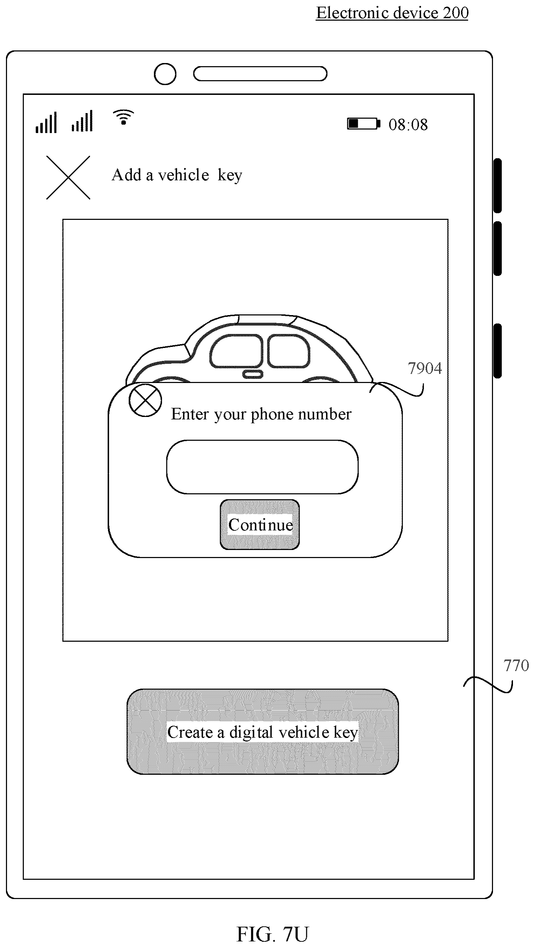

**FIG. 7U to FIG. 7W** **are yet other diagrams in which a user performs an operation in the first application to apply for the digital vehicle key of the vehicle 100.**

**In the** embodiments in FIG. 7U to FIG. 7W, the first application does not need to obtain the vehicle information of the vehicle 100 from the second application, and the first application does not need the user to enter an activation code either. The first application may prompt the user to enter identity information of the user, and the identity information of the user is bound to the vehicle information of the vehicle. The first application may obtain the digital vehicle key of the vehicle 100 by applying for the digital vehicle key of the vehicle 100 based on the identity information of the user entered by the user.

The identity information of the user includes but is not limited to any one of the following: a mobile phone number, an identity card number, and the like. In this embodiment of this application, the mobile phone number is used as an example for description. The identity information of the user may alternatively be other information. This is not limited in this application.

For example, refer to the descriptions in the embodiments in FIG. 7A to FIG. 7D. The electronic device 200 receives and responds to an input operation (for example, tapping) of the user for the add option in the user interface 740, and in response to the input operation of the user, the electronic device 200 may display a window 7904 shown in FIG. 7U, and the user may enter a mobile phone number of the user in the window 7702.

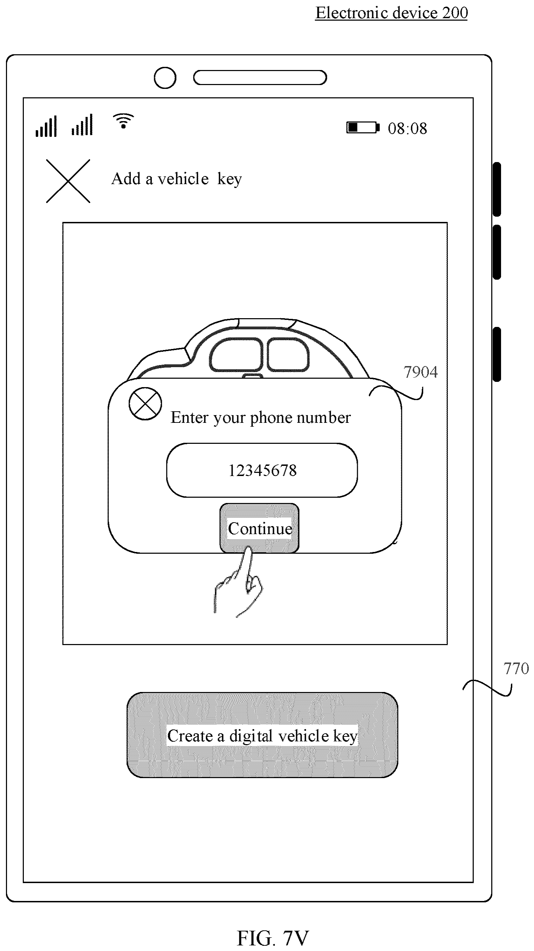

As shown in FIG. 7V, after the user enters the mobile phone number "12345678" of the user in the window 7702, the electronic device 200 may receive an input operation of the user for the continue option in the window 7701, and in response to the input operation of the user, the first application may send the mobile phone number of the user to the vehicle server.

Optionally, after the electronic device 200 receives the input operation of the user for the continue option in the window 7701, the electronic device 200 may prompt the user to enter an SMS verification code corresponding to the mobile phone number. When the SMS verification code is correctly entered, the first application sends the mobile phone number of the user to the vehicle server.

Optionally, after the electronic device 200 receives the input operation of the user for the continue option in the window 7701, the electronic device 200 may verify a user identity. A verification manner includes but is not limited to facial recognition, fingerprint recognition, voiceprint recognition, and the like. After the identity verification succeeds, the first application sends the mobile phone number of the user to the vehicle server.

After the vehicle server obtains the mobile phone number of the user sent by the first application, the vehicle server may determine, based on the mobile phone number of the user, vehicle information of one or more vehicles bound to the mobile phone number of the user.

When one vehicle is bound to the mobile phone number of the user, the vehicle server may obtain vehicle information of the vehicle (for example, the vehicle information of the vehicle 100), and the vehicle server generates a second digital vehicle key of the vehicle 100, and sends the second digital vehicle key and the vehicle information of the vehicle 100 to the first application.

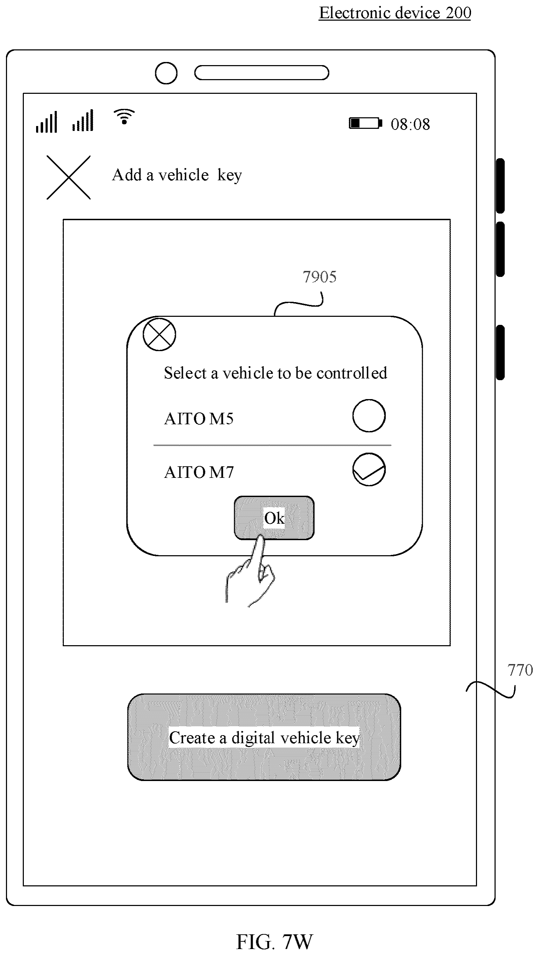

When more than one vehicle is bound to the mobile phone number of the user, the vehicle server may send identifiers of a plurality of vehicles to the first application, and the user selects a target vehicle from the plurality of vehicles. For example, when a quantity of vehicles bound to the mobile phone number of the user is greater than or equal to 2, the electronic device 200 may display prompt information 7905 shown in FIG. 7W. The prompt information 7905 may include vehicle identifiers of a plurality of vehicles, for example, a vehicle identifier of a vehicle "AITO M5" and a vehicle identifier of a vehicle "AITO M7". The user may select, from the plurality of vehicles, a vehicle for which a digital vehicle key needs to be currently applied for. For example, a vehicle identifier of the vehicle 100 may be "AITO M7".

For example, as shown in FIG. 7W, the electronic device 200 may receive a selection operation of the user for the vehicle identifier of "AITO M7". Then, the electronic device 200 receives an input operation (for example, tapping) of the user for a determining option in the prompt information 7905. In response to the input operation of the user, the first application sends the vehicle identifier of the vehicle 100 to the vehicle server. The vehicle server may obtain the vehicle information of the vehicle 100 based on the vehicle identifier of the vehicle 100. The vehicle server generates the second digital vehicle key of the vehicle 100, and sends the second digital vehicle key and the vehicle information of the vehicle 100 to the first application.

After the first application obtains the second digital vehicle key, a user interface 790 shown in FIG. 7K may be displayed on the first application. Optionally, the electronic device 200 may also display, in the second application, the user interface 7990 shown in FIG. 7L. Details are not described herein again in this application.

In another embodiment, the user may also perform an operation, in the second application, to apply for the digital vehicle key of the vehicle 100. Refer to the descriptions in the embodiments in FIG. 7M to FIG. 7N. The electronic device 200 may receive a user operation and display a user interface 780 shown in FIG. 7N. For example, as shown in FIG. 7I, the electronic device 200 may receive an input operation (for example, tapping) of the user for an option of adding the digital vehicle key to the wallet in the user interface 780, and in response to the input operation of the user, the second application may obtain the vehicle information of the vehicle 100, and send the vehicle information of the vehicle 100 to the first application. In addition, the electronic device 200 may jump to display the first application, and display prompt information shown in FIG. 7J. After the first application obtains the vehicle information of the vehicle 100 sent by the second application, the second application may obtain the second digital vehicle key of the vehicle 100 by applying for the second digital vehicle key of the vehicle 100 based on the vehicle information of the vehicle 100. For details, refer to the descriptions in the embodiments in FIG. 7J to FIG. 7L. Details are not described herein again in this application.

The electronic device 200 is not limited to obtaining the second digital vehicle key of the vehicle 100 in the foregoing manner, and the electronic device 200 may alternatively obtain the second digital vehicle key of the vehicle 100 in another manner. This is not limited in this application.

Optionally, this application is described by using an example in which the electronic device 200 obtains the digital vehicle key of the vehicle 100 by applying for the digital vehicle key of the vehicle 100. The electronic device 300 or another device may alternatively obtain the digital vehicle key of the vehicle 100 by applying for the digital vehicle key of the vehicle 100 in manners in FIG. 7A to FIG. 7U.

Optionally, for different devices, digital vehicle keys of the vehicle 100 generated by the vehicle server may be the same or may be different. This is not limited in this application.

Optionally, in some embodiments, the electronic device 300 may obtain the digital vehicle key of the vehicle 100 by applying for the digital vehicle key of the vehicle 100 in manners in FIG. 7A to FIG. 7W based on only the second application. This is not limited in this application.

When the electronic device 200 or the electronic device 300 obtains the digital vehicle key of the vehicle 100, the electronic device 200 or the electronic device 300 may receive an operation performed by the user in the first application, and control the vehicle 100 based on the digital vehicle key of the vehicle 100. The electronic device 200 or the electronic device 300 may also receive an operation performed by the user in the second application, and control the vehicle 100 based on the digital vehicle key of the vehicle 100. In the following embodiments of this application, an example in which a user performs an operation in the first application to control the vehicle 100 based on the digital vehicle key of the vehicle 100 is used for description.

**The following describes in detail the vehicle control method provided in this application with reference to an application scenario.**

**A plurality of devices of a same user control the vehicle 100.**

In some embodiments, a user may have a plurality of devices. For example, a user A has both the electronic device 200 and the electronic device 300. A trusted relationship has been established between the electronic device 200 and the electronic device 300 of the user A, and a communication connection may also be established between the electronic device 300 and the electronic device 200. When the user A approaches the vehicle 100 and needs to control the vehicle 100, the electronic device 200 first establishes a Bluetooth connection to the vehicle 100, and the electronic device 300 cannot continue to establish the Bluetooth connection to the vehicle 100. When the electronic device 200 is not disconnected from the vehicle 100, the user A may perform an operation on the electronic device 300 to initiate a first control instruction to the vehicle 100. When the communication connection is established between the electronic device 200 and the electronic device 300, the electronic device 200 and the electronic device 300 are mutually trusted devices, and both the electronic device 200 and the electronic device 300 apply for the digital vehicle key of the vehicle 100, the electronic device 300 may send the first control instruction to the electronic device 200, and then, the electronic device 200 sends the first control instruction to the vehicle 100 through the Bluetooth connection. The vehicle 100 receives the first control instruction and executes the first control instruction in response to the first control instruction. In this way, when a Bluetooth connection between a device and a vehicle is not disconnected, another device can send a vehicle control instruction through the Bluetooth channel between the device and the vehicle.

For example, when the electronic device 200 is a mobile phone of the user A, and the electronic device 300 is a watch of the user A, a trusted relationship has been established between the mobile phone of the user A and the watch of the user A. When the user A approaches the vehicle 100 and needs to control the vehicle 100, the mobile phone of the user A has established a Bluetooth connection to the vehicle 100, and it is inconvenient to take out the mobile phone of the user A when the mobile phone of the user A is placed in a backpack of the user A. In this case, the user A may perform an operation on the watch worn on the wrist, and initiate the first control instruction to the vehicle 100. The first control instruction may be sent to the vehicle 100 through a Bluetooth connection channel between the mobile phone of the user A and the vehicle 100. In this way, convenience of controlling the vehicle by the plurality of devices of the same user is greatly improved.

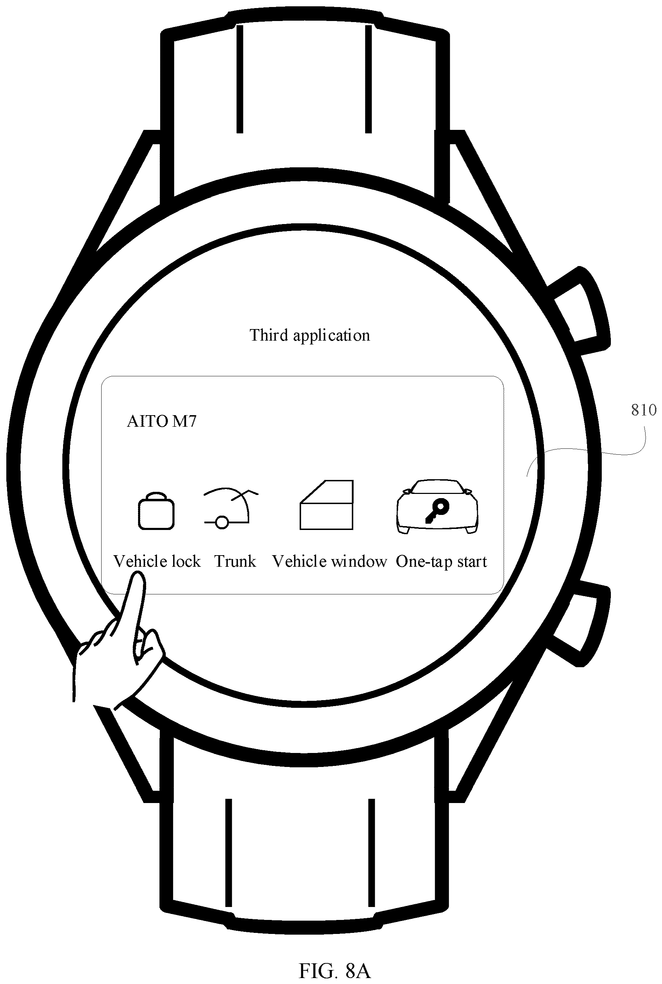

**FIG. 8A to FIG. 8E** **are diagrams of controlling a vehicle by the electronic device 300 by using the electronic device 200.**

For example, the electronic device 200 may be a mobile phone, and the electronic device 300 may be a watch.

A third application is installed on the electronic device 300, and a user may perform an operation on the third application to control the vehicle 100. The third application may be an application that is the same as or similar to the first application or the second application in the electronic device.

The electronic device 300 may receive an input operation (for example, tapping) of the user for an application icon of the third application, and in response to the input operation of the user, the electronic device 300 may display a user interface 810 shown in FIG. 8A.

When the electronic device 300 also applies for the digital vehicle key of the vehicle 100, a widget corresponding to the first digital vehicle key of the vehicle 100 is displayed in the user interface 810. An identifier "AITO M7" of the vehicle is displayed on the widget, to inform the user that the widget is a widget corresponding to the digital vehicle key of the vehicle 100. A plurality of control options are further shown in the widget, for example, a vehicle unlocking/locking option, a trunk opening/closing option, a vehicle window opening/closing option, and an engine startup/shutdown option. Only some control options of the vehicle 100 are shown in the widget. The electronic device 200 may receive a sliding operation (for example, a rightward or leftward sliding operation) performed by the user on the widget 7401, and display another control option that is not displayed.

In some embodiments, the electronic device 300 may obtain the first digital vehicle key of the vehicle 100 by applying for the first digital vehicle key of the vehicle 100 in manners in FIG. 7A to FIG. 7O.

In another embodiment, the electronic device 300 establishes a trusted relationship with the electronic device 200. After the electronic device 200 obtains the first digital vehicle key of the vehicle 100 by applying for the first digital vehicle key of the vehicle 100 in the manners in FIG. 7A to FIG. 7O, the electronic device 200 may synchronize the first digital vehicle key of the vehicle 100 and store the first digital vehicle key in the electronic device 300, and the electronic device 200 does not need to apply for the first digital vehicle key of the vehicle 100 in the manners in FIG. 7A to FIG. 7O. This reduces operations of the electronic device 300.

For example, as shown in FIG. 8A, the electronic device 300 may receive an input operation (for example, tapping) of the user for the vehicle unlocking/locking option in the user interface 810. In response to the input operation of the user, when the electronic device 300 does not establish a Bluetooth connection to the vehicle 100, the electronic device 300 may generate a first control instruction, and send vehicle information of the vehicle 100, key information of the first digital vehicle key, and the first control instruction to the electronic device 200.

Optionally, in some embodiments, after the electronic device 300 may receive the input operation of the user for the vehicle unlocking/locking option in the user interface 810, the electronic device 300 may verify a user identity, and perform a subsequent operation when identity verification succeeds. This improves security of controlling the vehicle 100 by the electronic device 300 by using the digital vehicle key.

Optionally, before the user performs an operation, in the third application, to control the vehicle 100 by using the digital vehicle key, the electronic device 300 may receive a user operation and enable an identity verification function in the third application. After the identity verification function is enabled, and the electronic device 300 receives the input operation of the user for the vehicle unlocking/locking option in the user interface 810, the electronic device 300 may verify a user identity. In another embodiment, if the identity verification function in the third application is disabled, after the electronic device 300 receives the input operation of the user for the vehicle unlocking/locking option in the user interface 810, the electronic device 300 may not verify the user identity.

Optionally, the electronic device 300 may alternatively need to verify the user identity by default. This is not limited in this application.

Optionally, an identity verification manner may include but is not limited to a manner of facial recognition, fingerprint recognition, voiceprint recognition, password matching, or the like.

After the electronic device 200 receives the vehicle information of the vehicle 100, the key information of the first digital vehicle key, and the first control instruction that are sent by the electronic device 300, the electronic device 200 may determine, based on the vehicle information of the vehicle 100, whether the electronic device 200 applies for the digital vehicle key of the vehicle 100. For example, the electronic device 200 determines that the electronic device 200 applies for a second digital vehicle key of the vehicle 100. When a key type of the second digital vehicle key is the same as a key type of the first digital vehicle key, the electronic device 200 may encrypt the first control instruction based on the second digital vehicle key, to obtain an encrypted first control instruction. Then, the electronic device 200 sends the encrypted first control instruction and device information of the electronic device 200 to the vehicle 100 through a Bluetooth connection. After the vehicle 100 receives the encrypted first control instruction and the device information of the electronic device 200, the vehicle 100 may obtain the second digital vehicle key based on the device information of the electronic device 200, decrypt the encrypted first control instruction based on the second digital vehicle key to obtain the first control instruction, and execute the first control instruction, for example, unlocking the vehicle 100. In this way, the electronic device 300 controls the vehicle 100 by using the electronic device 200.

Optionally, in some embodiments, after the electronic device 200 receives the vehicle information of the vehicle 100, the key information of the first digital vehicle key, and the first control instruction that are sent by the electronic device 300, the electronic device 200 may also verify the user identity, and perform a subsequent operation when identity verification succeeds. This improves security of controlling the vehicle 100 by the electronic device 200 by using the digital vehicle key.

Optionally, before the electronic device 200 receives the vehicle information of the vehicle 100, the key information of the first digital vehicle key, and the first control instruction that are sent by the electronic device 300, the electronic device 200 may receive a user operation and enable the identity verification function. After the identity verification function is enabled, and the electronic device 200 receives the vehicle information of the vehicle 100, the key information of the first digital vehicle key, and the first control instruction that are sent by the electronic device 300, the electronic device 300 may verify the user identity. In another embodiment, if the identity verification function is disabled, after the electronic device 200 receives the vehicle information of the vehicle 100, the key information of the first digital vehicle key, and the first control instruction that are sent by the electronic device 300, the electronic device 200 may not verify the user identity.

Optionally, the electronic device 200 may alternatively need to verify the user identity by default. This is not limited in this application.

Optionally, an identity verification manner may include but is not limited to a manner of facial recognition, fingerprint recognition, voiceprint recognition, password matching, or the like.

Optionally, after the electronic device 200 receives the vehicle information of the vehicle 100, the key information of the first digital vehicle key, and the first control instruction that are sent by the electronic device 300, when the electronic device 200 needs to verify the user identity, the electronic device 200 has established a trusted relationship with the electronic device 300, and the electronic device 200 may also verify the user identity by using the electronic device 300.

After the vehicle 100 executes the first control instruction, the vehicle 100 may send a feedback message to the electronic device 200 through the Bluetooth connection. Then, the electronic device 200 sends the feedback message to the electronic device 300, to inform the user A that the user A has successfully controlled the vehicle 100 by using the electronic device 300.

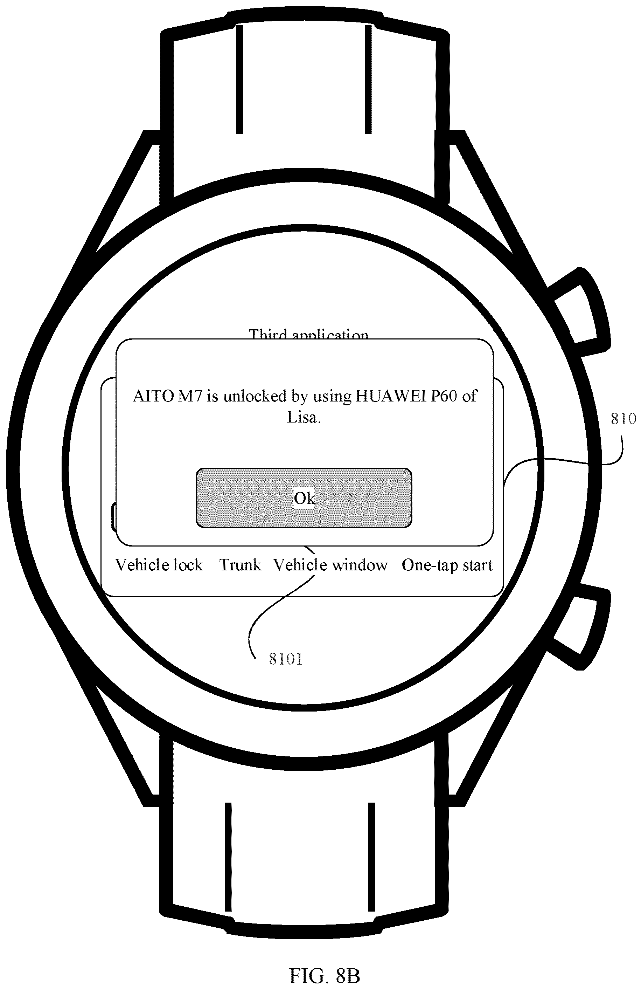

Optionally, after the electronic device 300 receives the feedback message sent by the electronic device 200, the electronic device 300 may display prompt information 8101 shown in FIG. 8B. The prompt information 8101 may include a text "AITO M7 is unlocked by using "HUAWEI P60 of Lisa". The prompt information 8101 is used to inform the user that the user A has successfully controlled the vehicle 100 by using the electronic device 200.

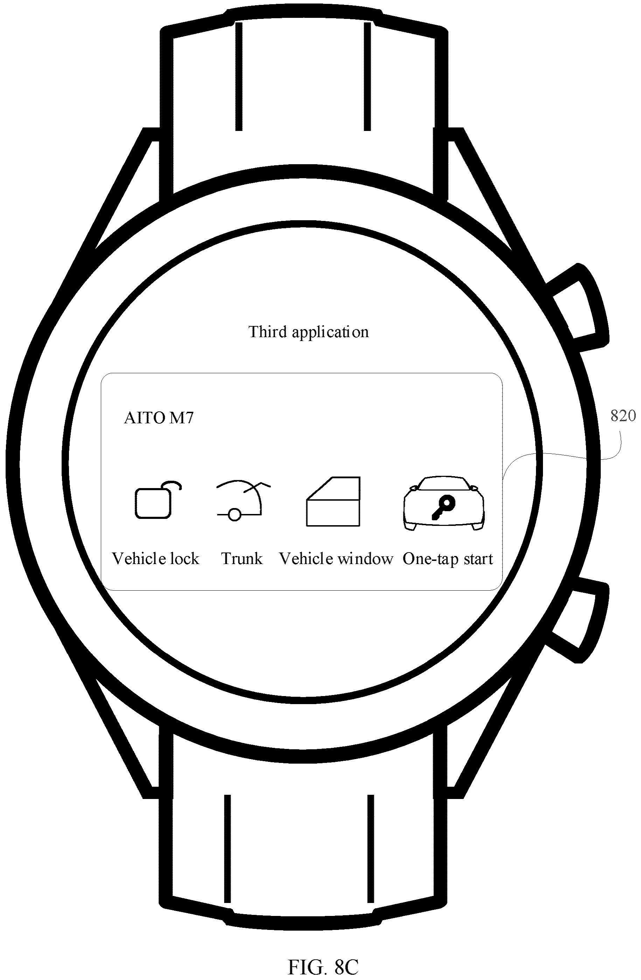

Optionally, after the electronic device 300 receives the feedback message sent by the electronic device 200, the electronic device 300 may also display a user interface 820 shown in FIG. 8C. The user interface 820 is similar to the user interface 810. A difference lies in that the electronic device 300 changes a display form of the vehicle unlocking/locking option, to inform the user that the vehicle 100 is currently in an unlocked state.

In some embodiments, after the electronic device 300 may receive the input operation of the user for the vehicle unlocking/locking option in the user interface 810, when the electronic device 300 establishes the Bluetooth connection to the vehicle 100, the electronic device 300 may directly control the vehicle 100 based on the first digital vehicle key obtained by applying for the first digital vehicle key. Specifically, the electronic device 300 may encrypt the first control instruction based on the first digital vehicle key, to obtain an encrypted second control instruction, and send the encrypted second control instruction and device information of the electronic device 300 to the vehicle 100 through the Bluetooth connection. After the vehicle 100 receives the encrypted second control instruction and the device information of the electronic device 300, the vehicle 100 may obtain the first digital vehicle key based on the device information of the electronic device 300, decrypt the encrypted second control instruction based on the first digital vehicle key to obtain the first control instruction, and execute the first control instruction, for example, unlocking the vehicle 100. In this way, the electronic device 300 directly controls the vehicle 100 by using the first digital vehicle key.

After the vehicle 100 executes the first control instruction, the vehicle 100 may send a feedback message to the electronic device 300 through the Bluetooth connection, to inform the user A that the user A has successfully controlled the vehicle 100 by using the electronic device 300.

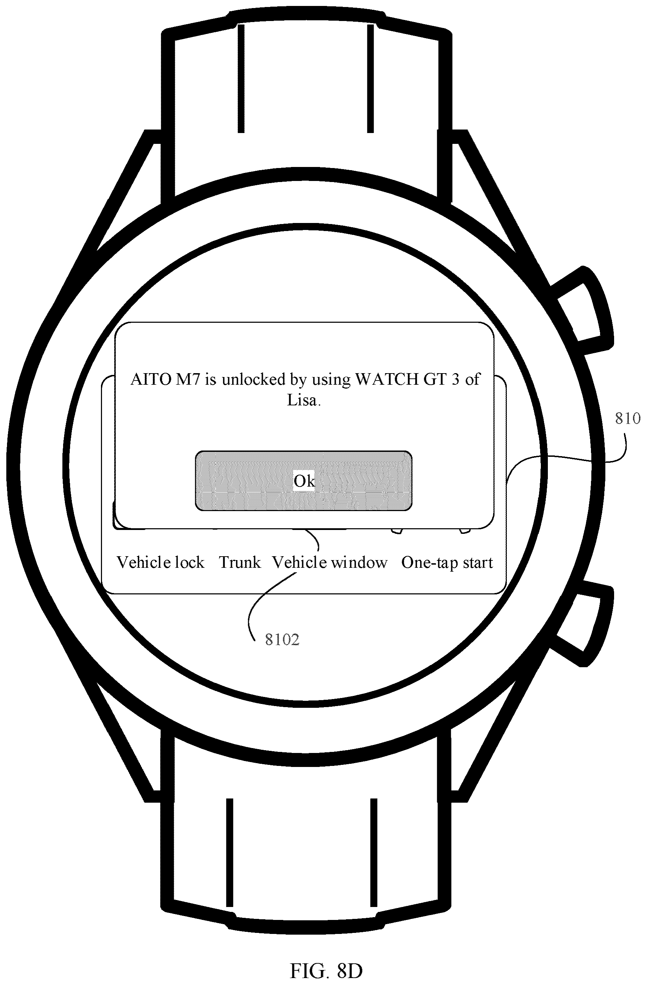

Optionally, after the electronic device 300 receives the feedback message sent by the vehicle 100, the electronic device 300 may display prompt information 8102 shown in FIG. 8D. The prompt information 8102 may include a text "AITO M7 is unlocked by using "WATCH GT 3 of Lisa". The prompt information 8102 is used to inform the user that the user A has successfully controlled the vehicle 100 by using the electronic device 300.

Optionally, the prompt information shown in FIG. 8D is different from the prompt information shown in FIG. 8C, to prompt the user of a device through which the electronic device 300 controls the vehicle 100. In another embodiment, the prompt information shown in FIG. 8D may alternatively be the same as the prompt information shown in FIG. 8C. This is not limited in this application.

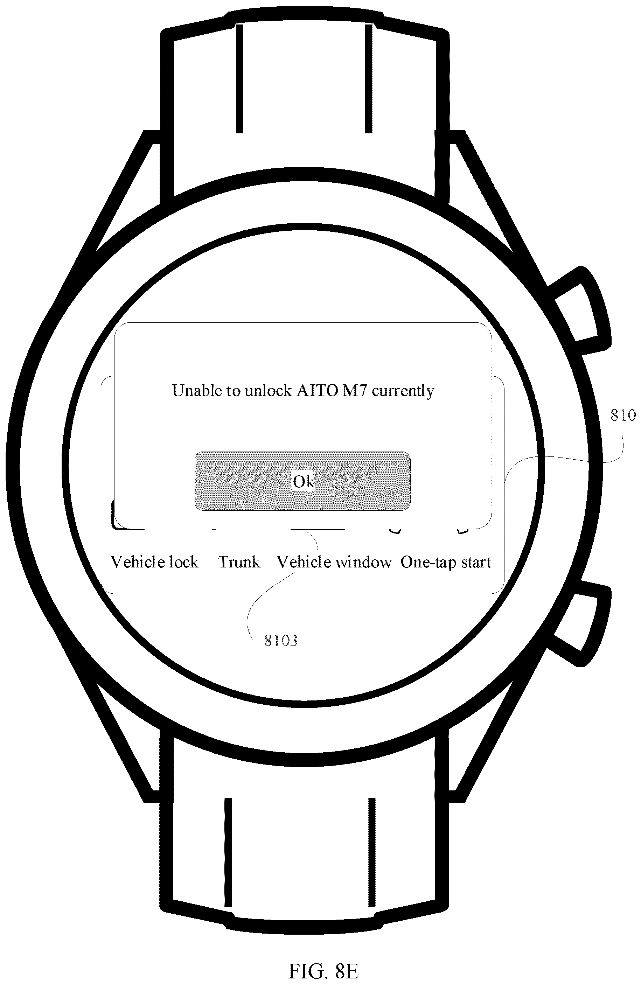

In some embodiments, after the electronic device 300 may receive the input operation of the user for the vehicle unlocking/locking option in the user interface 810, if no communication connection is established between the electronic device 300 and the electronic device 200, and the electronic device 300 cannot control the vehicle 100 by using the electronic device 200, the electronic device 300 may display prompt information 8103 shown in FIG. 8E. The prompt information 8103 is used to inform the user that controlling cannot be currently performed on the vehicle 100.

In some embodiments, after the electronic device 200 receives the vehicle information of the vehicle 100, the key information of the first digital vehicle key, and the first control instruction that are sent by the electronic device 300, and no Bluetooth connection is established between the electronic device 200 and the vehicle 100, or after the electronic device 200 receives the vehicle information of the vehicle 100, the key information of the first digital vehicle key, and the first control instruction that are sent by the electronic device 300, and the electronic device 300 determines that the electronic device 300 has not applied for the digital vehicle key of the vehicle 100, or after the electronic device 200 receives the vehicle information of the vehicle 100, the key information of the first digital vehicle key, and the first control instruction that are sent by the electronic device 300, and when the electronic device 200 determines that a type of the digital vehicle key that is of the vehicle 100 and that is applied for by the electronic device 200 is different from a type of the digital vehicle key that is of the vehicle 100 and that is applied for by the electronic device 300, the electronic device 200 may send a feedback message to the electronic device 300, where the feedback message indicates that controlling cannot be currently performed on the vehicle 100. For example, after the electronic device 300 receives the feedback message sent by the electronic device 200, the electronic device 300 may also display the prompt information 8103 shown in FIG. 8E. The prompt information 8103 is used to inform the user that controlling cannot be currently performed on the vehicle 100.

FIG. 9A-1 to FIG. 9A-3 are a flowchart of a method for controlling the vehicle 100 by the electronic device 300 by using the electronic device 200.

Optionally, the electronic device 200 may be referred to as a first electronic device, the electronic device 300 may be referred to as a second electronic device, and the vehicle 100 may be referred to as a first vehicle.

S901: The electronic device 300 and the electronic device 200 establish a trusted communication connection.

For example, the electronic device 300 may be a watch, and the electronic device 200 may be a mobile phone.

The electronic device 300 may establish the trusted relationship with the electronic device 200 in, but not limited to, the following manners.

Manner 1: The electronic device 200 establishes a trusted relationship with the electronic device 300 through code scanning.

For example, as shown in FIG. 9B, the electronic device 300 may display a QR code image 9001, and the electronic device 200 may scan the QR code image 9001 by using a camera, to establish a trusted relationship with the electronic device 300.

Manner 2: The electronic device 200 and the electronic device 300 establish a trusted relationship by logging in to a same user account.

When the electronic device 300 and the electronic device 200 are a plurality of devices of a same user, a first user account is logged in to the electronic device 200, and the user may also log in to a first account on the electronic device 300. The electronic device 200 to which the first user account is logged in and the electronic device 300 are in a trusted relationship.

Manner 3: The electronic device 200 and the electronic device 300 log in to different user accounts, and the different user accounts are associated with each other. In this case, the electronic device 200 and the electronic device 300 are in a trusted relationship.

When the electronic device 300 and the electronic device 200 are a plurality of devices of different users or a same user, a first user account is logged in to the electronic device 200, and a second user account is logged in to the electronic device 300. The first user account is different from the second user account, but an association relationship is established between the first user account and the second user account. For example, if the electronic device 200 and the electronic device 300 are two devices of different family members in a family, the electronic device 200 and the electronic device 300 are in a trusted relationship.

In addition to the foregoing manner of determining the trusted relationship, the electronic device 200 and the electronic device 300 may alternatively establish the trusted relationship in another manner. This is not limited in this application.

A communication connection between the electronic device 300 and the electronic device 200 may be any one of a Bluetooth connection, a network connection, or a server connection. The communication connection between the electronic device 300 and the electronic device 200 may alternatively be in another manner. This is not limited in this application.

Optionally, the trusted relationship between the electronic device 200 and the electronic device 300 may be periodically/irregularly authenticated. A sequence of trusted relationship authentication and communication relationship establishment between the electronic device 200 and the electronic device 300 is not limited in this application.

Optionally, the communication connection between the electronic device 200 and the electronic device 200 may be referred to as a first communication connection. The first communication connection may be any one of a Bluetooth connection, a network connection, or a server connection. The first communication connection may alternatively be another connection. This is not limited in this application.

For example, when a distance between a location of the electronic device 300 and a location of the electronic device 200 is a preset distance, a Bluetooth connection, a network connection, or a server connection may be established between the electronic device 300 and the electronic device 200, and the electronic device 300 and the electronic device 200 may communicate with each other through the Bluetooth connection, the network connection, or the server connection. The electronic device 300 and the electronic device 200 further need to determine whether the electronic device 300 and the electronic device 200 are mutually trusted devices. In a possible implementation, the electronic device 300 and the electronic device 200 may separately send, to a server, account IDs of user accounts logged in to the respective devices, and the server may determine a relationship between the two user accounts based on the account IDs of the user accounts sent by the electronic device 300 and the electronic device 200. If the account IDs of the two user accounts are the same or are associated with each other, the server may determine that the electronic device 200 and the electronic device 300 are in a trusted relationship. The server may separately send a message to the electronic device 200 and the electronic device 300, to inform the electronic device 200 and the electronic device 300 that the electronic device 200 and the electronic device 300 are in a trusted relationship. In another possible implementation, the electronic device 300 may send, to the electronic device 200, an account ID of a user account that is logged in to the electronic device 300, the electronic device 200 may obtain an account ID of a user account that is logged in to the electronic device 200, and the electronic device 200 may determine a relationship between the two user accounts. If the account IDs of the two user accounts are the same or are associated with each other, the electronic device 200 may determine that the electronic device 200 and the electronic device 300 are in a trusted relationship. The electronic device 200 may send a message to the electronic device 300, to inform the electronic device 300 that the electronic device 200 and the electronic device 300 are in a trusted relationship. In another possible implementation, the electronic device 200 may alternatively send, to the electronic device 300, an account ID of a user account that is logged in to the electronic device 200, the electronic device 300 may obtain an account ID of a user account that is logged in to the electronic device 300, and the electronic device 300 may determine a relationship between the two user accounts. If the account IDs of the two user accounts are the same or are associated with each other, the electronic device 300 may determine that the electronic device 200 and the electronic device 300 are in a trusted relationship. The electronic device 300 may send a message to the electronic device 200, to inform the electronic device 200 that the electronic device 300 and the electronic device 200 are in a trusted relationship.

For example, when the distance between the location of the electronic device 300 and the location of the electronic device 200 is not within the preset distance, a server connection may be established between the electronic device 300 and the electronic device 200. The electronic device 300 and the electronic device 200 may communicate with each other through a server connection. The electronic device 300 and the electronic device 200 further need to determine whether the electronic device 300 and the electronic device 200 are mutually trusted devices. The electronic device 300 and the electronic device 200 may separately send, to a server, account IDs of user accounts logged in to the respective devices, and the server may determine a relationship between the two user accounts based on the account IDs of the user accounts sent by the electronic device 300 and the electronic device 200. If the account IDs of the two user accounts are the same or are associated with each other, the server may determine that the electronic device 200 and the electronic device 300 are in a trusted relationship. The server may separately send a message to the electronic device 200 and the electronic device 300, to inform the electronic device 200 and the electronic device 300 that the electronic device 200 and the electronic device 300 are in a trusted relationship.

S902: The electronic device 200 establishes a Bluetooth connection to the vehicle 100.

Optionally, if the electronic device 200 has previously established a Bluetooth connection to the vehicle 100, when the user approaches the vehicle 100, the electronic device 200 may automatically establish the Bluetooth connection to the vehicle 100.

For example, a communication connection between the electronic device 200 and the vehicle 100 may be referred to as a second communication connection. The second communication connection may include a Bluetooth connection. In addition to the Bluetooth connection, the second communication connection may be another connection. This is not limited in this application.

S903: The electronic device 300 receives a user operation, and controls the vehicle 100 based on a first digital vehicle key.

Optionally, the user may perform an operation in a third application in the electronic device 300, and control the vehicle 100 based on the digital vehicle key of the vehicle 100 that is obtained by the electronic device 300 by applying for the digital vehicle key of the vehicle 100.

For example, the user operation may be the input operation of the user for the vehicle unlocking/locking option in the user interface 810 shown in FIG. 8A.

Optionally, the input operation of the user for the vehicle unlocking/locking option in the user interface 810 may also be referred to as a first user operation.

Optionally, in some embodiments, after the user performs an operation on the electronic device 300, the electronic device 300 may verify a user identity, and perform a subsequent operation when identity verification succeeds. This improves security of controlling the vehicle 100 by the electronic device 300 by using the digital vehicle key.

Optionally, before the electronic device 300 receives a user operation, the electronic device 300 may receive the user operation to enable an identity verification function in the third application. After the identity verification function is enabled, and the electronic device 300 receives the user operation, the electronic device 300 may verify the user identity. In another embodiment, if the identity verification function in the third application is disabled, after the electronic device 300 receives the user operation, the electronic device 300 may not verify the user identity.

Optionally, the electronic device 300 may alternatively need to verify the user identity by default. This is not limited in this application.

Optionally, an identity verification manner may include but is not limited to a manner of facial recognition, fingerprint recognition, voiceprint recognition, password matching, or the like.

S904: The electronic device 300 needs to determine whether the electronic device 300 establishes a communication connection to the electronic device 200.

When the electronic device 300 determines that the electronic device 300 does not establish a Bluetooth connection to the vehicle 100, the electronic device 300 needs to determine whether the electronic device 300 establishes a communication connection to the electronic device 200. When determining that the electronic device 300 establishes the communication connection to the electronic device 200, the electronic device 300 may control the vehicle 100 by using the electronic device 200 that establishes the communication connection to the electronic device 300, that is, S905 to S919 is performed.

When determining that no communication connection is established between the electronic device 300 and the electronic device 200, the electronic device 300 cannot control the vehicle 100 by using the electronic device 200 that establishes the communication connection to the electronic device 300, and the procedure ends.

Optionally, when the electronic device 300 does not establish a communication connection to the electronic device 200, and the electronic device 300 currently cannot send a first control instruction to the vehicle 100 by using the electronic device 300, the electronic device 300 may display the prompt information 8103 shown in FIG. 8E. The prompt information 8103 is used to inform the user that controlling cannot be currently performed on the vehicle 100.

S905: The electronic device 300 sends vehicle information of the vehicle 100 and key information of the first digital vehicle key to the electronic device 200.

Optionally, in some embodiments, after the electronic device 200 receives the vehicle information of the vehicle 100 and the key information of the first digital vehicle key that are sent by the electronic device 300, the electronic device 200 may also verify the user identity, and perform a subsequent operation when identity verification succeeds. This improves security of controlling the vehicle 100 by the electronic device 200 by using the digital vehicle key.

Optionally, before the electronic device 200 receives the vehicle information of the vehicle 100 and the key information of the first digital vehicle key that are sent by the electronic device 300, the electronic device 200 may receive a user operation to enable the identity verification function. After the identity verification function is enabled, and the electronic device 200 receives the vehicle information of the vehicle 100 and the key information of the first digital vehicle key that are sent by the electronic device 300, the electronic device 300 may verify the user identity. In another embodiment, if the identity verification function is disabled, after the electronic device 200 receives the vehicle information of the vehicle 100 and the key information of the first digital vehicle key that are sent by the electronic device 300, the electronic device 200 may not verify the user identity.

Optionally, the electronic device 200 may alternatively need to verify the user identity by default. This is not limited in this application.

Optionally, an identity verification manner may include but is not limited to a manner of facial recognition, fingerprint recognition, voiceprint recognition, password matching, or the like.

When the electronic device 300 determines that the electronic device 300 establishes a communication connection to the electronic device 200, the electronic device 300 may control the vehicle 100 by using the electronic device 200 that establishes the communication connection to the electronic device 300, and the electronic device 300 may send the vehicle information of the vehicle 100 and the key information of the first digital vehicle key to the electronic device 200.

The vehicle information of the vehicle 100 is used by the electronic device 200 to determine whether the electronic device 200 has applied for the digital vehicle key of the vehicle 100.

The key information of the first digital vehicle key is used by the electronic device 200 to determine whether the electronic device 200 and the electronic device 300 apply for a same type of digital vehicle key. The electronic device 300 can control the vehicle 100 by using the electronic device 200 only when a digital vehicle key of a same type of a same vehicle is applied for.

For example, the key information of the first digital vehicle key may include but is not limited to one or more of the following: a key type, a key identifier, and the like. For example, when the first digital vehicle key is a Bluetooth vehicle key, the key type of the first digital vehicle key may be a Bluetooth vehicle key.

The vehicle information of the vehicle 100 may include but is not limited to one or more of the following: vehicle identification number (or may also be referred to as vehicle identifier), vehicle model, vehicle license plate number, vehicle manufacturer, vehicle production date, vehicle engine model, and the like.

S906: The electronic device 200 obtains key information of a second digital vehicle key based on the vehicle information of the vehicle 100.

When the electronic device 200 may obtain the key information of the second digital vehicle key based on the vehicle information of the vehicle 100, it indicates that the electronic device 200 applies for the digital vehicle key of the vehicle 100. In other words, the electronic device 300 and the electronic device 200 apply for a digital vehicle key of a same vehicle.

When the electronic device 200 does not obtain a digital vehicle key based on the vehicle information of the vehicle 100, it indicates that the electronic device 200 has not applied for the digital vehicle key of the vehicle 100. In other words, the electronic device 300 and the electronic device 200 do not apply for a digital vehicle key of a same vehicle.

S907: The electronic device 200 needs to determine whether a key type of the first digital vehicle key is the same as a key type of the second digital vehicle key.

Optionally, the vehicle 100 may provide different types of digital vehicle keys, for example, a Bluetooth vehicle key, an NFC vehicle key, and an ultra-wideband (ultra-wideband, UWB) vehicle key. In this embodiment of this application, the Bluetooth vehicle key is used as an example for description.

After receiving the vehicle information of the vehicle 100 and the key information of the first digital vehicle key that are sent by the electronic device 300, the electronic device 200 may obtain the key information of the second digital vehicle key based on the vehicle information of the vehicle 100.

The key information of the second digital vehicle key may include but is not limited to one or more of the following: a key type, a key identifier, and the like. For example, when the second digital vehicle key is a Bluetooth vehicle key, the key type of the second digital vehicle key may be a Bluetooth vehicle key.

After obtaining the key information of the first digital vehicle key and the key information of the second digital vehicle key, the electronic device 200 needs to determine whether the key type of the first digital vehicle key is the same as the key type of the second digital vehicle key. The electronic device 300 can control the vehicle 100 by using the electronic device 200 only when the key type of the first digital vehicle key is the same as the key type of the second digital vehicle key.

Optionally, the electronic device 200 further needs to determine whether the electronic device 200 establishes a Bluetooth connection to the vehicle 100. The electronic device 300 can control the vehicle 100 by using the electronic device 200 only when the electronic device 200 establishes a Bluetooth connection to the vehicle 100.

When the key type of the first digital vehicle key is the same as the key type of the second digital vehicle key, for example, both the key type of the first digital vehicle key and the key type of the second digital vehicle key are Bluetooth vehicle keys, and the electronic device 200 establishes a Bluetooth connection to the vehicle 100, the electronic device 200 may control the vehicle 100 by using the electronic device 300.

When the electronic device 300 determines that the key type of the first digital vehicle key and the key type of the second digital vehicle key are different, and/or the electronic device 200 does not establish a Bluetooth connection to the vehicle 100, the electronic device 300 cannot control the vehicle 100 by using the electronic device 200, and S907 to S909 are performed.

When the electronic device 300 determines that the key type of the first digital vehicle key is the same as the key type of the second digital vehicle key, and the electronic device 200 establishes a Bluetooth connection to the vehicle 100, the electronic device 300 may control the vehicle 100 by using the electronic device 200, and S910 to S919 are performed.

It should be noted that S905, S906, and S907 are not limited to being performed after S904, and S905, S906, and S907 may be performed periodically or irregularly. For example, before S904 is performed, if S905, S906, and S907 have been performed, the electronic device 200 may directly obtain an execution result. In this way, when the electronic device 300 needs to control the vehicle 100 by using the electronic device 200, the electronic device 300 may not need to perform S905, S906, and S907, but directly determine, based on a periodic execution result, whether the vehicle 100 can be controlled by using the electronic device 200, and a speed at which the electronic device 300 controls the vehicle 100 by using the electronic device 200 can be increased. In addition, the digital vehicle keys of the vehicles that are applied for by the electronic device 200 and the electronic device 300 also change. For example, the user newly applies for a digital vehicle key of a vehicle. S905, S906, and S907 are periodically or irregularly performed, and an execution result may be periodically or irregularly updated.

Optionally, the electronic device 200 may not perform S907, and the electronic device 300 may not send the key information of the first digital vehicle key to the electronic device 200.

S908: The electronic device 200 sends a verification failure message to the electronic device 300.

S909: In response to the verification failure message, the electronic device 300 prompts that an operation fails.

When the electronic device 300 determines that the key type of the first digital vehicle key is different from the key type of the second digital vehicle key, and/or the electronic device 200 does not establish a Bluetooth connection to the vehicle 100, the electronic device 200 may send the verification failure message to the electronic device 300. In response to the verification failure message, the electronic device 300 prompts that the operation fails.

For example, after the electronic device 300 receives the verification failure message sent by the electronic device 200, the electronic device 300 may display the prompt information 8103 shown in FIG. 8E. The prompt information 8103 is used to inform the user that controlling cannot be currently performed on the vehicle 100.

S910: The electronic device 200 sends a verification success message to the electronic device 300.

S911: The electronic device 300 generates a first control instruction in response to the verification success message.

S912: The electronic device 300 sends the first control instruction to the electronic device 200.

When the electronic device 300 determines that the key type of the first digital vehicle key is the same as the key type of the second digital vehicle key, and the electronic device 200 establishes a Bluetooth connection to the vehicle 100, the electronic device 200 may send the verification success message to the electronic device 300. In response to the verification success message, the electronic device 300 may generate the first control instruction, and send the first control instruction to the electronic device 200.

The first control instruction may include but is not limited to one or more of the following: a version number of the first vehicle control instruction, a vehicle control operation type, and the like. The vehicle control operation type includes but is not limited to any one of the following: unlocking, locking, raising a vehicle window, lowering the vehicle window, turning on an air conditioner, turning off the air conditioner, playing music, pausing playing music, and the like.

Optionally, after the electronic device 200 receives the first control instruction sent by the electronic device 200, the electronic device 200 further needs to verify whether the first control instruction is authorized. Specifically, the electronic device 200 may obtain a version number of a fourth vehicle control instruction in the electronic device 200 based on the vehicle control operation type in the first control instruction. A vehicle control operation type of the fourth vehicle control instruction is the same as that of the first vehicle control instruction. When the version number of the fourth vehicle control instruction is the same as a version number of the first vehicle control instruction, the first control instruction is authorized, and the electronic device 200 may perform S913. If the version number of the fourth vehicle control instruction is different from the version number of the first vehicle control instruction, the first control instruction is unauthorized, the electronic device 200 cannot perform S913, and the electronic device 200 may send a feedback message to the electronic device 300, to inform the electronic device 300 that the vehicle 100 cannot be currently controlled by using the electronic device 200. Optionally, after the electronic device 300 receives the feedback message sent by the electronic device 200, the electronic device 300 may display the prompt information 8103 shown in FIG. 8E. The prompt information 8103 is used to inform the user that controlling cannot be currently performed on the vehicle 100.

Optionally, in addition to sending the first control instruction to the electronic device 200, the electronic device 300 may also send the vehicle information of the vehicle 100 and the key information of the first digital vehicle key to the electronic device 200. In this way, in addition to verifying whether the first control instruction is authorized, the electronic device 200 further needs to verify whether the vehicle information of the vehicle 100 and the key information of the first digital vehicle key that are sent with the first control instruction are consistent with the vehicle information of the vehicle 100 and the key information of the first digital vehicle key that are sent by the electronic device 300 in S905. In a case of consistency, the electronic device 300 may further determine whether the first control instruction is authorized.

S913: The electronic device 200 encrypts the first control instruction based on the second digital vehicle key, to obtain an encrypted first control instruction.

Optionally, before performing S913, the electronic device 200 needs to determine whether the first control instruction complies with a vehicle-to-everything specification standard for the digital vehicle key. It may be understood that formats of different types of control instructions are standardized in the vehicle-to-everything specification standard for the digital vehicle key. For example, a format of an unlocking control instruction is different from a format of a window opening control instruction, so that the vehicle 100 can correctly identify different types of control instructions.

When determining that a format of the first control instruction meets a requirement of the vehicle-to-everything specification standard for the digital vehicle key, the electronic device 200 may perform S913.

When determining that the format of the first control instruction does not meet the requirement the vehicle-to-everything specification standard for the digital vehicle key, the electronic device 200 needs to generate a third control instruction based on the first control instruction, where a format of the third control instruction meets the requirement of the vehicle-to-everything specification standard for the digital vehicle key. Specifically, after the electronic device 300 obtains the first control instruction, the electronic device 300 may obtain the version number of the first vehicle control instruction and the vehicle control operation type from the first control instruction, and the electronic device 300 may obtain the third control instruction based on the version number of the first vehicle control instruction, the vehicle control operation type, and the vehicle-to-everything specification standard for the digital vehicle key.

Optionally, the electronic device 200 may not perform a determining step. After the electronic device 200 obtains the first control instruction, the electronic device 200 may directly obtain the version number of the first vehicle control instruction and the vehicle control operation type from the first control instruction, and then obtain the third control instruction based on the version number of the first vehicle control instruction, the vehicle control operation type, and the vehicle-to-everything specification standard for the digital vehicle key.

A specific implementation in which the electronic device 200 sends the third control instruction to the vehicle 100 is similar to a specific implementation in which the electronic device 200 sends the first control instruction to the vehicle 100. Details are not described herein again in this application.

S914: The electronic device 200 sends the encrypted first control instruction and device information of the electronic device 200 to the vehicle 100 through a first Bluetooth connection.

After the electronic device 200 determines that the first control instruction is authorized, the electronic device 200 may encrypt the first control instruction based on the second digital vehicle key, to obtain the encrypted first control instruction. The electronic device 200 sends the encrypted first control instruction and the device information of the electronic device 200 to the vehicle 100 through the Bluetooth connection.

The device information of the electronic device 200 is used by the vehicle 100 to obtain the second digital vehicle key.

S915: The vehicle 100 obtains the second digital vehicle key based on the device information of the electronic device 200.

S916: The vehicle 100 decrypts the encrypted first control instruction based on the second digital vehicle key, to obtain the first control instruction.

Optionally, S913 to S916 may not be performed, and the electronic device 200 may send only the first control instruction to the first vehicle.

S917: The vehicle 100 executes the first control instruction.

S918: The vehicle 100 sends an execution result to the electronic device 200.

S919: The electronic device 200 sends the execution result to the electronic device 300.

Optionally, the vehicle 100 stores a correspondence between device information of one or more devices and a digital vehicle key.

**Table 1**

| Device information | Digital vehicle key |
|---|---|
| Device information of the electronic device 200 | Second digital vehicle key |
| Device information of the electronic device 300 | First digital vehicle key |

Table 1 shows a correspondence between device information of a storage device in the vehicle 100 and a digital vehicle key. For example, the vehicle 100 stores a correspondence between the device information of the electronic device 200 and the second digital vehicle key. The vehicle 100 may obtain the second digital vehicle key based on the device information of the electronic device 200, and the electronic device 200 may control the vehicle 100 by using the second digital vehicle key.

The vehicle 100 further stores a correspondence between the device information of the electronic device 300 and the first digital vehicle key. The vehicle 100 may obtain the first digital vehicle key based on the device information of the electronic device 300, and the electronic device 300 may control the vehicle 100 by using the first digital vehicle key.

The vehicle 100 may further store a correspondence between device information of more other devices and a digital vehicle key.

After the vehicle 100 receives encrypted second control instruction and the device information of the electronic device 300 that are sent by the electronic device 300, the vehicle 100 may obtain the first digital vehicle key based on the device information of the electronic device 300.

The vehicle 100 may decrypt the encrypted second control instruction based on the first digital vehicle key, to obtain the first control instruction, and execute the first control instruction. After the vehicle 100 executes the first control instruction, the vehicle 100 further needs to send an execution result to the electronic device 300, to notify the electronic device 300 of the execution result of the vehicle 100.

For example, the first control instruction may be used to control the vehicle 100 to be unlocked. After the vehicle 100 is unlocked, the vehicle 100 may notify the electronic device 300 of an execution result indicating that the vehicle is unlocked.

Optionally, after the electronic device 300 receives the execution result sent by the vehicle 100, the electronic device 300 may display prompt information, where the prompt information is used to inform the vehicle 100 that the first control instruction is executed. For example, after the electronic device 300 receives the execution result that is sent by the vehicle 100 and that indicates that the vehicle is unlocked, the electronic device 300 may display the prompt information 8101 shown in FIG. 8B. The prompt information 8101 is used to inform the user that the user A has successfully controlled the vehicle 100 by using the electronic device 300.

Optionally, the prompt information 8101 shown in FIG. 8B may also be referred to as third prompt information.

Optionally, before performing S904, the electronic device 300 needs to determine whether the electronic device 300 establishes a Bluetooth connection to the vehicle 100.

When the electronic device 300 establishes a Bluetooth connection to the vehicle 100, the electronic device 300 may directly control the vehicle 100 based on the first digital vehicle key. Specifically, after the electronic device 300 receives a user operation, when the electronic device 300 determines that the electronic device 300 establishes a Bluetooth connection to the vehicle 100, the electronic device 300 may determine the first digital vehicle key based on vehicle information (for example, the vehicle information of the vehicle 100) of a vehicle on which controlling needs to be currently performed, and the first digital vehicle key is a digital vehicle key used to control the vehicle 100. After obtaining the first digital vehicle key, the electronic device 300 encrypts the first control instruction by using the first digital vehicle key, to obtain the encrypted second control instruction. Then, the electronic device 300 sends the encrypted second control instruction and the device information of the electronic device 300 to the vehicle 100. The device information of the electronic device 300 is used by the vehicle 100 to determine the first digital vehicle key. Refer to the descriptions in S915 to S919. There is a correspondence between device information of a plurality of devices in the vehicle 100 and a digital vehicle key. After the vehicle 100 receives encrypted second control instruction and the device information of the electronic device 300 that are sent by the electronic device 200, the vehicle 100 may obtain the first digital vehicle key based on the device information of the electronic device 300. The vehicle 100 may decrypt the encrypted second control instruction based on the first digital vehicle key, to obtain the first control instruction, and execute the first control instruction. After the vehicle 100 executes the first control instruction, the vehicle 100 further needs to send an execution result to the electronic device 300, to notify the electronic device 300 of the execution result of the vehicle 100. For example, the first control instruction may be used to control the vehicle 100 to be unlocked. After the vehicle 100 is unlocked, the vehicle 100 may notify the electronic device 300 of an execution result indicating that the vehicle is unlocked. Optionally, after the electronic device 300 receives the execution result sent by the vehicle 100, the electronic device 300 may display prompt information, where the prompt information is used to inform the vehicle 100 that the first control instruction is executed. For example, after the electronic device 300 receives the execution result that is sent by the vehicle 100 and that indicates that the vehicle is unlocked, the electronic device 300 may display the prompt information 8102 shown in FIG. 8D. The prompt information 8102 is used to inform the user that the user A has successfully controlled the vehicle 100 by using the electronic device 200. Optionally, the prompt information 8102 shown in FIG. 8D may also be referred to as fourth prompt information.

When the electronic device 300 does not establish a Bluetooth connection to the vehicle 100, the electronic device 300 may control the vehicle 100 by using the electronic device 200 that establishes a communication connection to the electronic device 300.

Optionally, a data transmission path from the electronic device 300 to the electronic device 200 in the embodiment of FIG. 9A-1 to FIG. 9A-3 may be as follows: A first application in the electronic device 300 may obtain transmission data (for example, the first control instruction or the vehicle information of the vehicle 100). A third application in the electronic device 300 sends the transmission data to a fourth application (which may also be referred to as, for example, a sports and health application) in the electronic device 200, and then a fourth application in the electronic device 200 sends the transmission data to a first application in the electronic device 200. The third application in the electronic device 300 may be an application that is the same as or similar to the first application in the electronic device 200.

Optionally, a data transmission path from the electronic device 200 to the electronic device 300 in the embodiment of FIG. 9A-1 to FIG. 9A-3 may be as follows: A first application in the electronic device 200 sends transmission data (for example, a verification success message or an execution result) to a fourth application in the electronic device 200, and then the fourth application in the electronic device 200 sends the transmission data to a third application in the electronic device 300.

A plurality of devices of different users control the vehicle 100.

In another embodiment, a user A has the electronic device 200, a user B has the electronic device 300, no trusted relationship is established between the electronic device 200 and the electronic device 300, and devices that do not establish a trusted relationship cannot collaboratively control the vehicle. Optionally, the electronic device 200 may actively establish a trusted relationship with the electronic device 300, and generate a trusted credential. The electronic device 200 and the electronic device 300 each store a trusted credential, and the trusted credential is used to verify whether the device is a trusted device.

Specifically, if the electronic device 200 first establishes a Bluetooth connection to the vehicle 100, the electronic device 300 cannot continue to establish a Bluetooth connection to the vehicle 100. When the user B needs to control the vehicle 100 on the electronic device 300, the user B may perform an operation on the electronic device 300 to send the first control instruction and the trusted credential to the electronic device 200 without disconnecting the Bluetooth connection established between the electronic device 200 and the vehicle 100. After the electronic device 300 receives the first control instruction and the trusted credential that are sent by the electronic device 200, when the electronic device 200 determines, based on the trusted credential, that the electronic device 200 is a trusted device, and both the electronic device 200 and the electronic device 300 apply for the digital vehicle key of the vehicle 100, the electronic device 200 may send the first control instruction to the vehicle 100. The vehicle 100 receives the first control instruction and executes the first control instruction in response to the first control instruction. In this way, the user can actively trigger establishment of a trusted relationship between untrusted devices, and when a Bluetooth connection between a device and a vehicle is not disconnected, the devices that the user actively establishes the trusted relationship can collaboratively control the vehicle.

For example, when the electronic device 200 is a mobile phone of a user A, and the electronic device 300 is a mobile phone of a user B, the user A and the user B are in a friend relationship, but no trusted relationship is established between the electronic device 200 and the electronic device 300. In this case, the user A may actively establish a trusted relationship with the electronic device 300 of the user B by using the electronic device 200, and the electronic device 200 and the electronic device 300 each store a trusted credential. Both the user A and the user B take in the vehicle 100, and the electronic device 200 of the user A establishes a Bluetooth connection to the vehicle 100. When the user B needs to control the vehicle 100 by using the electronic device 300, and the Bluetooth connection established between the electronic device 200 and the vehicle 100 is not disconnected, a communication connection may be established between the electronic device 200 and the electronic device 300, to send the first control instruction and the trusted credential to the electronic device 200. After receiving the first control instruction and the trusted credential that are sent by the electronic device 200, if the electronic device 200 determines, based on the trusted credential, that the electronic device 200 is a trusted device, and both the electronic device 200 and the electronic device 300 apply for the digital vehicle key of the vehicle 100, the electronic device 200 sends the first control instruction to the vehicle 100, and the vehicle 100 may execute the first control instruction. In this way, convenience of controlling the vehicle by different electronic devices of different users is greatly improved.

FIG. 10A to FIG. 10J are diagrams of controlling a vehicle by the electronic device 300 by using the electronic device 200.

The electronic device 200 actively establishes a trusted relationship with the electronic device 300 (**FIG. 10A to FIG. 10D****).**

After the electronic device 200 applies for the digital vehicle key of the vehicle 100, the electronic device 300 may display the user interface 790 shown in FIG. 10A.

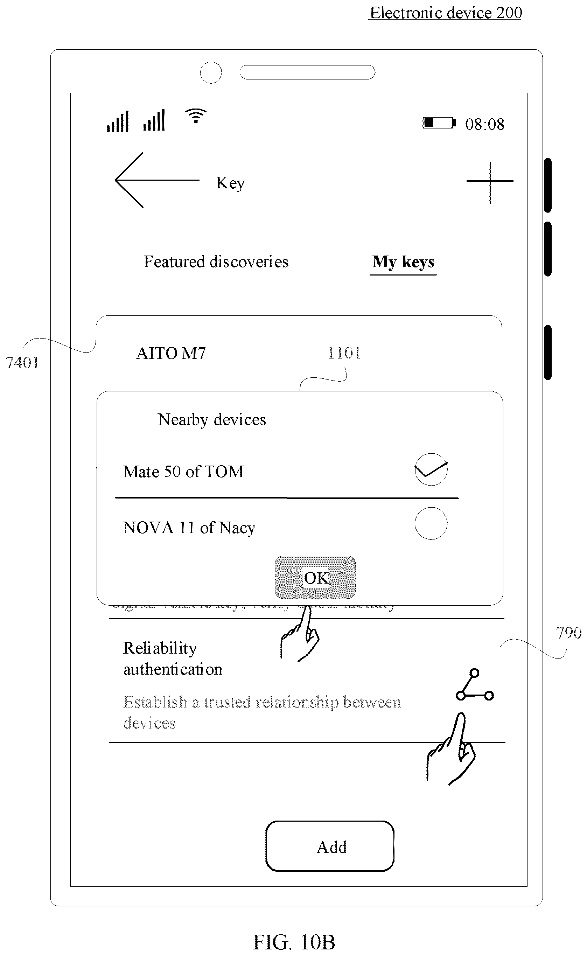

For example, as shown in FIG. 10A, the electronic device 200 may receive an input operation (for example, tapping) of the user for a reliability authentication option in the user interface shown in FIG. 10A, and in response to the input operation of the user, the electronic device 200 may display a window 1101 shown in FIG. 10B. The window 1101 includes device identifiers of one or more devices discovered by the electronic device 200, for example, "Mate 50 of TOM" and "NOVA 11 of Nacy." The device identifier "Mate 50 of TOM" may be a device identifier of the electronic device 300, and the device identifier "NOVA 11 of Nacy" may be a device identifier of another device near the electronic device 200.

Optionally, before the electronic device 200 displays the window 1101 shown in FIG. 10B, the electronic device 200 may display prompt information. The prompt information indicates the user to enable Bluetooth of the electronic device 200, and enable Bluetooth of another device that needs to establish a trusted relationship with the electronic device 200. In this way, the electronic device 200 can discover another device near the electronic device 200.

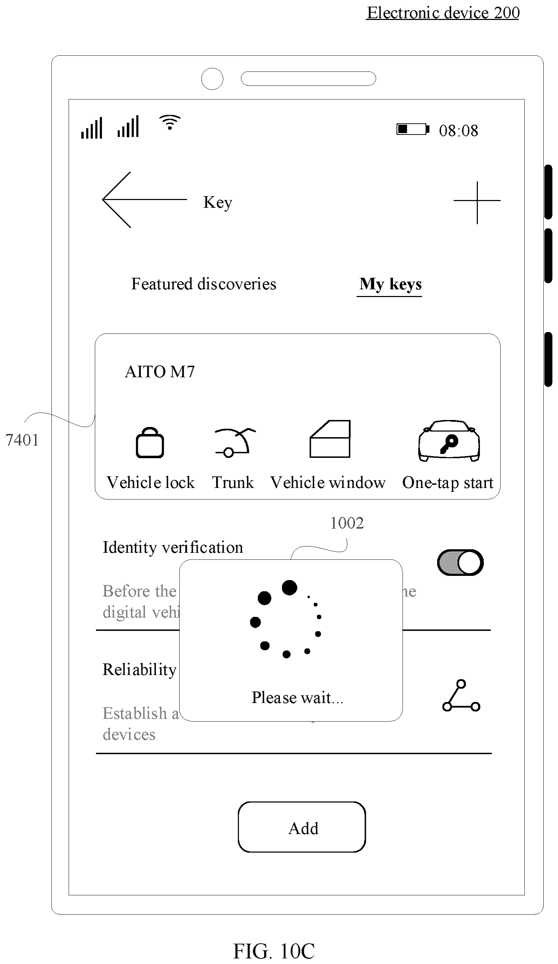

When the electronic device 200 needs to establish a trusted relationship with the electronic device 300, as shown in FIG. 10B, the electronic device 200 may receive an input operation (for example, tapping) of the user for the device identifier "Mate 50 of TOM" in the window 1101, and in response to the input operation of the user, the electronic device 200 may display a window 1002 shown in FIG. 10C. The window indicates that the electronic device 200 is negotiating with the electronic device 300 to establish a trusted relationship.

In response to the input operation of the user, the electronic device 200 may send a trusted relationship establishment request to the electronic device 300.

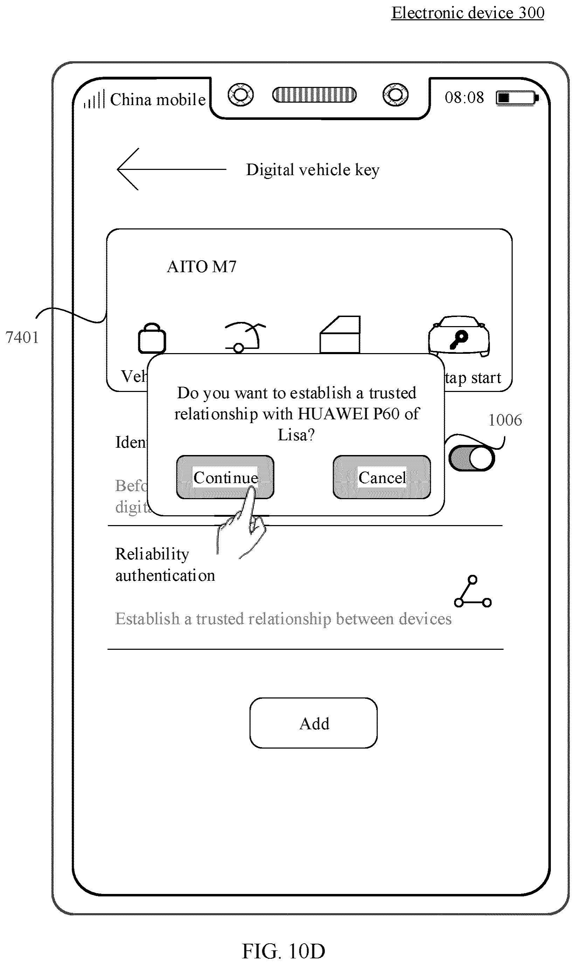

After the electronic device 300 receives the trusted relationship establishment request sent by the electronic device 200, the electronic device 300 may display a window 1006 shown in FIG. 10D. The window 1006 includes prompt information "Do you want to establish a trusted relationship with the HUAWEI P60 of Lisa." The window 1006 further includes a continue option and a cancel option. The user may establish a trusted relationship with the electronic device 200 by using the continue option, or the user may refuse to establish a trusted relationship with the electronic device 200 by using the cancel option.

For example, as shown in FIG. 10D, the electronic device 300 may receive an input operation (for example, tapping) of the user for the continue option in the window 1006, and in response to the input operation of the user, the electronic device 300 may establish a trusted relationship with the electronic device 200.

In a possible implementation, steps of establishing a trusted relationship between the electronic device 200 and the electronic device 300 may be as follows: The electronic device 200 may obtain parameter information of the electronic device 200, where the parameter information of the electronic device 200 may include but is not limited to one or more of the following: a device identifier of the electronic device 200, a device type of the electronic device 200, a first random number, and the like. The first random number is used by the electronic device 200 and the electronic device 300 to generate a trusted credential. The electronic device 200 further needs to send the parameter information of the electronic device 200 to the electronic device 300. After receiving the parameter information of the electronic device 200 sent by the electronic device 200, the electronic device 300 stores the parameter information of the electronic device 200, and obtains parameter information of the electronic device 300. Then, the electronic device 300 sends the parameter information of the electronic device 300 to the electronic device 200. The parameter information of the electronic device 300 may include but is not limited to one or more of the following: a device identifier of the electronic device 300, a device type of the electronic device 300, a second random number, and the like. The second random number is also used as a trusted credential of the electronic device 200 and the electronic device 300. After the electronic device 200 and the electronic device 300 obtain the first random number and the second random number, the electronic device 200 and the electronic device 300 may respectively generate trusted credentials based on the first random number and the second random number, and store the trusted credentials. The trusted credentials are used by the electronic device 200 and the electronic device 300 to subsequently verify whether the electronic device 200 and the electronic device 300 are mutually trusted devices. Optionally, after the electronic device 300 generates the trusted credential based on the first random number and the second random number, the electronic device 300 may send a feedback message to the electronic device 200. The feedback message is used to inform the electronic device 300 that the electronic device 200 has generated the trusted credential.

In another possible implementation, steps of establishing a trusted relationship between the electronic device 200 and the electronic device 300 may be as follows: The electronic device 200 may obtain device information of the electronic device 200. The device information of the electronic device 200 may include but is not limited to one or more of the following: a device identifier of the electronic device 200, a device type of the electronic device 200, and the like. The electronic device 200 further needs to send the device information of the electronic device 200 to the electronic device 300. After receiving the device information of the electronic device 200 sent by the electronic device 200, the electronic device 300 stores the device information of the electronic device 200. The electronic device 300 may determine, based on the device information of the electronic device 200, that the electronic device 200 is a trusted device. The electronic device 300 also needs to obtain device information of the electronic device 300. The device information of the electronic device 300 may include but is not limited to one or more of the following: a device identifier of the electronic device 300, a device type of the electronic device 300, and the like. The electronic device 300 further needs to send the device information of the electronic device 300 to the electronic device 200. After receiving the device information of the electronic device 300 sent by the electronic device 300, the electronic device 200 stores the device information of the electronic device 300. The electronic device 200 may determine, based on the device information of the electronic device 300, that the electronic device 300 is a trusted device.

In addition to the foregoing manners, the electronic device 200 and the electronic device 300 may further establish a trusted relationship in another manner. This is not limited in this application.

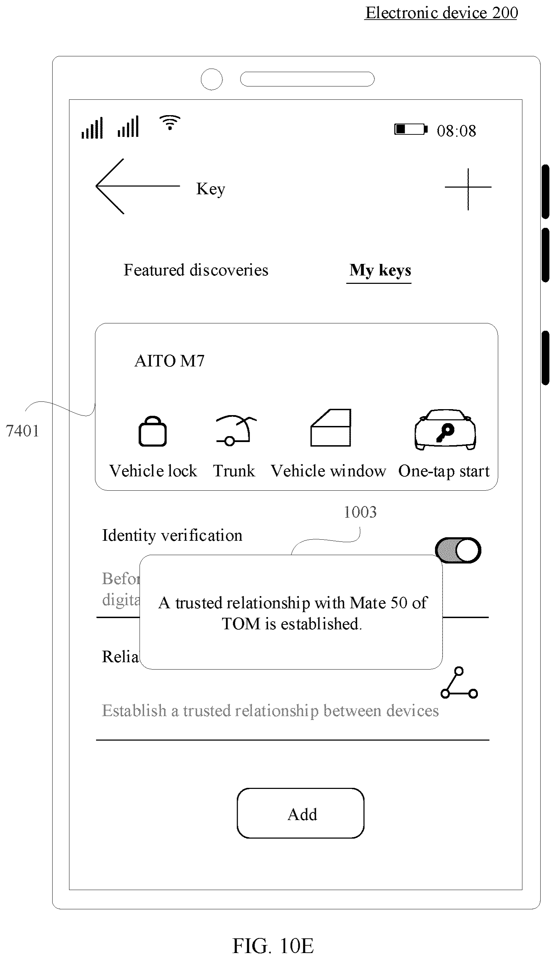

Optionally, after the electronic device 200 establishes the trusted relationship with the electronic device 300, the electronic device 200 may display prompt information 1003 shown in FIG. 10E. The prompt information 1003 is used to inform the user that the trusted relationship is established between the electronic device 200 and the electronic device 300.

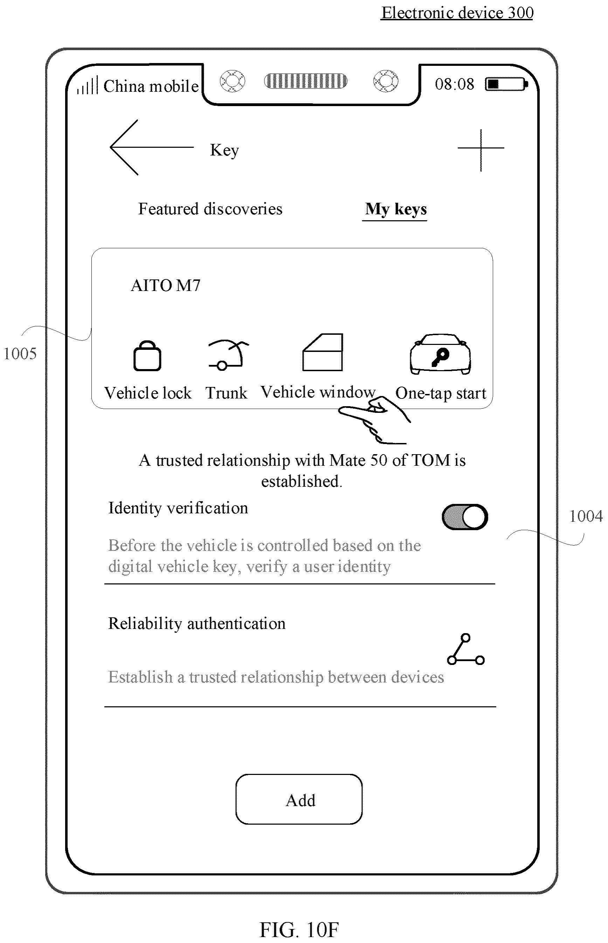

Optionally, after the electronic device 200 establishes the trusted relationship with the electronic device 300, the electronic device 200 may alternatively display, in a user interface 1004 shown in FIG. 10F, an identifier "A trusted relationship is established with the Mate 50 of TOM", to inform the user that a trusted relationship is established between the electronic device 200 and the electronic device 300.

Optionally, FIG. 10A to FIG. 10F are described by using an example in which the electronic device 200 actively initiates trusted authentication to the electronic device 300. In another embodiment, the electronic device 300 may actively initiate trusted authentication to the electronic device 200. This is not limited in this application either.

Optionally, FIG. 10A to FIG. 10F are described by using a first application as an example. In another embodiment, the electronic device 200 may also actively initiate trusted authentication to the electronic device 300 in the second application, or the electronic device 200 may actively initiate trusted authentication to the electronic device 300 in combination with the first application and the second application. This is not limited in this application either. In this application, only an example in which the electronic device 200 actively initiates trusted authentication to the electronic device 300 in the first application is used for description.

**The electronic device 300 controls the vehicle 100 based on a digital vehicle key by using the electronic device 200 (****FIG. 10F to FIG. 10J****).**

After the electronic device 200 actively establishes a trusted relationship with the electronic device 300 in the manner shown in FIG. 10A to FIG. 10F, when the electronic device 300 establishes a communication connection to the electronic device 200, the electronic device 200 establishes a Bluetooth connection to the vehicle 100, and both the electronic device 300 and the electronic device 200 apply for a digital vehicle key of the vehicle 100, the electronic device 300 may control the vehicle 100 based on the digital vehicle key by using the electronic device 200.

For example, a first application may also be installed on the electronic device 300, and the user may control the vehicle 100 in the first application based on the digital vehicle key.

For example, the electronic device 300 may be a mobile phone of a user B, and the electronic device 200 may be a mobile phone of a user A.

The electronic device 300 may receive an input operation (for example, tapping) of the user for an application icon of the first application, and in response to the input operation of the user, the electronic device 300 may display the user interface 1004 shown in FIG. 10F. When the electronic device 300 also applies for the digital vehicle key of the vehicle 100, after the electronic device 300 starts the first application, the electronic device 300 may display a widget 1005 in the user interface 1004, and a vehicle identifier "AITO M7" is displayed on the widget 1005, to inform the user that the widget 1005 is a widget corresponding to the digital vehicle key of the vehicle 100. A plurality of control options are further shown in the widget 1005, for example, a vehicle unlocking/locking option, a trunk opening/closing option, a vehicle window opening/closing option, and an engine startup/shutdown option. Only some control options of the vehicle 100 are shown in the widget 1005. The electronic device 300 may receive a sliding operation (for example, a rightward or leftward sliding operation) performed by the user on the widget 1005, and display another control option that is not displayed.

For example, as shown in FIG. 10F, the electronic device 300 may receive an input operation (for example, tapping) of the user for the vehicle window opening/closing option in the widget 1005. In response to the input operation of the user, when the electronic device 300 does not establish a Bluetooth connection to the vehicle 100, the electronic device 300 may generate a first control instruction, and send vehicle information of the vehicle 100, key information of a first digital vehicle key, and the first control instruction to the electronic device 200.

Optionally, in some embodiments, after the electronic device 300 may receive the input operation of the user for the vehicle window opening/closing option in the widget 1005, the electronic device 300 may verify a user identity, and perform a subsequent operation when identity verification succeeds. This improves security of controlling the vehicle 100 by the electronic device 300 by using the digital vehicle key.

Optionally, before the user performs an operation, in the first application, to control the vehicle 100 by using the digital vehicle key, the electronic device 300 may receive a user operation and enable an identity verification function in the first application. After the identity verification function is enabled, and the electronic device 300 receives an input operation of the user for the vehicle window opening/closing option in the user interface 810, the electronic device 300 may verify a user identity, and an identity verification function of the electronic device 300 shown in FIG. 10F is enabled. In another embodiment, if the identity verification function in the first application is disabled, after the electronic device 300 receives the input operation of the user for the vehicle window opening/closing option in the user interface 810, the electronic device 300 may not verify the user identity.

Optionally, the electronic device 300 may alternatively need to verify the user identity by default. This is not limited in this application.

Optionally, an identity verification manner may include but is not limited to a manner of facial recognition, fingerprint recognition, voiceprint recognition, password matching, or the like.

After the electronic device 200 receives the vehicle information of the vehicle 100, the key information of the first digital vehicle key, and the first control instruction that are sent by the electronic device 300, the electronic device 200 may determine, based on the vehicle information of the vehicle 100, whether the electronic device 200 applies for the digital vehicle key of the vehicle 100. For example, the electronic device 200 determines that the electronic device 200 applies for the second digital vehicle key of the vehicle 100. When a key type of the second digital vehicle key is the same as a key type of the first digital vehicle key, the electronic device 300 may encrypt the first control instruction based on the second digital vehicle key, to obtain an encrypted first control instruction. Then, the electronic device 200 sends the encrypted first control instruction and device information of the electronic device 200 to the vehicle 100 through a Bluetooth connection. After the vehicle 100 receives the encrypted first control instruction and the device information of the electronic device 200, the vehicle 100 may obtain the second digital vehicle key based on the device information of the electronic device 200, decrypt the encrypted first control instruction based on the second digital vehicle key to obtain the first control instruction, and execute the first control instruction, for example, unlocking the vehicle 100. In this way, the electronic device 300 controls the vehicle 100 by using the electronic device 200.

Optionally, in some embodiments, after the electronic device 200 receives the vehicle information of the vehicle 100, the key information of the first digital vehicle key, and the first control instruction that are sent by the electronic device 300, the electronic device 200 may also verify the user identity, and perform a subsequent operation when identity verification succeeds. This improves security of controlling the vehicle 100 by the electronic device 200 by using the digital vehicle key.

Optionally, before the electronic device 200 receives the vehicle information of the vehicle 100, the key information of the first digital vehicle key, and the first control instruction that are sent by the electronic device 300, the electronic device 200 may receive a user operation to enable the identity verification function. After the identity verification function is enabled, and the electronic device 200 receives the vehicle information of the vehicle 100, the key information of the first digital vehicle key, and the first control instruction that are sent by the electronic device 300, the electronic device 300 may verify the user identity. In another embodiment, if the identity verification function is disabled, after the electronic device 200 receives the vehicle information of the vehicle 100, the key information of the first digital vehicle key, and the first control instruction that are sent by the electronic device 300, the electronic device 200 may not verify the user identity.

Optionally, the electronic device 200 may alternatively need to verify the user identity by default. This is not limited in this application.

Optionally, an identity verification manner may include but is not limited to a manner of facial recognition, fingerprint recognition, voiceprint recognition, password matching, or the like.

Optionally, after the electronic device 200 receives the vehicle information of the vehicle 100, the key information of the first digital vehicle key, and the first control instruction that are sent by the electronic device 300, when the electronic device 200 needs to verify the user identity, the electronic device 200 has established a trusted relationship with the electronic device 300, and the electronic device 200 may also verify the user identity by using the electronic device 300.

After the vehicle 100 executes the first control instruction, the vehicle 100 may send a feedback message to the electronic device 200 through a Bluetooth connection. Then, the electronic device 200 sends the feedback message to the electronic device 300, to inform the user B that the user B has successfully controlled the vehicle 100 by using the electronic device 300.

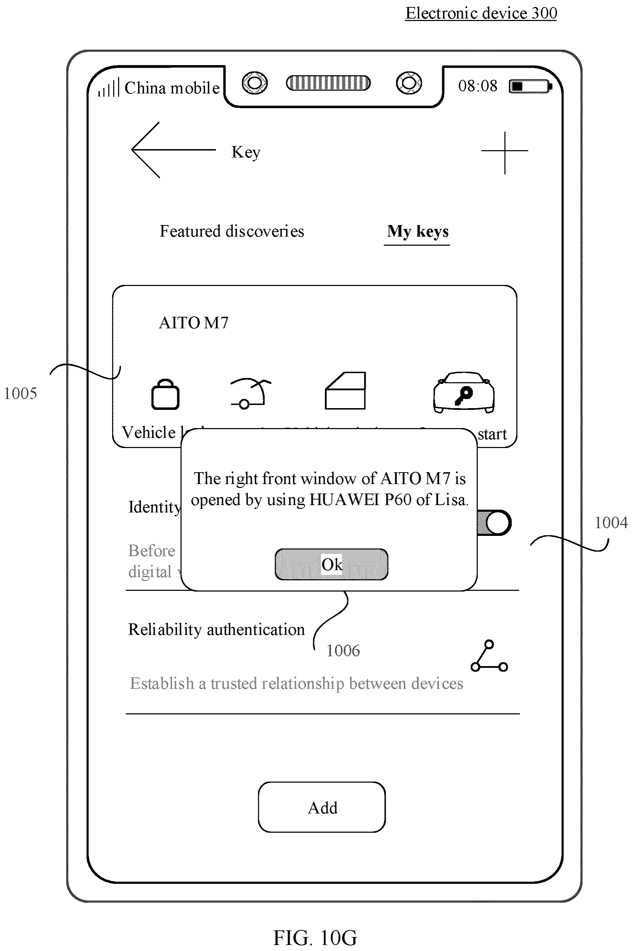

Optionally, after the electronic device 300 receives the feedback message sent by the electronic device 200, the electronic device 300 may display a window 1009 shown in FIG. 10G, the window 1009 may include a text "The right front vehicle window of AITO M7 is opened by using "HUAWEI P60 of Lisa". The window 1009 is used to inform the user that the user B has successfully controlled the vehicle 100 by using the electronic device 200.

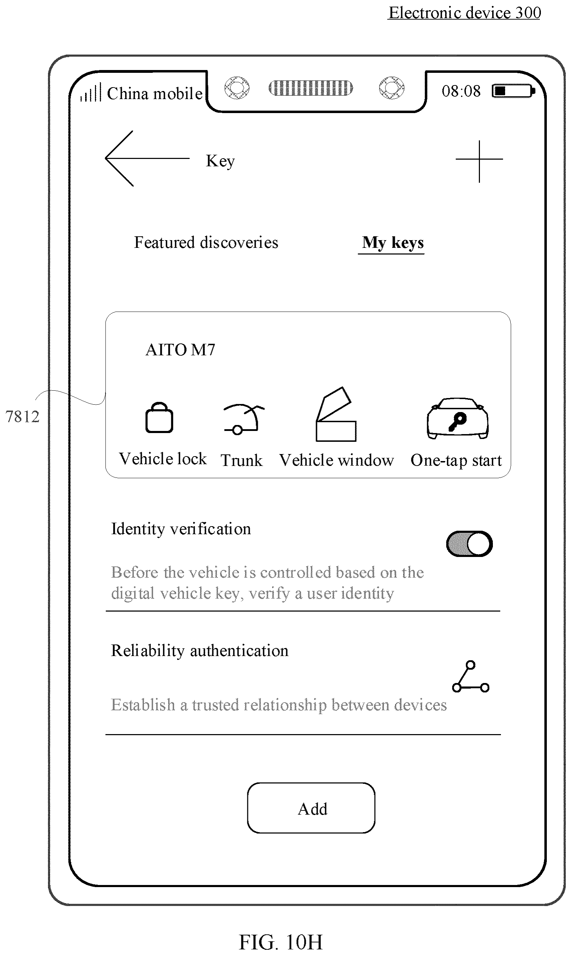

Optionally, after the electronic device 300 receives the feedback message sent by the electronic device 200, the electronic device 300 may also display a user interface shown in FIG. 10H. A widget 7812 is displayed in the user interface shown in FIG. 10H. The widget 7812 is similar to the widget 1005. A difference lies in that a display form of a window opening/closing option in the widget 7812 is changed, to inform the user that a right front window of the vehicle 100 is currently opened.

In some embodiments, after the electronic device 300 may receive an input operation of the user for the vehicle window opening/closing option in the widget 1005, when the electronic device 300 establishes a Bluetooth connection to the vehicle 100, the electronic device 300 may directly control the vehicle 100 based on the first digital vehicle key obtained by applying for the first digital vehicle key. Specifically, the electronic device 300 may encrypt the first control instruction based on the first digital vehicle key, to obtain an encrypted second control instruction, and send the encrypted second control instruction and the device information of the electronic device 300 to the vehicle 100 through a Bluetooth connection. After the vehicle 100 receives the encrypted second control instruction and the device information of the electronic device 300, the vehicle 100 may obtain the first digital vehicle key based on the device information of the electronic device 300, decrypt the encrypted second control instruction based on the first digital vehicle key to obtain the first control instruction, and execute the first control instruction, for example, unlocking the vehicle 100. In this way, the electronic device 300 directly controls the vehicle 100 by using the first digital vehicle key.

After the vehicle 100 executes the first control instruction, the vehicle 100 may send a feedback message to the electronic device 300 through the Bluetooth connection, to inform the user A that the user A has successfully controlled the vehicle 100 by using the electronic device 300.

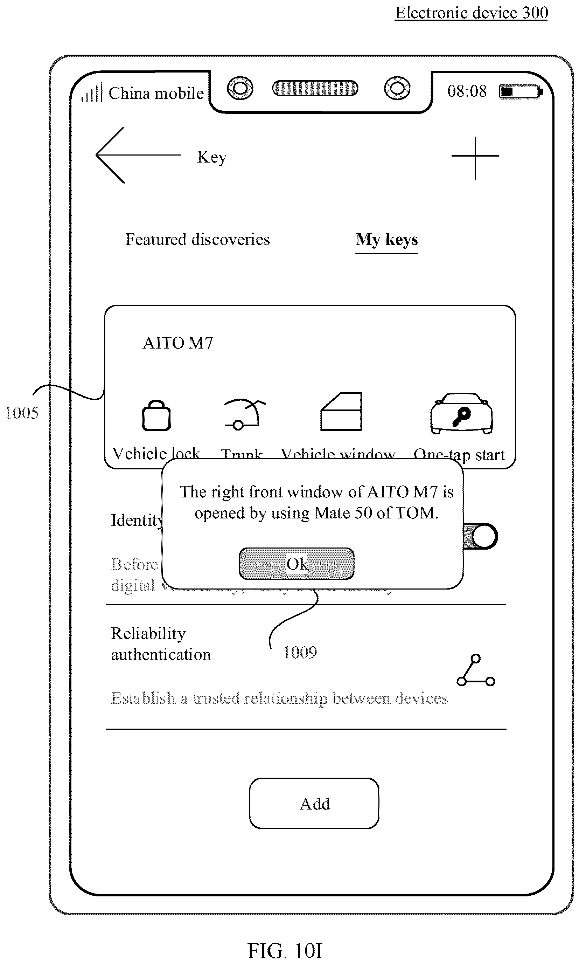

Optionally, after the electronic device 300 receives the feedback message sent by the vehicle 100, the electronic device 300 may display prompt information 1009 shown in FIG. 10I. The prompt information 1009 may include a text "The right front window of AITO M7 is opened by using "Mate 50 of TOM"". The prompt information 1009 is used to inform the user that the user A has successfully controlled the vehicle 100 by using the electronic device 300.

Optionally, the prompt information shown in FIG. 10I is different from the prompt information shown in FIG. 10G, to prompt the user of a device through which the electronic device 300 controls the vehicle 100. In another embodiment, the prompt information shown in FIG. 10H may alternatively be the same as the prompt information shown in FIG. 10F. This is not limited in this application.

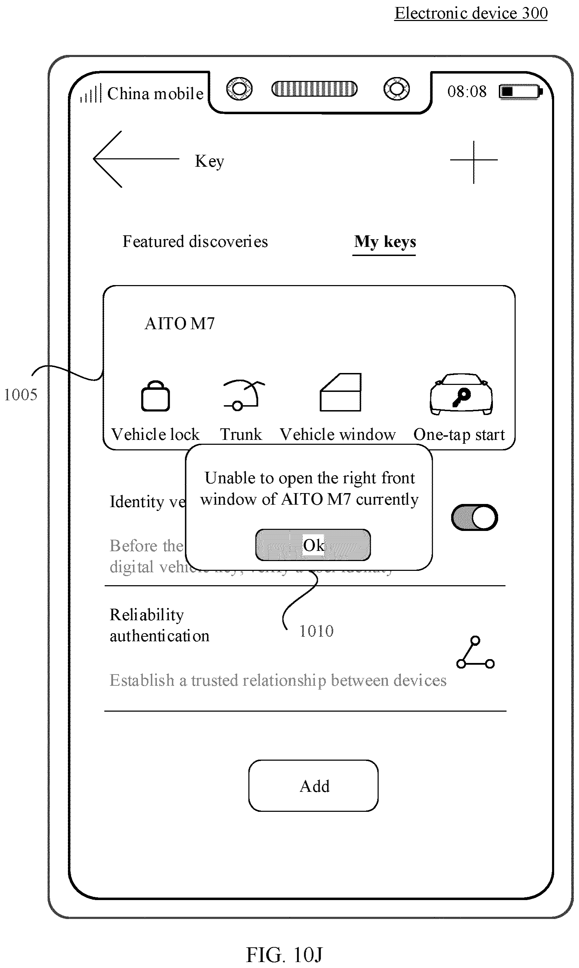

In some embodiments, after the electronic device 300 may receive the input operation of the user for the window opening/closing option, if no communication connection is established between the electronic device 300 and the electronic device 200, and the electronic device 300 cannot control the vehicle 100 by using the electronic device 200, the electronic device 300 may display prompt information 1010 shown in FIG. 10J. The prompt information 1010 is used to inform the user that controlling cannot be currently performed on the vehicle 100.

In some embodiments, after the electronic device 200 receives the vehicle information of the vehicle 100, the key information of the first digital vehicle key, and the first control instruction that are sent by the electronic device 300, and no Bluetooth connection is established between the electronic device 200 and the vehicle 100, or after the electronic device 200 receives the vehicle information of the vehicle 100, the key information of the first digital vehicle key, and the first control instruction that are sent by the electronic device 300, and the electronic device 300 determines that the electronic device 300 has not applied for the digital vehicle key of the vehicle 100, or after the electronic device 200 receives the vehicle information of the vehicle 100, the key information of the first digital vehicle key, and the first control instruction that are sent by the electronic device 300, and when the electronic device 200 determines that a type of the digital vehicle key that is of the vehicle 100 and that is applied for by the electronic device 200 is different from a type of the digital vehicle key that is of the vehicle 100 and that is applied for by the electronic device 300, the electronic device 200 may send a feedback message to the electronic device 300, where the feedback message indicates that controlling cannot be currently performed on the vehicle 100. For example, after the electronic device 300 receives the feedback message sent by the electronic device 200, the electronic device 300 may also display prompt information 1010 shown in FIG. 10J. The prompt information 1010 is used to inform the user that controlling cannot be currently performed on the vehicle 100.

**FIG. 11** **is another diagram of controlling the vehicle 100 by the electronic device 300 by using the electronic device 200.**

S1101: The electronic device 200 displays a first user interface, where the first user interface includes a first option.

For example, the first user interface may be the user interface 790 shown in FIG. 10A, and the first option may be the reliability authentication option shown in the user interface 790.

S1102: The electronic device 200 receives an operation of a user for the first option.

For example, the electronic device 200 may receive an input operation (for example, tapping) of the user for the reliability authentication option shown in the user interface 790, and establish a trusted relationship with the electronic device 300.

Optionally, the input operation of the user for the reliability authentication option shown in the user interface 790 may also be referred to as a second user operation.

In this way, when the electronic device 200 does not establish a trusted relationship with the electronic device 300, the electronic device 200 may actively initiate establishment of a trusted relationship with the electronic device 300.

S1103: The electronic device 200 displays device identifiers of a plurality of devices in response to the user operation, where the device identifiers of the plurality of devices include a device identifier of the electronic device 300.

In response to the user operation, the electronic device 200 may discover a nearby device, and display device identifiers of a plurality of devices. The device identifiers of the plurality of devices include the device identifier of the electronic device 300. For example, the device identifier of the electronic device 300 may be "HUAWEI P60 of Lisa".

Optionally, before the electronic device 200 displays the device identifiers of the plurality of devices, the electronic device 200 may display prompt information. The prompt information indicates the user to enable Bluetooth of the electronic device 200, and enable Bluetooth of another device that needs to establish a trusted relationship with the electronic device 200. In this way, the electronic device 200 can discover the another device near the electronic device 200.

S1104: The electronic device 200 receives an input operation of the user for the device identifier of the electronic device 300.

After the electronic device 200 displays the device identifiers of the plurality of devices, the electronic device 300 may receive an input operation of the user for the device identifiers of the electronic device 200, and actively establish a trusted relationship with the electronic device 300.

For example, the electronic device 200 may receive an input operation of the user for a device identifier "HUAWEI P60 of Lisa", and actively establish a trusted relationship with the electronic device 300.

S1105: The electronic device 200 sends a trusted relationship establishment request to the electronic device 300.

In response to the input operation of the user for the device identifier of the electronic device 300, the electronic device 200 may send the trusted relationship establishment request to the electronic device 300.

Optionally, the trusted relationship establishment request may also be referred to as a trusted connection establishment request.

S1106: The electronic device 300 may display prompt information in response to the trusted relationship establishment request.

The prompt information is used to inform the electronic device 300 that the electronic device 200 requests to establish a trusted relationship with the electronic device 300.

For example, the prompt information may be the window 1006 shown in FIG. 10D.

Optionally, the window 1006 shown in FIG. 10D may also be referred to as first prompt information.

S1107: The electronic device 300 receives an operation that is performed by the user and that is of determining to establish a trusted relationship.

For example, the electronic device 300 may receive an input operation (for example, tapping) of the user for the continue option in the window 1006 shown in FIG. 10D, and in response to the input operation of the user, the electronic device 300 confirms establishment of a trusted relationship.

Optionally, the continue option in the window 1006 shown in FIG. 10D may also be referred to as a second option.

S1108: The electronic device 300 sends a trusted relationship establishment confirmation message to the electronic device 200.

S1109: The electronic device 200 establishes a trusted relationship with the electronic device 300.

Optionally, the trusted relationship establishment confirmation message may also be referred to as a trusted connection establishment confirmation message.

In response to an operation of determining, by the user, to establish a trusted relationship, the electronic device 300 may send the trusted relationship establishment confirmation message to the electronic device 200, to inform the electronic device 200 that the electronic device 300 determines to establish a trusted relationship.

After the electronic device 200 receives the trusted relationship establishment confirmation message sent by the electronic device 300, the electronic device 200 may establish a trusted relationship with the electronic device 300.

The electronic device 200 and the electronic device 300 may establish a trusted relationship in the following manners, but are not limited to the following manners.

Manner 1: The electronic device 200 may obtain parameter information of the electronic device 200. The parameter information of the electronic device 200 may include but is not limited to one or more of the following: a device identifier of the electronic device 200, a device type of the electronic device 200, a first random number, and the like. The first random number is used by the electronic device 200 and the electronic device 300 to generate a trusted credential. The electronic device 200 further needs to send the parameter information of the electronic device 200 to the electronic device 300. After receiving the parameter information of the electronic device 200 sent by the electronic device 200, the electronic device 300 stores the parameter information of the electronic device 200, and obtains parameter information of the electronic device 300. Then, the electronic device 300 sends the parameter information of the electronic device 300 to the electronic device 200. The parameter information of the electronic device 300 may include but is not limited to one or more of the following: a device identifier of the electronic device 300, a device type of the electronic device 300, a second random number, and the like. The second random number is also used by the electronic device 200 and the electronic device 300 to generate a trusted credential. After the electronic device 200 and the electronic device 300 obtain the first random number and the second random number, the electronic device 200 may generate a second trusted credential based on the first random number and the second random number, and the electronic device 300 may generate a first trusted credential based on the first random number and the second random number, and store the first trusted credential and the second trusted credential. The trusted credentials are used by the electronic device 200 and the electronic device 300 to subsequently verify whether the electronic device 200 and the electronic device 300 are mutually trusted devices. Optionally, after the electronic device 300 generates the trusted credential based on the first random number and the second random number, the electronic device 300 may send a feedback message to the electronic device 200. The feedback message is used to inform the electronic device 300 that the electronic device 200 has generated the trusted credential.

In another embodiment, the electronic device 300 may not send the parameter information of the electronic device 300, and the electronic device 200 and the electronic device 300 only need to generate trusted credentials based on the first random number. This is not limited in this application either.

After both the electronic device 200 and the electronic device 300 store the first trusted credential and the second trusted credential, the electronic device 200 and the electronic device 300 may determine, based on the first trusted credential and the second trusted credential, that the electronic device 200 and the electronic device 300 are mutually trusted devices.

In some embodiments, the first trusted credential and the second trusted credential have time validity. If duration in which the electronic device 200 stores the first trusted credential and duration in which the electronic device 300 stores the second trusted credential exceed first duration, the electronic device 200 and the electronic device 300 may delete the first trusted credential and the second trusted credential. In addition, a new trusted credential is re-determined in Manner 1, and a trusted relationship between the electronic device 200 and the electronic device 300 is re-established.

Manner 2: The electronic device 200 may obtain device information of the electronic device 200. The device information of the electronic device 200 may include but is not limited to one or more of the following: a device identifier of the electronic device 200, a device type of the electronic device 200, and the like. The electronic device 200 further needs to send the device information of the electronic device 200 to the electronic device 300. After receiving the device information of the electronic device 200 sent by the electronic device 200, the electronic device 300 stores the device information of the electronic device 200. The electronic device 300 may determine, based on the device information of the electronic device 200, that the electronic device 200 is a trusted device. The electronic device 300 also needs to obtain device information of the electronic device 300. The device information of the electronic device 300 may include but is not limited to one or more of the following: a device identifier of the electronic device 300, a device type of the electronic device 300, and the like. The electronic device 300 further needs to send the device information of the electronic device 300 to the electronic device 200. After receiving the device information of the electronic device 300 sent by the electronic device 300, the electronic device 200 stores the device information of the electronic device 300. The electronic device 200 may determine, based on the device information of the electronic device 300, that the electronic device 300 is a trusted device.

In addition to the foregoing manners, the electronic device 200 and the electronic device 300 may further establish a trusted relationship in another manner. This is not limited in this application.

Optionally, the electronic device 300 may actively initiate establishment of a trusted relationship to the electronic device 200.

Optionally, in some embodiments, user accounts logged in to the electronic device 200 and the electronic device 300 are different, but a first user account and a second user account are associated with each other. It may also be determined that the two devices are in an untrusted relationship. The two devices further need to establish a trusted connection in a manner of S1101 to S1109.

S1110: The electronic device 300 controls the vehicle 100 based on a digital vehicle key.

After the electronic device 200 and the electronic device 300 store the first trusted credential and the second trusted credential, when the electronic device 300 establishes a Bluetooth connection to the vehicle 100, the electronic device 300 may directly control the vehicle 100 by using a first digital vehicle key. For details, refer to the descriptions in the embodiment of FIG. 9A-1 to FIG. 9A-3. Details are not described herein again in this application.

When the electronic device 200 establishes a Bluetooth connection to the vehicle 100, and the electronic device 300 cannot establish a Bluetooth connection to the vehicle 100, the electronic device 300 cannot directly control the vehicle 100 by using the first digital vehicle key. However, the electronic device 200 and the electronic device 300 have established a trusted relationship in a manner of S1101 to S1108, and the electronic device 200 and the electronic device 300 are mutually trusted devices. In this case, the electronic device 200 may control the vehicle 100 by using the electronic device 300. Details are similar to the descriptions in the embodiment of S905 to S919 in the embodiment of FIG. 9A-1 to FIG. 9A-3. For details, refer to the descriptions in the embodiment of S905 to S919 in the embodiment of FIG. 9A-1 to FIG. 9A-3. Details are not described herein again in this application.

However, this application has the following differences from the embodiment of S905 to S919.

If the electronic device 200 and the electronic device 300 establish a trusted relationship in Manner 1, this application has the following differences from the embodiment of S905 to S919.

Difference 1: In S905, in addition to sending the vehicle information of the vehicle 100 and the key information of the first digital vehicle key to the electronic device 200, the electronic device 300 further needs to send the first trusted credential and the device information of the electronic device 300 to the electronic device 300. The first trusted credential and the device information of the electronic device 300 are used by the electronic device 300 to verify whether the electronic device 200 is a trusted device.

Difference 2: Before performing S910, the electronic device 200 may obtain, based on the device information of the electronic device 300, a second trusted credential stored in the electronic device 200.

When the second trusted credential stored in the electronic device 200 is the same as the first trusted credential sent by the electronic device 300 or meets a preset condition, the electronic device 200 may determine that the electronic device 300 is a trusted device, and the electronic device 200 may send a verification success message to the electronic device 300. After obtaining the verification success message, the electronic device 300 may control the vehicle 100 by using the electronic device 200.

When the second trusted credential stored in the electronic device 200 is different from the first trusted credential sent by the electronic device 300 or does not meet the preset condition, the electronic device 200 may determine that the electronic device 300 is an untrusted device. In this case, the electronic device 200 may send a verification failure message to the electronic device 300, and the electronic device 300 cannot control the vehicle 100 by using the electronic device 200.

If the electronic device 200 and the electronic device 300 establish a trusted relationship in Manner 2, this application has the following differences from the embodiment of S905 to S919.

Difference 1: In S905, in addition to sending the vehicle information of the vehicle 100 and the key information of the first digital vehicle key to the electronic device 200, the electronic device 300 further needs to send the device information of the electronic device 300 to the electronic device 300. The device information of the electronic device 300 is used by the electronic device 300 to verify whether the electronic device 200 is a trusted device.

When the electronic device 200 determines, based on the device information of the electronic device 300, that the electronic device 300 is a trusted device, the electronic device 200 may send a verification success message to the electronic device 300. After obtaining the verification success message, the electronic device 300 may control the vehicle 100 by using the electronic device 200.

When the electronic device 200 determines, based on the device information of the electronic device 300, that the electronic device 300 is not a trusted device, for example, no trusted relationship has been established between the electronic device 200 and the electronic device 300, the electronic device 200 does not store the device information of the electronic device 300, and the electronic device 200 cannot determine that the electronic device 300 is a trusted device. In this case, the electronic device 200 may send a verification failure message to the electronic device 300, and the electronic device 300 cannot control the vehicle 100 by using the electronic device 200.

Optionally, when the electronic device 200 determines that the electronic device 300 is not a trusted device, the electronic device 300 may alternatively prompt the user to determine a trusted relationship through negotiation in the manner of S1101 to S 1108. Then, after the electronic device 300 and the electronic device 200 establish a trusted relationship, the electronic device 300 may control the vehicle 100 by using the electronic device 200.

**Different devices of a plurality of users control the vehicle 100.**

A user A has the electronic device 200, and a user B has the electronic device 300. The user A and the user B approach the vehicle at the same time. If the electronic device 300 first establishes a Bluetooth connection to the vehicle 100, the electronic device 300 cannot establish a Bluetooth connection to the vehicle 100. The electronic device 300 cannot control the vehicle 100 based on a digital vehicle key. In this case, after the vehicle 100 establishes a Bluetooth connection to the electronic device 200, the vehicle 100 may periodically/irregularly send a Bluetooth broadcast, so that another device near the vehicle 100 can discover the vehicle 100. For example, the electronic device 300 receives the Bluetooth broadcast sent by the vehicle 100, and sends a Bluetooth connection establishment request to the vehicle 100 in response to the Bluetooth broadcast sent by the vehicle 100. In response to the Bluetooth connection establishment request, the vehicle 100 may send a Bluetooth connection disconnection request to the electronic device 200. After the electronic device 200 receives the Bluetooth connection disconnection request and disconnects a Bluetooth connection to the vehicle 100, the vehicle 100 may establish a Bluetooth connection to the electronic device 300. Then, the electronic device 300 may control the vehicle 100 by using the digital vehicle key.

**FIG. 12A** **and** **FIG. 12B** **are diagrams of controlling the vehicle 100 by the electronic device 300 through a Bluetooth connection.**

**The vehicle 100 disconnects a Bluetooth connection to the electronic device 200, and establishes a Bluetooth connection to the electronic device 300 (****FIG. 12A to FIG. 12B****).**

First, the electronic device 200 establishes a Bluetooth connection to the vehicle 100. However, the vehicle 100 still periodically/irregularly sends a Bluetooth broadcast, so that another device near the vehicle 100 can discover the vehicle 100. For example, the electronic device 300 may receive the Bluetooth broadcast sent by the vehicle 100.

Refer to the description in the embodiment in FIG. 10A. The electronic device 300 may receive an input operation of the user for the vehicle window opening/closing option on the widget 1005 displayed on the user interface shown in FIG. 10E. In response to the input operation of the user, when the electronic device 300 receives the Bluetooth broadcast sent by the vehicle 100, the electronic device 300 may send a Bluetooth connection establishment request to the vehicle 100.

In response to the Bluetooth connection establishment request sent by the electronic device 300, the vehicle 100 determines whether a Bluetooth connection is established to another device. When no Bluetooth connection is established to the another device, the vehicle 100 may directly establish the Bluetooth connection to the electronic device 300. When a Bluetooth connection to the another device is established, the vehicle 100 may request to disconnect the Bluetooth connection to the another device.

For example, when the vehicle 100 determines that a Bluetooth connection is established to the electronic device 200, the vehicle 100 may send a Bluetooth connection disconnection request to the electronic device 200.

In response to the Bluetooth connection disconnection request sent by the vehicle 100, the electronic device 200 may display prompt information 1201 shown in FIG. 12A. The prompt information may include "Mate 50 of TOM requests to connect to Bluetooth of AITO M7. Do you want to disconnect the Bluetooth connection to AITO M7?". The prompt information 1201 further includes an ok option and a cancel option. The user may disconnect the Bluetooth connection between the electronic device 200 and the vehicle 100 by using the ok option, or the user may continue to maintain the Bluetooth connection to the vehicle 100 by using the cancel option.

For example, as shown in FIG. 12A, the electronic device 200 may receive an input operation (for example, tapping) of the user for the ok option in the prompt information 1201, and in response to the input operation of the user, the electronic device 200 may disconnect the Bluetooth connection to the vehicle 100.

After receiving the Bluetooth connection establishment request sent by the electronic device 300, in response to disconnecting the Bluetooth connection to the vehicle 100, the vehicle 100 may establish a Bluetooth connection to the electronic device 300.

Optionally, after the electronic device 300 establishes a Bluetooth connection to the vehicle 100, the electronic device 300 may display prompt information 1202 shown in FIG. 12B. The prompt information is used to inform the user that the electronic device 300 has established a Bluetooth connection to the vehicle 100.

After the electronic device 300 establishes a Bluetooth connection to the vehicle 100, when the electronic device 300 applies for a digital vehicle key of the vehicle 100, in response to an input operation of the user for the vehicle window opening/closing option in the widget 1005 displayed on the user interface 1004 shown in FIG. 10E, the electronic device 300 may generate a first control instruction, and send the first control instruction to the vehicle 100. The vehicle 100 may execute the first control instruction, and return an execution result to the electronic device 300.

After the electronic device 300 receives the execution result sent by the vehicle 100, the electronic device 300 may display the prompt information 1009 shown in FIG. 10H. The prompt information 1009 is used to inform the user that a right front window of the vehicle 100 is opened by using the electronic device 300.

In some embodiments, when the vehicle 100 can establish a Bluetooth connection to only one device at a same moment, if the electronic device 200 establishes a Bluetooth connection to the vehicle 100, the electronic device 300 cannot be connected to the vehicle 100 through Bluetooth. The electronic device 300 cannot control the vehicle 100 by using a Bluetooth vehicle key. Optionally, after the vehicle 100 establishes a Bluetooth connection to the electronic device 200, the vehicle 100 may periodically/irregularly send a Bluetooth broadcast, so that another device near the vehicle 100 can discover the vehicle 100. For example, the electronic device 300 receives the Bluetooth broadcast sent by the vehicle 100, and sends a Bluetooth connection establishment request to the vehicle 100 in response to the Bluetooth broadcast sent by the vehicle 100. In response to the Bluetooth connection establishment request, the vehicle 100 may send a Bluetooth connection disconnection request to the electronic device 200. After the electronic device 200 receives the Bluetooth connection disconnection request and disconnects a Bluetooth connection to the vehicle 100, the vehicle 100 may establish a Bluetooth connection to the electronic device 300. Then, the electronic device 300 may control the vehicle 100 by using the digital vehicle key.

**FIG. 13A** **and** **FIG. 13B** **are a schematic flowchart of a method for establishing a Bluetooth connection to the vehicle 100 and controlling the vehicle 100 by the electronic device 300.**

S1301: The electronic device 200 establishes a Bluetooth connection to the vehicle 100.

The connection between the electronic device 200 and the vehicle 100 may be referred to as a second communication connection. The second communication connection may be a Bluetooth connection, or the second communication connection may be another connection. This is not limited in this application.

S1302: Periodically/irregularly send a Bluetooth broadcast with the vehicle 100.

After the vehicle 100 establishes a Bluetooth connection to the electronic device 200, the vehicle 100 may periodically/irregularly send a Bluetooth broadcast, so that another device near the vehicle 100 can discover the vehicle 100. For example, the electronic device 300 may receive the Bluetooth broadcast sent by the vehicle 100.

In addition to the Bluetooth broadcast, the vehicle 100 may further send another broadcast. This is not limited in this application.

S1303: The electronic device 300 receives a user operation, and controls the vehicle 100 based on a first digital vehicle key.

Optionally, if the electronic device 300 has applied for the digital vehicle key of the vehicle 100, a widget corresponding to the digital vehicle key of the vehicle 100, for example, a widget 1005 shown in FIG. 10E, may be displayed in the first application on the electronic device 300.

For example, refer to the description in the embodiment in FIG. 10A. The electronic device 300 may receive an input operation of the user for the vehicle window opening/closing option on the widget 1005 displayed in the user interface shown in FIG. 10E, and the electronic device 300 may control the vehicle 100 based on the first digital vehicle key.

S1304: The electronic device 300 needs to determine whether the electronic device 300 establishes a Bluetooth connection to the vehicle 100.

When the electronic device 300 establishes a Bluetooth connection to the vehicle 100, the electronic device 300 may directly control the vehicle 100 based on the first digital vehicle key through the Bluetooth connection to the vehicle 100, that is, S1311 is performed.

When the electronic device 300 does not establish a Bluetooth connection to the vehicle 100, the electronic device 300 needs to request to establish a Bluetooth connection to the vehicle 100, that is, S1305 is performed.

S1305: The electronic device 300 sends a Bluetooth connection establishment request to the vehicle 100.

In response to the user operation, when the electronic device 300 establishes the Bluetooth connection to the vehicle 100, after the electronic device 300 receives the Bluetooth broadcast sent by the vehicle 100, the electronic device 300 may send the Bluetooth connection establishment request to the vehicle 100.

S1306: The vehicle 100 sends a Bluetooth connection disconnection request to the electronic device 200.

After the vehicle 100 receives the Bluetooth connection establishment request sent by the electronic device 300, if the vehicle 100 determines that there is a Bluetooth connection between the vehicle 100 and the electronic device 200 at home, the vehicle 100 may send the Bluetooth connection disconnection request to the electronic device 200.

Optionally, after the vehicle 100 receives the Bluetooth connection establishment request sent by the electronic device 300, if the vehicle 100 determines that the vehicle 100 does not establish a Bluetooth connection to another device, the vehicle 100 may directly establish a Bluetooth connection to the electronic device 300, that is, S1309 is performed.

S1307: The electronic device 200 displays prompt information, where the prompt information is used to inform the user whether to disconnect the Bluetooth connection to the vehicle 100.

Optionally, the prompt information in S1307 may also be referred to as second prompt information.

S1308: The electronic device 200 receives a user operation, and determines to disconnect the Bluetooth connection to the vehicle 100.

Optionally, in some embodiments, S1307 and S1308 may not be performed. After the electronic device 200 receives the Bluetooth connection disconnection request sent by the vehicle 100, the electronic device 200 may automatically disconnect the Bluetooth connection to the vehicle 100 without user intervention.

S1309: The electronic device 200 disconnects the Bluetooth connection to the vehicle 100.

In response to the Bluetooth connection disconnection request sent by the vehicle 100, the electronic device 200 may prompt information, where the prompt information is used to inform the user whether to disconnect the Bluetooth connection to the vehicle 100. The electronic device 200 may receive a user operation, and determine to disconnect the Bluetooth connection to the vehicle 100.

For example, the prompt information may be the prompt information 1201 shown in FIG. 12A. The electronic device 200 may receive an input operation (for example, tapping) of the user for the ok option in the prompt information 1201, and in response to the input operation of the user, the electronic device 200 may disconnect the Bluetooth connection to the vehicle 100.

S1310: The vehicle 100 establishes a Bluetooth connection to the electronic device 300.

Optionally, the communication connection between the vehicle 100 and the electronic device 300 may be referred to as a third communication connection. The third communication connection may be a Bluetooth connection, or the third communication connection may be another connection. This is not limited in this application.

After the vehicle 100 disconnects the Bluetooth connection to the electronic device 200, in response to the Bluetooth connection establishment request sent by the electronic device 300, the vehicle 100 may establish a Bluetooth connection to the electronic device 300.

Optionally, after the electronic device 300 establishes a Bluetooth connection to the vehicle 100, the electronic device 300 may display prompt information 1202 shown in FIG. 12B. The prompt information is used to inform the user that the electronic device 300 has established a Bluetooth connection to the vehicle 100.

Optionally, before the vehicle 100 establishes the Bluetooth connection to the electronic device 300, in response to the Bluetooth connection establishment request sent by the electronic device 300, the vehicle 100 further needs to perform Bluetooth authentication with the electronic device 300. Specifically, the electronic device 300 sends Bluetooth authentication information to the vehicle 100, and the vehicle 100 needs to determine whether the Bluetooth authentication information sent by the electronic device 300 is authorized. When the Bluetooth authentication information is authorized, the vehicle 100 may establish a Bluetooth connection to the electronic device 300. When the Bluetooth authentication information is unauthorized, the vehicle 100 cannot establish a Bluetooth connection to the electronic device 300.

Optionally, when the Bluetooth connection between the vehicle 100 and the electronic device 300 fails, the electronic device 300 may display prompt information. The prompt information is used to inform the user that the Bluetooth connection to the vehicle 100 cannot be established currently, and the user needs to try again later.

The Bluetooth authentication information includes but is not limited to one or more of the following: device information, a Bluetooth version number, and the like of the electronic device 300. The vehicle 100 mainly verifies whether the Bluetooth version number of the electronic device 300 is consistent with a Bluetooth version number of the vehicle 100, whether the electronic device 300 is an authorized device, and the like. The vehicle 100 may further verify more other information. This is not limited in this application.

S1311: The electronic device 300 encrypts a second control instruction based on the first digital vehicle key, to obtain an encrypted second control instruction.

Optionally, digital vehicle keys of different key types correspond to different vehicle-to-everything specification standards for digital vehicle keys. For example, a vehicle-to-everything specification standard for a digital vehicle key corresponding to a Bluetooth digital vehicle key is different from a vehicle-to-everything specification standard for a digital vehicle key corresponding to an NFC digital vehicle key.

For example, the first digital vehicle key may be a Bluetooth digital vehicle key. The electronic device 300 may obtain, based on an identifier of the Bluetooth digital vehicle key, a vehicle-to-everything specification standard for a digital vehicle key corresponding to the Bluetooth digital vehicle key, and generate a second control instruction based on the vehicle-to-everything specification standard for a digital vehicle key corresponding to the Bluetooth digital vehicle key, where a format of the second control instruction meets a requirement of the vehicle-to-everything specification standard for a digital vehicle key corresponding to the Bluetooth digital vehicle key.

S1312: The electronic device 300 sends the encrypted second control instruction and the device information of the electronic device 300 to the vehicle 100.

After the electronic device 300 establishes a Bluetooth connection to the vehicle 100, the electronic device 300 may determine the first digital vehicle key based on vehicle information (for example, vehicle information of the vehicle 100) of a vehicle on which controlling needs to be currently performed. The first digital vehicle key is a digital vehicle key used to control the vehicle 100. After obtaining the first digital vehicle key, the electronic device 300 encrypts the first control instruction by using the second digital vehicle key, to obtain the encrypted second control instruction.

Then, the electronic device 300 sends the encrypted second control instruction and the device information of the electronic device 300 to the vehicle 100. The device information of the electronic device 300 is used by the vehicle 100 to determine the first digital vehicle key.

S1313: The vehicle 100 obtains the first digital vehicle key based on the device information of the electronic device 300.

S1314: The vehicle 100 decrypts the encrypted second control instruction based on the first digital vehicle key, to obtain the second control instruction.

Optionally, S1311 to S1314 may not be performed, and the electronic device 300 directly sends the second control instruction to the first vehicle.

S1315: The vehicle 100 executes the second control instruction.

S1316: The vehicle 100 sends an execution result to the electronic device 300.

It may be understood that a correspondence between device information of one or more devices and a digital vehicle key is stored in the vehicle 100.

It may be understood that a correspondence between device information of one or more devices and a digital vehicle key is stored in the vehicle 100. After the vehicle 100 receives encrypted second control instruction and the device information of the electronic device 300 that are sent by the electronic device 300, the vehicle 100 may obtain the first digital vehicle key based on the device information of the electronic device 300.

The vehicle 100 may decrypt the encrypted second control instruction based on the first digital vehicle key, to obtain the second control instruction, and execute the second control instruction. After the vehicle 100 executes the second control instruction, the vehicle 100 further needs to send an execution result to the electronic device 300, to notify the electronic device 300 of the execution result of the vehicle 100.

For example, the second control instruction may be used to control the vehicle 100 to be unlocked. After the vehicle 100 is unlocked, the vehicle 100 may notify the electronic device 300 of an execution result indicating that the vehicle is unlocked.

Optionally, after the electronic device 300 receives the execution result sent by the vehicle 100, the electronic device 300 may display prompt information, where the prompt information is used to inform the vehicle 100 that the second control instruction is executed. For example, after the electronic device 300 receives an execution result that is sent by the vehicle 100 and that indicates that a right front vehicle window is opened, the electronic device 300 may display the prompt information 1009 shown in FIG. 10H, where the prompt information 1009 is used to inform the user that a right front vehicle window of the vehicle 100 is opened by using the electronic device 300.

This application provides an electronic device, which is a first electronic device. The first electronic device includes a processor and a memory. The memory is coupled to the processor, the memory is configured to store computer program code, the computer program code includes computer instructions, and the processor invokes the computer instructions to perform the vehicle control method provided in this application.

This application provides an electronic device, which is a second electronic device. The second electronic device includes a processor and a memory. The memory is coupled to the processor, the memory is configured to store computer program code, the computer program code includes computer instructions, and the processor invokes the computer instructions to perform the vehicle control method provided in this application.

This application provides a computer-readable storage medium, configured to store computer instructions. When the computer instructions are run on a first electronic device, the first electronic device is enabled to perform the vehicle control method provided in this application.

This application provides a computer-readable storage medium, configured to store computer instructions. When the computer instructions are run on a second electronic device, the second electronic device is enabled to perform the vehicle control method provided in this application.

This application provides a computer program product. When the computer program product runs on a first electronic device, the first electronic device is enabled to perform the vehicle control method provided in this application.

This application provides a computer program product. When the computer program product runs on a second electronic device, the second electronic device is enabled to perform the vehicle control method provided in this application.

It may be understood that each user interface described in embodiments of this application is merely an example interface, and constitutes no limitation on the solutions of this application. In another embodiment, the user interface may use different interface layouts, may include more or fewer controls, and may add or reduce other function options, and provided that the user interface is based on a same inventive idea provided in this application, all fall within the protection scope of this application.

It should be noted that, if no contradiction or conflict occurs, any feature or any part of any feature in any embodiment of this application may be combined, and a combined technical solution also falls within the scope of embodiments of this application.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A vehicle control system, wherein the system comprises a first electronic device, a second electronic device, and a first vehicle, a first communication connection is established between the first electronic device and the second electronic device, a second communication connection is established between the first electronic device and the first vehicle, the second electronic device stores a first digital vehicle key of the first vehicle, and the first electronic device stores a second digital vehicle key of the first vehicle;
the second electronic device is configured to: receive and respond to a first user operation, and send a first control instruction and vehicle information of the first vehicle to the first electronic device through the first communication connection, wherein the first control instruction indicates the first vehicle to perform a first operation;
the first electronic device is configured to: receive the first control instruction and the vehicle information of the first vehicle, and determine, based on the vehicle information of the first vehicle, that the first electronic device stores the second digital vehicle key;
the first electronic device is further configured to send the first control instruction to the first vehicle through the second communication connection; and
the first vehicle is configured to: receive the first control instruction, and perform the first operation based on the first control instruction.

2. The system according to claim 1, wherein the first electronic device is further configured to determine that a key type of the first digital vehicle key is the same as a key type of the second digital vehicle key.

3. The system according to claim 2, wherein the second electronic device is further configured to send key information of the first digital vehicle key to the first electronic device; and
the first electronic device is further configured to determine, based on the key information of the first digital vehicle key and key information of the second digital vehicle key, that the key type of the first digital vehicle key is the same as the key type of the second digital vehicle key.

4. The system according to any one of claims 1 to 3, wherein the first electronic device is specifically configured to:
encrypt the first control instruction based on the second digital vehicle key, to obtain an encrypted first control instruction; and
send the encrypted first control instruction to the first vehicle through the second communication connection; and
the first vehicle is specifically configured to:
receive the encrypted first control instruction; and
decrypt the encrypted first control instruction based on the second digital vehicle key, to obtain the first control instruction, and perform the first operation based on the first control instruction.

5. The system according to any one of claims 1 to 4, wherein a first user account is logged in to the first electronic device, a second user account is logged in to the first electronic device, and the first user account and the second user account are the same or are associated with each other.

6. The system according to any one of claims 1 to 4, wherein the second electronic device is further configured to display a QR code; and the first electronic device is further configured to scan the QR code by using a camera to establish a trusted connection to the second electronic device.

7. The system according to any one of claims 1 to 4, wherein the first electronic device is further configured to:
display a first user interface, wherein a first option is displayed in the first user interface, and
receive and respond to a second user operation for the first option, and send a trusted connection establishment request to the second electronic device;
the second electronic device is further configured to:
display first prompt information in response to the trusted connection establishment request, wherein the first prompt information is used to prompt a user whether to establish a trusted connection to the first electronic device, and
receive an input operation of the user for a second option in the first prompt information, and send a trusted connection establishment confirmation message to the first electronic device; and
the first electronic device is further configured to establish the trusted connection to the second electronic device in response to the trusted connection establishment confirmation message.

8. The system according to any one of claims 1 to 7, wherein the system further comprises a third electronic device, wherein the third electronic device stores a third digital vehicle key of the first vehicle;
the first vehicle is further configured to send a broadcast, wherein the broadcast is used by another device to discover the first vehicle;
the third electronic device is further configured to:
receive and respond to a third user operation, wherein the third user operation is used to control the first vehicle to perform a second operation, and
receive and respond to the broadcast sent by the first vehicle, and send a third communication connection establishment request to the vehicle;
the first vehicle is further configured to send a second communication connection disconnection request to the first electronic device in response to the third communication connection establishment request;
the first electronic device is further configured to: receive a fourth user operation, and disconnect the second communication connection to the first vehicle;
the first vehicle is further configured to establish the third communication connection to the third electronic device;
the third electronic device is further configured to send a second control instruction to the first vehicle through the third communication connection; and
the first vehicle is further configured to receive the second control instruction, and perform the second operation based on the second control instruction.

9. The system according to claim 8, wherein the first electronic device is further configured to display second prompt information in response to the second communication connection disconnection request, wherein the second prompt information is used to prompt the user whether to disconnect the second communication connection to the first vehicle; and
the first electronic device is specifically configured to: receive and respond to the fourth user operation for a second option in the second prompt information, and disconnect the second communication connection to the first vehicle.

10. The system according to any one of claims 1 to 9, wherein the first vehicle is further configured to: after executing the first control instruction, send a first message to the first electronic device through the second communication connection;
the first electronic device is further configured to send the first message to the second electronic device through the first communication connection; and
the second electronic device is further configured to display third prompt information in response to the first message, wherein the third prompt information is used to inform the user that the second electronic device has controlled, by using the first electronic device, the first vehicle to perform the first operation.

11. The system according to claim 2 or 3, wherein the first electronic device is further configured to: when the second digital vehicle key stored in the first electronic device fails to be determined based on the vehicle information of the first vehicle, and/or when the key type of the first digital vehicle key is different from the key type of the second digital vehicle key, send a second message to the second electronic device through the first communication connection; and
the second electronic device is further configured to display fourth prompt information in response to the second message, wherein the fourth prompt information is used to inform the user that the first electronic device cannot currently control the first vehicle to perform the first operation.

12. The system according to any one of claims 1 to 11, wherein the key information of the first digital vehicle key comprises any one or more of the following: key type and key identifier; and
the vehicle information of the first vehicle comprises any one or more of the following: vehicle identification number, vehicle model, vehicle manufacturer, vehicle production date, vehicle engine model, and vehicle license plate number.

13. The system according to any one of claims 1 to 12, wherein the first communication connection comprises any one of the following: Bluetooth connection, network connection, and server connection; and
the second communication connection comprises a Bluetooth connection.

14. The system according to any one of claims 1 to 13, wherein the first control instruction comprises any one of the following: unlocking the vehicle, locking the vehicle, opening a vehicle window, closing the vehicle window, turning on an air conditioner, turning off the air conditioner, opening a trunk, closing the trunk, starting playing music, and pausing playing music.

15. A vehicle control method, wherein the method comprises:
receiving, by a first electronic device through a first communication connection, a first control instruction and vehicle information of a first vehicle that are sent by a second electronic device, wherein the first control instruction and the vehicle information of the first vehicle are sent to the first electronic device after the second electronic device receives a first user operation of a user, and the first control instruction instructs the first vehicle to perform a first operation;
determining, by the first electronic device based on the vehicle information of the first vehicle, that the first electronic device stores the second digital vehicle key, wherein the second electronic device stores a first digital vehicle key of the first vehicle; and
sending, by the first electronic device, the first control instruction to the first vehicle through the second communication connection.

16. The method according to claim 15, wherein before sending, by the first electronic device, the first control instruction to the first vehicle through the second communication connection, the method further comprises:
determining, by the first electronic device, that a key type of the first digital vehicle key is the same as a key type of the second digital vehicle key.

17. The method according to claim 16, wherein before sending, by the first electronic device, the first control instruction to the first vehicle through the second communication connection, the method further comprises:
receiving, by the first electronic device through the first communication connection, key information that is of the first digital vehicle key and that is sent by the second electronic device; and
determining, by the first electronic device, that the key type of the first digital vehicle key is the same as the key type of the second digital vehicle key specifically comprises:
determining, by the first electronic device based on the key information of the first digital vehicle key and key information of the second digital vehicle key, that the key type of the first digital vehicle key is the same as the key type of the second digital vehicle key.

18. The method according to any one of claims 15 to 17, wherein sending, by the first electronic device, the first control instruction to the first vehicle through the second communication connection specifically comprises:
encrypting, by the first electronic device, the first control instruction based on the second digital vehicle key, to obtain an encrypted first control instruction; and
sending, by the first electronic device, the encrypted first control instruction to the first vehicle through the second communication connection.

19. The method according to any one of claims 15 to 18, wherein a first user account is logged in to the first electronic device, a second user account is logged in to the first electronic device, and the first user account and the second user account are the same or are associated with each other.

20. The method according to any one of claims 15 to 18, wherein before receiving, by the first electronic device through the first communication connection, the first control instruction and the vehicle information of the first vehicle that are sent by the second electronic device, the method further comprises:
establishing, by the first electronic device, a trusted connection to the second electronic device by scanning, by using a camera, a QR code displayed on the second electronic device.

21. The method according to any one of claims 15 to 18, wherein before receiving, by the first electronic device through the first communication connection, the first control instruction and the vehicle information of the first vehicle that are sent by the second electronic device, the method further comprises:
displaying, by the first electronic device, a first user interface, wherein a first option is displayed in the first user interface;
receiving and responding to a second user operation for the first option, and sending a trusted connection establishment request to the second electronic device, wherein the trusted connection request indicates the second electronic device to establish a trusted connection to the first electronic device;
receiving, by the first electronic device, a trusted connection establishment confirmation message sent by the second electronic device, wherein the trusted connection establishment confirmation message is sent by the second electronic device after the second electronic device receives an operation of confirming establishment of the trusted connection of the user; and
in response to the trusted connection establishment confirmation message, establishing, by the first electronic device, the trusted connection to the first electronic device and the second electronic device.

22. The method according to any one of claims 15 to 21, wherein after sending, by the first electronic device, the first control instruction to the first vehicle through the second communication connection, the method further comprises:
receiving, by the first electronic device through the second communication connection, a first message sent by the first vehicle, wherein the first message is sent after the first vehicle executes the first control instruction; and
sending, by the first electronic device, the first message to the second electronic device through the first communication connection, wherein the first message is used by the second electronic device to display third prompt information, and the third prompt information is used to inform the user that the second electronic device has controlled, by using the first electronic device, the first vehicle to perform the first operation.

23. The method according to claim 16 or 17, wherein the method further comprises:
when the second digital vehicle key stored in the first electronic device fails to be determined based on the vehicle information of the first vehicle, and/or when the key type of the first digital vehicle key is different from the key type of the second digital vehicle key, sending a second message to the second electronic device through the first communication connection, wherein the second message is used by the second electronic device to display fourth prompt information, and the fourth prompt information is used to inform the user that the first electronic device cannot currently control the first vehicle to perform the first operation.

24. The method according to any one of claims 15 to 23, wherein the key information of the first digital vehicle key comprises any one or more of the following: key type and key identifier; and
the vehicle information of the first vehicle comprises any one or more of the following: vehicle identification number, vehicle model, vehicle manufacturer, vehicle production date, vehicle engine model, and vehicle license plate number.

25. The method according to any one of claims 15 to 24, wherein the first communication connection comprises any one of the following: Bluetooth connection, network connection, and server connection; and
the second communication connection comprises a Bluetooth connection.

26. The method according to any one of claims 15 to 25, wherein the first control instruction comprises any one of the following: unlocking the vehicle, locking the vehicle, opening a vehicle window, closing the vehicle window, turning on an air conditioner, turning off the air conditioner, opening a trunk, closing the trunk, starting playing music, and pausing playing music.

27. A vehicle control method, wherein the method comprises:
receiving and responding to, by a second electronic device, a first user operation, and sending, a first control instruction and vehicle information of a first vehicle to a first electronic device through a first communication connection, wherein the first control instruction instructs the first vehicle to perform a first operation, and the vehicle information of the first vehicle is used for sending the first control instruction to the first vehicle through a second communication connection between the first electronic device and the first vehicle after the first electronic device determines a second digital vehicle key of the first vehicle, wherein
the second electronic device stores a first digital vehicle key of the first vehicle.

28. The method according to claim 27, wherein after receiving and responding to, by the second electronic device, the first user operation, the method further comprises:
sending, by the second electronic device, key information of the first digital vehicle key of the first vehicle to the first electronic device, wherein the key information of the first digital vehicle key is used by the first electronic device to determine, with reference to key information of the second digital vehicle key, that a key type of the first digital vehicle key is the same as a key type of the second digital vehicle key.

29. The method according to claim 27 or 28, wherein a first user account is logged in to the first electronic device, a second user account is logged in to the first electronic device, and the first user account and the second user account are the same or are associated with each other.

30. The method according to claim 27 or 28, wherein before sending, by the second electronic device, the first control instruction and the vehicle information of the first vehicle to the first electronic device through the first communication connection, the method further comprises:
displaying, by the second electronic device, a QR code, wherein the QR code is used by the first electronic device to establish a trusted connection to the second electronic device after the first electronic device scans the QR code by using a camera of the first electronic device.

31. The method according to claim 27 or 28, wherein before sending, by the second electronic device, the first control instruction and the vehicle information of the first vehicle to the first electronic device through the first communication connection, the method further comprises:
receiving, by the second electronic device, a trusted connection establishment request sent by the first electronic device, wherein the trusted connection establishment request is sent after the first electronic device receives a second user operation;
displaying, by the second electronic device, first prompt information, wherein the first prompt information is used to prompt a user whether to establish a trusted connection to the first electronic device; and
receiving, by the second electronic device, an input operation of the user for a second option in the first prompt information, sending a trusted connection establishment confirmation message to the first electronic device, and establishing the trusted connection to the first electronic device.

32. The method according to any one of claims 27 to 31, wherein after sending, by the second electronic device, the first control instruction and the vehicle information of the first vehicle to the first electronic device through the first communication connection, the method further comprises:
receiving, by the second electronic device through the first communication connection, a first message sent by the first electronic device, wherein the first message is sent to the first electronic device through the second communication connection after the first vehicle executes the first control instruction; and
displaying, by the second electronic device, third prompt information in response to the first message, wherein the third prompt information is used to inform the user that the second electronic device has controlled, by using the first electronic device, the first vehicle to perform the first operation.

33. The method according to claim 28, wherein the method further comprises:
receiving, by the second electronic device through the first communication connection, a second message sent by the first electronic device, wherein the second message is sent when the first electronic device does not determine, based on the vehicle information of the first vehicle, the second digital vehicle key stored in the first electronic device, and/or when the key type of the first digital vehicle key is different from the key type of the second digital vehicle key; and
displaying fourth prompt information in response to the second message, wherein the fourth prompt information is used to inform the user that the first electronic device cannot currently control the first vehicle to perform the first operation.

34. The method according to any one of claims 27 to 33, wherein the key information of the first digital vehicle key comprises any one or more of the following: key type and key identifier; and
the vehicle information of the first vehicle comprises any one or more of the following: vehicle identification number, vehicle model, vehicle manufacturer, vehicle production date, vehicle engine model, and vehicle license plate number.

35. The method according to any one of claims 27 to 34, wherein the first communication connection comprises any one of the following: Bluetooth connection, network connection, and server connection; and
the second communication connection comprises a Bluetooth connection.

36. The method according to any one of claims 27 to 35, wherein the first control instruction comprises any one of the following: unlocking the vehicle, locking the vehicle, opening a vehicle window, closing the vehicle window, turning on an air conditioner, turning off the air conditioner, opening a trunk, closing the trunk, starting playing music, and pausing playing music.

37. An electronic device, wherein the electronic device is a first electronic device, the first electronic device comprises a processor and a memory, the memory is coupled to the processor, the memory is configured to store computer program code, the computer program code comprises computer instructions, and the processor invokes the computer instructions to perform the method according to any one of claims 15 to 26.

38. A computer-readable storage medium, configured to store computer instructions, wherein when the computer instructions are run on a first electronic device, the first electronic device is enabled to perform the method according to any one of claims 15 to 26.

39. A computer program product, wherein when the computer program product runs on a first electronic device, the first electronic device is enabled to perform the method according to any one of claims 15 to 26.
